# EUROPEAN PATENT SPECIFICATION

(11) **EP 3 557 892 B1**
(45) Date of publication and mention of the grant of the patent: **24.03.2021**
(21) Application number: 18168525.6
(22) Date of filing: 20.04.2018
(51) Int. Cl.: H04W 4/24, H04M 15/00, G06F 9/50

(54) **METHOD AND SYSTEM FOR SCHEDULING OF USAGE DEMANDS WITH USAGE PERIOD SPECIFIC SCHEDULING BEHAVIOR**
VERFAHREN UND SYSTEM ZUR ZEITPLANUNG VON NUTZUNGSNACHFRAGEN MIT NUTZUNGSPERIODENSPEZIFISCHEM ZEITPLANUNGSVERHALTEN
PROCÉDÉ ET SYSTÈME DE PLANIFICATION DE DEMANDES D'UTILISATION AVEC UN COMPORTEMENT DE PROGRAMMATION SPÉCIFIQUE DE PÉRIODE D'UTILISATION

(43) Date of publication of application: 23.10.2019
(73) Proprietor: Deutsche Telekom AG, 53113 Bonn (DE)
(72) Inventor: REITH, Lothar, 60596 Frankfurt/M. (DE)
(74) Representative: Vossius & Partner Patentanwälte Rechtsanwälte mbB

(56) References cited:
- US-A1- 2009 178 050
- US-A1- 2016 353 268

## Description

The present invention relates to a method and a system for coordinated scheduling of usage demands by using a usage period specific scheduling controlled by multiple scheduling counter mechanisms. The method and system provide the advantage that the usage period change can be implemented in hardware in a single clock cycle or in a single software command. The invention supports Time of Day Accounting by using multiple scheduling counter mechanisms with only one of them being currently active during a usage period, where a single queuing mechanism is shared across usage periods. The invention supports switching between different queueing mechanisms at a usage period change while the scheduler continues operation. The invention can be scaled to support very small usage periods such as 100 milliseconds that may even be shorter than the maximum queueing delay of the scheduler, and it can be scaled to high performance such as millions of scheduling events per second performed on a single hardware chip. The signalling for changing and evaluating usage periods can be simplified compared to current state of the art, in particular a usage period change can be triggered by an internal event in the scheduler, without requiring the signalling of a trigger. The present invention can be applied not only at the subscriber level, but also on the resource level. It can be applied at the wholesale level, such as at the 5G network slice instance level or at a 5G DNN (data network name) level (or a combination of both), and also at an APN level in pre-5G networks According to the invention the scheduler implements a usage period change mechanism. Upon completion of the usage period change the scheduler determines per resource usage unit type a consumed amount of resource usage units of the resource usage unit type that the scheduler has consumed for demand satisfaction during the usage period that has ended. Due to the described efficient implementation of the usage period change in hardware or in software it does not make a difference to the determined consumed amount if that consumed amount is determined at the point in time when the usage period change starts or at the point in time when the usage period change ends.

### Description of current state of the art

Schedulers are widely used in many technical fields including but not limited to the field of telecommunications and computing for the allocation of resources to usage demands in a minimum of one dimension comprising as a minimum the time dimension. Schedulers in specific technical fields also comprise a space dimension. For instance, a radio spectrum resource scheduling may comprise both a space and a frequency dimension in addition to the time dimension, e.g. considering multiple antennas arranged for massive MIMO (Multiple Input Multiple Output). Schedulers using the well-known Token Bucket algorithm are used widely in the technical field of telecommunication and computer industry for limiting the amount of usage during a sliding time window. Modern queue based schedulers typically schedule usage demands using either FIFO-queue (First In-First Out) based scheduling, or strict priority queueing or weighted fair queueing (WFQ) based on a priority queue.. Moreover, usage periods with differentiated charges per usage item - also known as charging periods or as time of day accounting - have been used in the field of telecommunications networks to provide differentiated pricing per usage period with the aim to increase average utilization of resources by incentivizing the move of usage to off-peak hours.

Current technology does not support the simultaneous change of scheduling behaviour and charging rate in a scalable way and particularly not simultaneously for a large number of users, e.g. at a network slice level or wholesale level because it requires extensive signalling. For instance in a mobile network, such a change would require per subscriber signalling between the PCRF and the PCEF. Thus, at a large scale where scheduling of millions of demands per seconds (such as packets on a router interface) and short duration charging periods (such as in the range of minutes, seconds or even milliseconds) are required, signalling is too time consuming and complex. Current 3GPP (3rd Generation Partnership Project) standardization drafts for network slicing do not incorporate any policy and charging control mechanisms at the slice instance level, only the legacy PCC (Policy and Charging Control) which operate at the subscriber level. Time of day accounting at the subscriber level was state of the art for narrowband Internet access, but has not been used for broadband and rarely been used for mobile access. Time of day accounting at the resource level (e.g. per cell-ID or per antenna resources in MIMO) is not known in mobile networks, and also not in fixed broadband networks, particularly not at wholesale level.

US 2009/0178050 A1 discloses a control of access to services and/or resources of data processing system. In order to control access to resources of a data processing system, a priority code is determined for an access request to at least one resource.

### Disadvantages of current state of the art

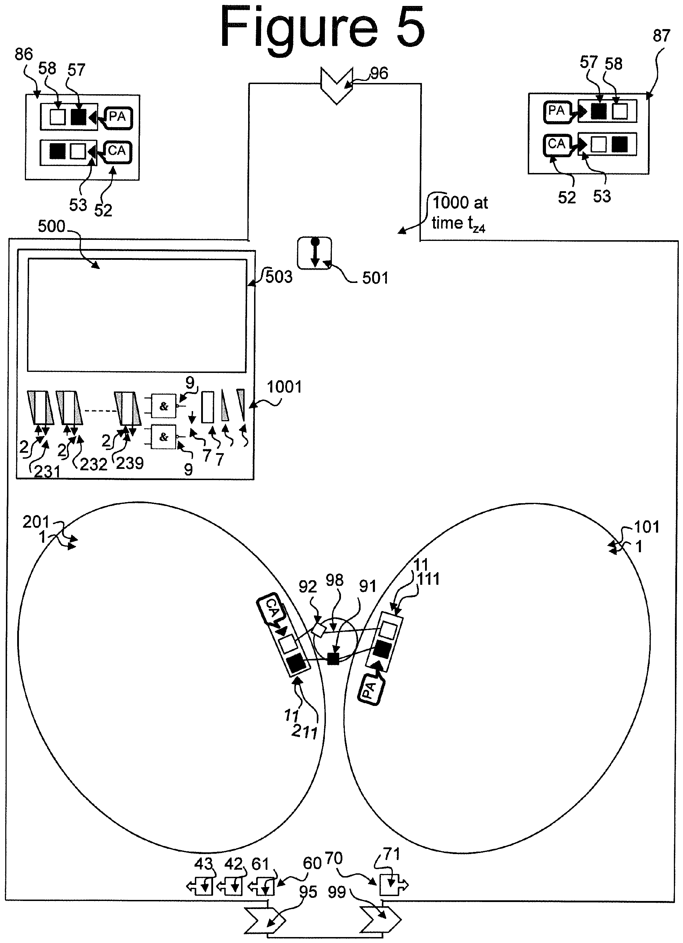

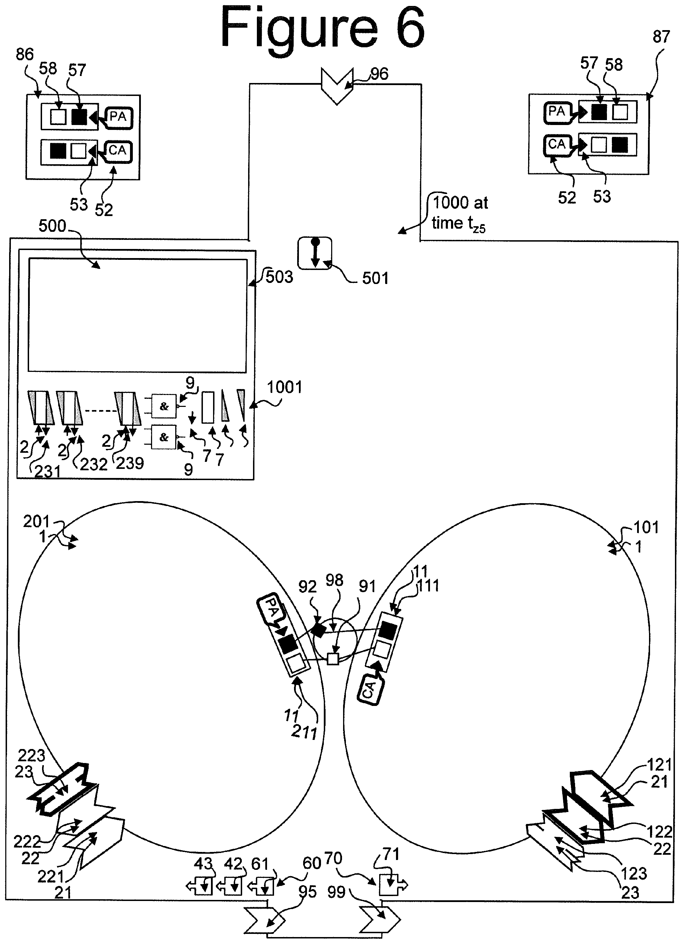

The current state of the art may be well understood when studying the System Architecture for the 5G System, which has been released on December 21, 2017 as 3GPP TS 23.501 V15.0.0 (2017-12) (Release 15). Frank Mademann, 3GPP SA2 Chairman also on Dec 21, 2017 published a summary overview with title: "System architecture milestone of 5G Phase 1 is achieved", wherein an example for network slicing has been shown in a diagram and the following text: "...an example of a PLMN deploying four network slices. Each includes all what is necessary to form a complete PLMN. The two network slices for smart phones demonstrate that an operator may deploy multiple network slices with exactly the same system features, capabilities and services, but dedicated to different business segments and therefore each possibly providing different capacity for number of UEs and data traffic." While the document 3GPP TS 23.501 V15.0.0 (2017-12) (Release 15) describes in Figure 5.7.1.5-1 the "principle for classification and User Plane marking for QoS Flows and mapping to AN Resources" it does not explain any additional way how the owner of the network may enforce on a per slice instance basis the "different capacity for number of UEs and data traffic" - except for the traditional ways of using Session-AMBR and UE-AMBR, and it does not show how the following requirement can be met, which has been formulated in the NGNM (Next Generation Mobile Networks) 5G White paper, namely for a "capacity brokering architecture, where network resources are provided dynamically depending upon bids offered". The document does describe how time of day accounting can be implemented in the 5G System, even though this is also a stated requirement. In the ICT industry, which is dealing with the technical field of Information and Communication Technology, scheduling is ubiquitously used for controlling the access to ICT resources such as compute, storage and networking resources. However in the whole technical field of ICT there is no scheduling method known that allows to charge for differentiated quality of scheduling. Even if a charged party such as a wholesale service provider, an MVNO or business customer using a 5G network slice instance would be prepared to pay extra for scheduling with preferential treatment during a predefined period of time, today's technology does not provide a scalable solution, neither in the telecoms industry nor in the computer industry, not anywhere in the field of ICT. Even the time of day solution formerly used in telephone networks is not used in fixed broadband networks or mobile networks, because of scalability issues associated with fact that the counting occurs on a per subscriber access session basis. The current state of the art does not allow to count on a resource basis (e.g. per cell-ID in a mobile network). It also does not allow usage period specific scheduling behaviors that give preferential treatment to a usage demand which is charged a higher price. The reason for this are flexibility and scalability limitations in the implementation of the associated tariff change which must occur at the associated charging period change with simultaneous change of the scheduling priority policy and the applicable charging rate. In particular, a change of the scheduling priority policy must be applied to all demands already queued in a priority queue into which any queuing mechanism can be transformed, leading to a requirement to perform a re-sorting of the existing priority queue. The presently known techniques for changing priority and re-sorting are complex and require complex signaling which is not feasible in real-time in a scalable way when considering e.g. the high throughput requirements of network switch interfaces as an example, with 100 Gigabit/s as current state of the art and even higher such as 400 Gigabit/s and one Terabit/second coming soon. There are no standards or solutions for slice instance specific or wholesale customer specific policy and charging control, such as based on an APN (Access Point Name) or a DNN (Data Network Name as the 5G equivalent of an APN) that allows to easily charge based on bids offered in a scalable way. In particular, the known techniques with complex signaling are not effective for bids where the bid success rank impacts the scheduling priority that UEs (User Equipments) assigned to a network slice instance experience during an attachment session or users of a wholesale service provider or MVNO (mobile virtual network operator) experience.

There is therefore a need for a system and method for scheduling usage demands which is preferably easy to implement, fast and less complex than the known scheduling methods. The new system/method for scheduling should preferably need less complex signaling or ideally no signaling for implementing the required usage period change event that must occur between two usage periods with different scheduling behavior. The preferred method should preferably be scalable to ensure that the method can be used even in the fast growing and converging fields of telecommunications and computing.

Another shortcoming of the current state of the art as documented in the 5G system architecture is that while 5G can be viewed as a network designed for latency, the 5G system architecture does not describe any standardized way how scheduling in a 5G system can be influenced to provide preferential treatment that results in lower latency.

Another shortcoming of the current state of the art is that it does not allow to change the configuration of the scheduler while the scheduler is scheduling, in particular not regarding changes that affect the queuing mechanism used for scheduling, such as changing a scheduler to change it's scheduling method from strict priority queuing to weighted fair queuing - on the fly while continuing to schedule demands with interruption of the scheduling service.

Another shortcoming of current state of the art is that it does not offer a scalable solution that can be used to offer scheduling with time of day accounting at the wholesale level, where a different charge is applied at the wholesale level to a resource usage unit consumed during scheduling by an end customer of the wholesale service provider - except for solutions with per subscriber signaling. For example, there is no solution available which creates an aggregate usage data record on a per APN basis, and the 5G system architecture does not specifiy any solution that supports the creation of a usage data record on a per DNN basis or on a per S-NSSAI basis, or on the basis of the combination of an S-NSSAI and a DNN, which would scale much better than creating time of day accounting usage data records on a per subscriber basis for wholesale level charging.

Another shortcoming of current technology is the lack of an API (Application programming interface) that allows to specify with a single API the counting mechanism to be used during scheduling, and the charging mechanism to be used during scheduling, such as whether online-charging or offline charging procedures shall be used. It is also not possible to use different charging procedures during different usage periods. Current technology allows to use either time of day accounting (using off-line charging procedures) or time of day online-charging procedures, but does not allow to switch between them at a usage period change.

Another shortcoming of the current technology is the lack of a method that allows to enhance the 5G QoS handling procedures in such a way that it allows preferential treatment within a QoS-Flow in such a way that the data packets of a QoS Flow that are waiting in a buffer for transmission can get re-prioritized and effectively re-sorted at a usage period change, giving preferential treatment to a first buffered data packet belonging to a first QoS-Flow over a second buffered data packet belonging to the same first QoS Flow if and only if a usage period change occurs between the arrival times and demand satisfaction times of these two data packet, whereby the reason for the preferential treatment of the scheduler may be a different priority rank derived from a different numerical value provided by a first party associated with the first data packet and a second party associated with the second data packet, where this first party and this second party may be identified from a context field of the QoS Flow, such as in a 5G system the S-NSSAI, the DNN or the combination of S-NSSAI und DNN used at the time of creation of the PDU session to which the QoS-Flow belongs, or in a pre-5G system the APN used for setting up the PDP context to which the QoS Flow belongs.

Another shortcoming of the current technology is that the 5G system architecture document states that "The QoS Flow is the finest granularity of QoS differentiation in the PDU Session", but does not describe how a scheduler in an Access Node (such as a fixed access node or a radio access node) shall prioritize between two different QoS-Flows of different PDU sessions belonging to different network slices and/or to different DNNs or to different APN. In particular, it does not specify how a wholesale customer can get preferential treatment during scheduling, when both QoS Flows use the same QCI. It is currently not possible to limit the capacity used by the customers of one wholesale service provider on a per cell basis (e.g. not more than 20% of cell capacity to be used at any one time for one wholesale service provider in line with a contractual agreement that defines such capacity limitations. Also not possible are time of day specific capacity limitations, for example the limitation could be lifted from 20% to 100% during pre-defined off-peak hours defined in the contract of the network operator with the wholesale service provider, combined with a lower charges during off-peak hours that incentivize the wholesale service provider to offer residential end user tariffs or business customer tariffs which incentivize moving traffic to off-peak hours, and which save cost to the network operator, because network capacity expansion investments can be reduced or postponed.

The invention is defined by the features of independent method claim 1. Further preferred embodiments of the invention are defined in the dependent claims. A system for scheduling resource demands is also being claimed.

### Advantages of the invention over the current state of the art

The system and method of the present invention enables new ways to schedule the usage of infrastructure resources, in particular digital infrastructure resources including networks, telecommunications networks, transport link resources, radio resources, compute resources with associated local memory resources, and storage resources. With future 5G networks the digital infrastructure provided by a digital infrastructure provider will also include application hosting infrastructure and allow scheduling of usage demands demanding a low latency service. The invention overcomes the shortcomings of current state of the art that have been described in the previous chapter. The system and method of the present invention could be interpreted as an enabler for a capacity controlling or brokering architecture, where digital infrastructure resources are provided dynamically depending upon potential/request or bids offered. It can also be used for an efficient implementation of time of day accounting based on a tariff plan that is differentiated by time of day and/or day of week. The invention even allows to switch during scheduler operation between different queueing mechanisms used for scheduling, such as between weighted fair queueing and strict priority queueing. It is also possible during operation to shorten the minimum length of a usage period by upscaling the scheduler whereby increasing he degree of parallelity of parallel queueing systems used for enqueueing newly arriving demands.

### Description how the invention works

The present invention is described in the following in further detail. The invention is a scheduler comprising a resource pool with scheduling resources such as memory resources, compute resources and networking resources which can be real hardware resources or can be virtualized resources for compute, storage and networking. The resource pool can be used to dynamically create, modify and delete scheduling resources such as queues that are part of a queueing mechanism used for scheduling, buffer where demands are stored that at a present point in time have a demand arrival completion time in the past and a demand satisfaction start time in the future, pointer to a buffer location that enqueued to a queueing mechanism at demand arrival time and dequeued from a queueing mechanism at demand satisfaction start time, and counter mechanisms that count the amount of resource usage units that get allocated and consumed for demand satisfaction, and preferably also components of a usage period change mechanism and of a revolving role detection function that can be used to scale up a usage period change mechanism and associated revolving role detection functions when adding a partition, or can be returned to the resource pool when scaling down the number of partitions. The scheduler further comprises a usage period change mechanism and multiple scheduling partitions comprising a revolving role detection function that preferably is connected with the usage period change mechanism, and which allows each scheduling partition and preferably all entities associated with the scheduling partition to detect the current role of the scheduling partition. The scheduler preferably starts with a start configuration comprising two scheduling partitions, but can be configured to start with more scheduling partitions. The amount of scheduling partitions of the scheduler can be increased or reduced while the scheduler is operating. At any one time only one of the scheduler partitions is the currently-active partition, and only one of the partitions is the previously-active partition. The previously active partition does not participate in the current scheduler operation that deal with demand satisfaction of already arrived demands and handling newly arriving demands. The scheduler preferably handles all modifications and re-configurations to the scheduler by modifying the previously-active partition. At times when the scheduler is configured to comprise only two scheduling partitions, the revolving role detection function comprised in each partition can only detect one of the two roles "Currently-Active" (CA) or "Previously-Active" (PA). Each time a usage period change occurs these roles will revolve around a ring structure comprising only two ring elements, preferably in clockwise direction. With only two partitions, a usage period change effectively swaps the roles of the two partitions. As shown in a first preferred embodiment, a scheduler with only two partitions can be used for a very efficient implementation of time of day accounting, where each partition comprises one counter mechanism that counts all resource usage units consumed for demand satisfaction during a usage period, and both partitions are associated with the same queueing mechanism and where the scheduler preferably comprises an external export interface that preferably is used to export usage data records which contain per usage period the amount of consumed resource usage units of the resource that is scheduled by the scheduler and where the amount of consumed resource usage units allocated for demand satisfaction is counted at the time of demand satisfaction in the minimum of one counter associated with the currently-active partition. The counter mechanism preferably is a programmable counter mechanism. The scheduler can be programmed preferably via a scheduling configuration interface such as an API (Application Programming Interface). Preferably the scheduling configuration interface does not affect changes to the currently-active partition, or any other partition dealing with scheduler operation handling demand arrival and demand satisfaction. It preferably also does not affect changes to the previously-active partition during times where usage data are processed as usage data records for offline-charging and/or creation of performance data and/or statistic data, or during times where usage data are processed for online-charging purposes such as for quota handling including quota reservation and devaluation. These usage data related operations at the previously-active partition are preferably handled at the beginning of a usage period. Once these usage data related operations regarding the usage period that has just ended are completed the previously-active partition is ready for applying a scheduling configuration specification received prior to the usage period change via the scheduling configuration interface of the scheduler. The scheduling configuration preferably occurs while the scheduler is scheduling, including scheduling configurations that increase or decrease the number of partitions, or that change the association of a queueing mechanism to a partition, or that delete, change or add the association of a counter mechanism to a partition. When the scheduler is scaled up regarding the number of partitions by adding one partition, this partition is always added as having the role "next-active" and is always added as the last next-active partition, which means that any other scheduling partition that already has the role "Next-Active" will change it's role to "Currently-Active" prior to the partition which has been added last to the scheduler by a scheduler reconfiguration that increased the number of partitions (upscaling). Preferably, the scheduler can be upscaled without any predefined hard limit regarding the maximum number of partitions. Preferably the only limited shall be the amount of resources in the resource pool of the scheduler. Depending on application and implementation, a fixed number of partitions may be preferred, or a limited scalability that limits the amount of partitions to which a scheduler can be upscaled during operation. A key benefit of a scheduler with a minimum of three partitions is that it can continue scheduling operations without loosing any buffered demands at the time of a usage period change, because arriving demands are enqueued not only to the queueing mechanism associated with the currently-active partition, but also to all next-active partitions. There can be more than one next-active partitions, in fact all other partitions except the currently-active partition and the previously-active partition are a next-active partition. The benefit of scaling up a scheduler to more than 3 partitions is that the minimal duration of a usage period can be reduced by upscaling the scheduler. Upscaling is increasing the number of partitions of the scheduler. Any partition added to the scheduler for upscaling is added as a next-active partition - preferably in a position as anti-clockwise direct neighbor of the previously-active partition when the logical ring structure is oriented in clockwise direction. Alternatively the logical ring structure may be oriented in anti-clockwise direction in which case a new partition is preferably added as clockwise direct neighbor of the previously-active partition. This arrangement of the partitions in a logical ring structure is based on the usage period change mechanism preferably being arranged as logical ring structure, and the fact that each partition is connected to the usage period change mechanism resulting in the roles being detected by the revolving role detection function comprised in the partition revolving in opposite clockwise direction than the clockwise orientation of the logical ring structure preferably comprised in the usage period change mechanism. It should be noted that there are no moving parts, only moving roles where the move is effected by the change of a single variable that makes all roles change simultaneously. This change of a single variable preferably is a change of a single variable in the usage period change mechanism, and this change of a single variable is preferably done in a single hardware clock cycle, or less preferred through the execution of a single software command. A key feature and enabler of the scheduler is the ability of the scheduler to create, modify, and delete counter mechanisms and to associate a counter mechanism with a partition for the duration of one revolving role cycle. A revolving role cycle is equal to the amount of partitions with which a scheduler currently operates. It increases when upscaling the number of partitions and decreases when downscaling the number of partitions. The association of a queueing mechanism to a partition or the association of a counter mechanism to a partition preferably only occurs to a partition while the partition is detecting the role "previously-active" (PA). A partition detecting the role "Previously-Active" is referred to as previously-active partition or in an abbreviated way as PA-partition. The fact that the association of a counter mechanism or of a queueing mechanism to a partition preferably lasts for one cycle is derived from the fact that the change of an association is preferably done only at a PA-partition, because otherwise the scheduling operation may be impacted.

For understanding how the invention works it is fundamental to understand the major contribution of the counter mechanism, which is used not only for counting the amount of resource usage units consumed during demand satisfaction, but at the same time also for the scheduling control of which demand gets satisfied in which sequence. The counter mechanisms used in the invention are programmable counter mechanisms used for the purpose of scheduling control and charging. A scheduling counter mechanism is a counter mechanism comprised in a scheduler that counts the amount of resource usage units allocated and consumed for demand satisfaction of scheduling demands that are resource usage demands demanding the allocation of a defined amount of resource usage units of a defined resource usage unit type for demand satisfaction. Any counter is a counter mechanism, such as any counter used for online charging or offline charging, such as the counters used for the creation of accounting records, or the counters used for the decrementation of a quota received during the execution of an online-charging procedure. A key inventive step of the present invention is the use of a counter mechanism for the purpose of scheduling. This innovative counter mechanism is referred to as a scheduling counter mechanism. A scheduling counter mechanism (SCM) is a counter mechanism that can be programmed, preferably by an API (Application Programming Interface) that supports CRUD operations (Create, Read, Update, Delete) which allow to create an association that associates an attribute value pair to the counter mechanism, which allow to read one or multiple or all of the currently existing associations that associate an attribute value pair to the counter mechanism, to update the value of a currently associate attribute value pair, and to delete an association that associates an attribute value pair to the counter mechanism. The scheduling counter mechanism used in the invention preferably includes attribute value pairs that define the following properties of the scheduling counter mechanism:
- A public identity attribute "SCM-public-identity" of the counter mechanism that identitifies the counter mechanism, which preferably can also be used as a function call parameter in a function call preferably of the form COUNT(SCM-public-identity, Crementation-amount) to identify the scheduling counter mechanism that shall be cremented by an amount defined in the function call parameter "Crementation-amount".
- An identity attribute "Scheduler-identity" identifying the scheduler comprising the SCM.
- Scheduler local identity of the scheduling partition to which the SCM is currently associated.
- An attribute defining the type of the counter mechanism, such as integer64.
- An attribute defining the capacity of the counter mechanism, including the threshold where an incrementing counter would overrun or a decrementing counter would underrun.
- A Boolean attribute defining if a counter performs an overrun/underrun or not. In case of FALSE, the COUNT() function call shall return a value FALSE and not have counted anything, in case of TRUE the COUNT() function call shall return TRUE and shall have created an interim usage data record to capture the fact that an underrun or overrun has occurred.
- A boolean value identifying the crementation direction of the SCM, i.e. whether the SCM is an incrementing counter mechanism or a decrementing counter mechanism.
- An Boolean value identifying whether or not the counter mechanism works with prior reservation and later confirmation
- A Boolean value identifying whether or not the counter mechanism requires an explicit confirmation or whether an auto-confirm mode applies where a previous counting reservation gets automatically confirmed by a subsequent counting request for the same counting mechanism , and where an auto-confirmation also applies after a usage period change that has changed the role of the partition to which the counting mechanism is associated from currently-active to previously-active.
- A Boolean value identifying whether or not a usage data record shall be created for a usage period during which no usage has occurred
- An identifier that identifies the communication partner for the charging procedures (online charging or offline charging) and related parameters.

To understand how the invention works we now look at the procedures that the scheduler preferably typically performs at different points in time during the lifecycle of a scheduler according to the present invention, and also at the considerations that the resource owner of the resource that shall get scheduled by the scheduler at different stages of the lifecycle.

### Scheduler Lifecycle stage 1: Architecture Design Time

The resource owner shall consider the flexibility of the resource scheduling architecture including the charging architecture for resource usage charging under the following aspects:
- Does the architecture need to support Time of Day accounting?
- Does the architecture need to support a"capacity brokering architecture, where network resources are provided dynamically depending upon bids offered
- If the answer to any of the above two questions is yes - consider the use of a scheduler according to the invention, and the also the below considerations:
- What is the smallest Usage period that must be supported?
- Do I need a scheduler with dynamic upscaling /downscaling allowing to reduce the smallest usage period through upscaling?
- Which flexibility is needed regarding the design of products? - see below

### Scheduler Lifecycle stage 2: Product Design time

The resource owner shall consider first the product design for wholesale products
- Do I need Time of Day Accounting - and if yes using which usage period timetables?
- Do I need dynamically determined usage period change times or are predefined usage period change times sufficient, which can be published like a timetable?
- Do I need to offer a capacity brokering solution to wholesale service providers, where bids offered by a wholesale charged party influence the scheduling of demands associated with the wholesale charged party?
   ∘ An example of such influence is an influence to the scheduling priority based on a bid success rank derived from ranking the numerical value of the bids offered, combined with charging the numerical value for each consumed resource usage unit during the usage period for which the bid was valid. This could be marketed as "bidding for a priority upgrade"
   ∘ Another example of such influence is an influence to the scheduling priority based on deriving the weights of a weighted fair queueing algorithm from the relative weight of bids offered (bid-relative-weight), where the bid-relative-weight is determined as relation of the bid offered to the sum of all bids offered. This could be marketed as "bidding for a capacity upgrade"
   o Another example of such influence is an influence to the queue management thresholds - such as making taildrop thresholds dependent on bids offered, whereby a higher bid would result in a larger taildrop threshold, where a taildrop would lead to the demand being dropped due to congestion, therefore demands associated with a higher bid would be less likely to be dropped during periods of congestion. This could be marketed as "bidding for a reliability upgrade in case of congestion". This could even be topped by offering that demands from parties with the highest bid success rank will not be taildropped at all, rather they will be re-routed over an alternate path or use an alternate resource - as an exclusive offer that could be marketed as bidding for a "super reliability upgrade".
   ∘ Another example of such influence is an influence to the queue management thresholds - such as making taildrop thresholds dependent on bids offered, whereby a higher bid would result in a larger taildrop threshold, where a taildrop would lead to the demand being dropped due to congestion, therefore demands associated with a higher bid would be less likely to be dropped during periods of congestion. This could be marketed as "bidding for a reliability upgrade in case of congestion"
   ∘ Another example of such influence is an influence to control multi-resource scheduling, where a demand can be satisfied by multiple resources which have differentiated latency. The resource with the low latency could be granted with strict priority according to the bid success rank, with a taildrop mechanism that does not drop the demand, rather moves it to the second resource which can also used to satisfy the demand, but with higher latency and with weighted fair queueing where the relative weights adding up to 100% are determined by the ratio of the bid offered by the party associated with the demand relative to the sum of all bids of all parties which have bid for the respective usage period.
   ∘ The operator is free to come up with additional innovative ideas...
- Do I need to offer real time charging for these innovative wholesale services, e.g. based on scheduling counter mechanisms with attribute value pairs defining the kind of online-charging procedures that apply.
- If yes, do I need to offer resource usage tickets that get devaluated in real time during usage, using an enhanced online charging procedure where not bytes are rated but tickets are rated, and where the network operator creates and issues the tickets, and where the amount of resource usage units consumed for the benefit of a wholesale charged party gets determined and multiplied by the value bid by the charged party to determine the amount of tickets that get devaluated by the previously-active partition of the scheduler using the usage data based charging procedure in an innovative new variant that may be referred to as ticket based online-charging procedure.
- Product design time is also the time when the need for upscaling or downscaling a scheduler may be identified, e.g if a scheduler used for time of day accounting without usage period specific scheduling policy implemented with a scheduler comprising 2 partitions (scheduler cycle period = 2) shall be upgraded to a product with usage period specific scheduling policies, for which a scheduler with minimum 3 partitions is required (scheduler cycle period = 3). The procedure for upscaling a scheduler from a scheduler cycle period n to a scheduler cycle period n+1 while the scheduler is continuously providing scheduling service is as follows: upscale the usage period change mechanism but leave the element added for upscale in disabled state. Upscale the revolving role detection functions, and connect to the upscaled usage period change mechanism. Create a new partition as a next-active partition and insert it as direct neighbor of the previously-active partition - if the ring structure in the usage period change mechanism is oriented in clockwise direction than insert as anticlockwise neighbor, otherwise as clockwise neighbor. As last step simultaneously enable the bit in the usage period change mechanism - which automatically also triggers a usage period change whereby the whole scheduler is simultaneously upscaled to n+1 partitions. Downscaling works the other way round, by first disabling the element in the usage period change mechanism that removes the last next-active partition. Then de-associate the queueing mehcanims and the counter mechanisms from the last next active partititon, and finally remove the last next-active partition and return all the rde-associated and removed resources to the resource pool comprised in the scheduler.

### Scheduler lifecycle stage 3: UP-specific scheduling policy & charging rate definition time

The resource owner shall consider for each product how the parameters shall be defined that define the UP-specific (usage period specific) scheduling policy and the charging rate. For time of day accounting, the resource owner is free to define this and to publish it as product specification.

For products where bids offered influence the scheduling policy the resource owner must decided and implement a continuous bid process, preferably with wholesale service providers as bidders, which also defines the UP-specific scheduling and charging rate import time, for example once daily or one weekly or always in the usage period preceding the validity usage period by a defined number of usage period changes.

### Scheduler lifecycle stage 4: Scheduler deployment and activation time

The scheduler may get deployed as software component of a system or as a micro-service. The activation involves the assignment of one or multiple resources to the scheduler, or of the scheduler to a resource controller. This assignment enables the scheduler to detect arriving demands on a minimum of one demand receiver interface and it enables the scheduler to detect unallocated resource units that arrive or become available in the time dimension. For example, a scheduler can deployed at an Access Node in a mobile network or in a fixed network. Or it can be deployed in a UPF (user plane function) of a 5G system.

### Scheduler lifecycle stage 5: UP-specific scheduling policy & charging rate import time

The resource owner shall consider for each product how the parameters shall be defined that define the UP-specific (usage period specific) scheduling policy and the charging rate. For time of day accounting, only one import time may be sufficient, just prior to the launch of the product. For products where the scheduling policy and the charging rate depend on the results of a bidding process, the bidding process defines how often such import times occur.

### Scheduler lifecycle stage 6: UP-specific scheduling policy & charging rate implementation time

The lifecycle stage 6 starts with the automatic implementation of a scheduling configuration specification by an instance of the internal export&import interface that is comprised in each partition, namely by the instance comprised in the previously-active partition - after it has completed the usage data based charging procedures. The scheduling configuration specification preferably includes attribute value pairs that define the scheduling behavior of a partition for the duration of one usage period cycle from previously active to previously-active, including the behavior for exporting usage data records once the partition will again be in the role previously-active. The scheduling configuration specification is applied only to previously active partition, but includes for each usage period comprised in the next usage period cycle a set of attribute value pairs which define the behavior of the partition in that usage period. This preferably includes attribute value pairs and an associated identifier of the usage period for which the attribute value pair is valid. Preferably includes attribute value pairs defining the following:
- The queueing mechanism to be associated with the partition currently being the previously-active partition, where the queueing mechanism will be associated to the partition at least for the duration of one usage period cycle, including the current usage period cycle starting with the point in time when the previously active partition has completed the usage data based charging procedures related to the previous usage period cycle.
- The scheduling counter mechanisms to be associated with the partition currently being the previously-active partition, including their associated attribute value pairs, where the scheduling counter mechanisms will be associated to the partition at least for the duration of one usage period cycle, including the current usage period cycle starting with the point in time when the previously active partition has completed the usage data based charging procedures related to the previous usage period cycle.

### Scheduler lifecycle stage 7: UP-specific scheduling policy & charging rate enforcement time

### Stage 7a): Demand arrival time procedure

The lifecycle stage 7 starts when the scheduler starts operation and detects the first demand arrival, preferably when the demand has completely arrived. The detection of a demand arrival triggers the following demand arrival time procedure:
Given a scheduler with currently n partitions: For each demand arrival and for each enqueue affected partition being each partition except the previously-active partition:
1. Determine the Length of the demand, preferably as the amount of resource usage units that shall be allocated and consumed during demand satisfaction, and store the length in a first predetermined position of the demand context field Store the demand in the buffer, preferably including a preceding fixed length demand context field
2. Determine the buffer space required to store the demand, preferably including an associated demand context field.
3. Determine the location in the buffer, preferably as the value of a next free buffer pointer
4. Determine the location in the buffer for storing the next arriving demand, preferably by using a semaphore based write-protection to prevent that the next free buffer pointer gets changed between the read and the over-write operation, and by reading the value of a "next free buffer pointer" into a first register and by over-writing the value of the next free buffer pointer with the newly determined value, and by releasing the semaphore based write protection.
5. Store the demand and preferably also a demand context field starting at the buffer location identified by the value of the first register which becomes the value of a pointer to the buffered demand.
6. Prepare the efficient operation of the scheduler using multiple queueing mechanisms, preferably by the demand context field comprising a first fixed length field for storing the amount of resource usage units required to satisfy the demand (also referred to as Length L) and an identifier for a counter mechanism that shall be used for counting the amount of resource usage units allocated and consumed during demand satisfaction. Preferably the demand context field shall also allow to store multiple arrays of Enqueue-Revocation parameters in a variable length extension of the demand context field to facilitate the efficient execution of upto n-2 demand pointer revocations preferably triggered at demand satisfaction time.
7. Determine the location in the buffer where to store the demand, preferably using the value of a first register as pointer to the next free buffer location.
8. Store the demand in the buffer, preferably including a preceding fixed length demand context field
9. Determine the demand associated scheduling counter mechanism that shall be used at demand satisfaction time for counting the resource usage units consumed for demand satisfaction, preferably the demand associated scheduling counter mechanism can be determined by determining the first matching mapping rule in an ordered list of mapping rules that is comprised in each scheduling configuration specification, whereby each mapping rule comprises exactly one scheduling counter mechanism as result of the mapping specified in the mapping rule, and store an ID of the scheduling counter mechanism preferably in a second predetermined position of the fixed length demand context field, preferably an ID that gets resolved at runtime into a pointer to an address of the scheduling counter mechanism in case of a software based implementation of the scheduler, and preferably in a memory field of an FPGA based portion of a hardware based implementation of the scheduler
10. Protect against failure of the scheduler, preferably implementing a mechanism that in case of absence or non-availability of a mapping rule defines a default mapping rule preferably a Default mapping rule that maps ANY demand to a single counter mechanism and any usage period to a simple FIFO (First In - First Out) Queueing mechanism associated with all partitions of the scheduler, and without any input parameters that influence the scheduling behavior. Preferably such a simple Default mapping rule is configured for the implementation of Time of Day accounting. Preferably, all possible demand types that may arrive during a usage period must have an associated mapping to a scheduling counter mechanism that is used to count the resource usage units consumed for the demand satisfaction of the demand. This completeness of the mapping is preferably achieved by including as last mapping rule a so called Default mapping rule, being a rule that maps ANY other demand not covered by a previous mapping rule. For demands that are data packets arriving at a scheduler comprised in a 5G system described by the 5G system architecture document 3GPP TS 23.501 V15.0.0 (2017-12) (Release 15), more complicated scheduling counter mapping rules may apply, such as described in chapter 5.7 of the 5G system architecture, which defines the 5G QoS model. A potential application of the invention at the subscriber level could involve the mapping of demands being arriving data packets to UE-specific counter mechanisms implementing the UE-AMBR. This would allow offering services with a Usage period specific UE-AMBR (Aggregate Maximum Bitrate). The invention offers not only resource independant subscriber level counting and subscriber session level counting, but also resource dependent wholesale charged party level counting. For wholesale charged party level counting the mapping rules must have at least the granularity to count ANY traffic associated with a charged party, where the charged party may be identified by an APN in 4G Systems, or by a S-NSSAI or a DNN, or the combination of an S-NSSAI and a DNN in a 5G system. The scheduling counter mechanism mapping rules are used to define the product. It should be noted that the invention allows resource specific upgrade charging at the wholesale charged party level. For example, schedulers according to the invention could be deployed in all Radio Access nodes providing service to the stadium where the NHL final takes place, inviting bids for a usage period being the day of the final, where the bids determine a bid success rank and the bid success rank determines the priority with which buffered downstream demands will be served by the radio access node, or parallel arriving upstream demands competing for access to the radio resource in the stadium area.- assumed to be a scarce and highly demanded resource on the day of the final taking place. Depending on the queueing mechanism associated with the active partition in the scheduler deployed in the Radio Access Nodes providing coverage for the stadium during the Usage Period that includes the time of the final, different scheduling strategies and bidding strategies may apply. For example strict queueing may not be acceptable as users associated with a charged party belonging to the low bidders may not receive any service. A weighted fair queuing algorithm may be more approporiate where the relative weights get determined by the relation of each bid relative to the sum of all bids. A single counter mechanism mapping rule that maps all traffic associated with a charged party to a charged party associated counter mechanism would be sufficient, if the wholesale charged party level offer does not differentiate between the different QoS-Flows. This means that the same weighted fair queueing algorithm with the same weights apply for all QoS-Flows. This determines the quality of service that customers associated with a charged party receive when visiting the stadium for the NHL final, but the upgrade price is not differentiated per traffic class (QoS-Flow). For each packet that receives a scheduling treatment upgrade the same upgrade price applies, If the scheduling upgrade shall be offered separately for e.g. delay insensitive traffic classes and delay sensitive traffic classes, two counter mechanism are required per bidder being the wholesale charged party.
11. Determine the demand associated queueing system preferably from a usage period to queueing system mapping rule comprised in each of n-1 scheduling configuration specifications, each scheduling configuration specification having a different validity usage period during which the scheduling configuration is valid, where preferably the validity of a first scheduling configuration specification is the current usage period and where the validity of a second scheduling configuration specification also referred to as first next scheduling configuration specification is the first in a sequence of m next usage periods and where an mth -next scheduling configuration specification is the mth -next in a sequence of n-2 usage periods, and where the mth -next scheduling configuration specification is implemented preferably on a partition that is associated with an element of a logical ring structure comprised in the usage period change mechanism and is the clockwise direct neighbor of the partition with the implementation of the (m-1) th next scheduling configuration - with 1<m<n and n being the current cycle number of the scheduler which also defines the current number of partitions comprised in the scheduler.
12. Determine the demand associated enqueue-parameter-list containing the parameters provided to the queueing system during the enqueuer operation as input parameters or as signal, preferably presented as parameters of an enqueue() function call in case of a software implementation of the scheduler 1000, and preferably presented as output signals of multiple sets of connected NAND-Gates in case of an FPGA based hardware implementation of the scheduler, where the demand associated enqueue-parameter-list gets determined from a usage period to Enqueue-parameter list mapping comprised in each of n-1 scheduling configuration specifications, each scheduling configuration specification having a different validity usage period during which the scheduling configuration is valid, where preferably the validity of a first scheduling configuration specification is the current usage period and where the validity of a second scheduling configuration specification also referred to as first next scheduling configuration specification is the first in a sequence of m next usage periods and where an mth -next scheduling configuration specification is the mth -next in a sequence of n-2 usage periods, and where the mth -next scheduling configuration specification is implemented preferably on a partition that is associated with an element of a logical ring structure comprised in the usage period change mechanism and is the clockwise direct neighbor of the partition with the implementation of the (m-1) th next scheduling configuration specification - with 1<m<n and n being the current cycle number of the scheduler which also defines the current number of partitions comprised in the scheduler.
13. Store the Enqueue-revocation parameter list which has been returned by the Enqueue()function call - preferably in a variable length extension of the demand context field in a software based implementation of the scheduler, or preferably in a memory field of an FPGA based portion of a hardware based implementation of the scheduler.

### Stage 7b): Demand satisfaction time procedure

The demand satisfaction time procedure is triggered by the scheduler detecting unallocated resource units of a first resource usage unit type. Preferably, this detection occurs "just in time" to allow the allocation of these detected unallocated resource usage units to a demand already waiting for demand satisfaction. The following is a description of the demand satisfaction time procedure:
- The scheduler detects that unallocated resource usage units are becoming available in the time dimension - preferably with a look-ahead function that allows just in time allocation
- The scheduler triggers the currently-active partition to execute demand satisfaction time procedure.
- The currently-active partition performs a deqeueue operation to it's associated queuing mechanism, receiving the pointer to the buffered demand including the demand scheduling context field.
- The currently-active partition determines the amount of resource usage units to be allocated and consumed during demand satisfaction, preferably using the Length L already determined at demand arrival time. It hands this amount and the pointer to the buffered demand to the scheduler interface controlling the scheduled resource, which starts the demand satisfaction by allocating the amount of resource usage units that are required for demand satisfaction and starts demand satisfaction of the buffered demand.
- The currently-active partition counts this amount in the counter mechanism - preferably it issues a function call COUNT() to the counter mechanism with parameters including an identity of the counter mechanism and the amount of resource usage units to be counted. This amount is also referred to as the length of the demand, or as the length of the resource usage demand.
- The COUNT() operation is executed according to the current values of attribute value pairs currently associated with the counter mechanism that is used for counting. For example, an attribute value pair determines if the counting is done with or without prior reservation. Another attribute value pair determines if a reservation needs an explicit confirmation or if an automatic confirmation is to be used whenever another resource unit of the same resource is scheduled, and following a usage period change - while documenting the amount of outstanding reservation confirmation in the usage record that gets created following a usage period change. Depending on current values of attribute value pairs may or may not lead to counter overrun or counter underrun.
   When a counter overrun or underrun is disabled, the COUNT() function will return FALSE and the caller of the function will have to handle the situation as exception. Preferably, the caller should not need to bother and trust that a counter mechanism has virtually unlimited capacity (which is of course not true, but simulated by creating interim usage data records, when a counter overrun or underrun occurs, and letting the counter mechanism overrun or counter mechanism underrun happen. This simplifies counting, as the process calling the count() function does not need to care about the exception of a counter underrun or overrun. Such an overrun or underrun can occur during the demand satisfaction time procedure and also during the usage period termination procedure when reservation tokens are counted due to a auto-confirm being executed during the usage period termination procedure.
- When the demand satisfaction is completed, the scheduler (preferably the currently-active partition) revocates all demand pointers that may still be enqueued, preferably the revocation pointers include an identification of the associated partition allowing to start with the next-active partition that is a direct neighbor the the currently active partition in the logical ring structure of the usage period change mechanism, also referred to as the first next-active partition.

### Stage 8): Usage period termination procedure

The usage period termination procedure gets triggered by the previously-active partition detecting that due to a usage period change it is no longer the currently-active partition in a usage period that has just ended, but is now the previously-active partitition in a usage period that has just started.
- The previously-active partition may de-associate the qeueuing mechanism abut preferably leaves the queueing mechanism associated just in case the same queueing mechanism will be associated to the partition also for the next usage period cycle.
- The previously-active partition for each associated counter mechanism performs the following steps:
   ∘ Preferably from any respective attribute value pair associated with the counter mechanism determine whether an auto-confirm is to be done, whereby the counter mechanism will be cremented by the amount of reservation tokens.
   ∘ Note that this crement is preferably done via a COUNT() operation which may lead to a counter overrun or underrun. When a counter overrun or underrun is disabled, the COUNT() function will return FALSE and the caller of the function will have to handle the situation as exception. Preferably, the caller should not need to bother and trust that a counter mechanism has virtually unlimited capacity (which is of course not true, but simulated by creating interim usage data records, when a counter overrun or underrun occurs, and letting the counter mechanism overrun or counter mechanism underrun happen. This simplifies counting, as the process calling the count() function does not need to care about the exception of a counter underrun or overrun.
   ∘ Preferably determine the counted usage, preferably using a function call "CountedUsage(), whereby the counter mechanism will return the aggregated counted amount, regardless if the counter mechanism has been counting the usage as incrementing counter or as decrementing counter.
   ∘ In case there was not counted usage (function call returns the value 0): : From any respective attribute value pair associated with the counter mechanism determine whether a usage data record shall be produced in case the counter has not counted any usage.
   ∘ If no, disassociated the counter and proceed to next counter mechanism
   ∘ Preferably from any respective attribute value pair associated with the counter mechanism determine whether as usage data based charging procedure an offline charging procedure or an online charging procedure or a combination of both procedures shall be used, including associated parameters such as the address to which the usage data record is to be sent, or the identity of the publish subscribe mechanism that shall be used to publish the usage data record for the purpose of exporting it from the scheduler.
   ∘ If offline-charging applies, create a usage data record and trigger the export of the usage data record.
   ∘ If online-charging applies, determine the amount of quota units to be devaluated - preferably from an attribute value pair associated with the counter mechanism that specifies a numeric value, for example a bid value that has been bid by the party that benefits from preferential treatment of the scheduler relative to other bidders which have bid a lower numeric value. This numeric value determines the amount of quota units to be devaluated, and preferably also the type of quota units to be devaluated - such as tickets issued by the resource owner of the resource that is scheduled with the scheduler, entitling the party that presents this numeric amount of tickets over an online charging interface ö quota reservation and consumption the right to use one resource usage unit of the resource usage unit type currently associated with the counter mechanism as the resource usage unit type where the amount of resource usage units of this resource usage unit type which get allocated and consumed during demand satisfaction. In effect, this allows to charge per consumed token in a token bucket with RATE R = 0 that is large enough to never get depleted (no underrun) or if an underrun occurs, an interim accounting record has been created at the point in time when the underrun occurred and has been triggered for export already.

### Description of the drawings

### Figure 1

Embodiment of a scheduler 1000 according to the invention, shown at 4 different points in time, namely at the subsequent points in time t₁, t₃, t₅ and t₇, where the time t₁ is the time when the scheduler 1000 has started operation, and where first partition 101 comprised in the scheduler 1000 has at time t₇, completed a first revolving role cycle period and started a second revolving role cycle period. A specific instance of a revolving role cycle period such as the very first revolving role cycle period shown in figure one is not a revolving role cycle period of the scheduler 1000, but the revolving role cycle period of a specific instance of a scheduling partition 1, where the scheduler 1000 comprises in this embodiment 3 instances of a scheduling partition 1, namely the scheduling partition 101, the scheduling partition 201 and the scheduling partition 301. Each scheduling partition 1 comprises an instance of a revolving role detection function 11, namely the scheduling partition 101 comprises the revolving role detection function 111, the partition 201 comprises the revolving role detection function 211, and the scheduling partition 301 comprises the revolving role detection function 311. Each instance of a revolving role detection function is connected to a usage period change mechanism 98 in a specific way, that allows each instance of a revolving role detection function 11 to detect a role that is different from the role that any of the other instances of the revolving role detection function 11 comprised in the scheduler 1000 detects.

At time t₁ and at time t₇, the revolving role detection function 111 comprised in the scheduling partition 101 detects the role "Previously-Active" (PA) - therefore the scheduling partition 101 is said to be the previously-active partition (or the PA-partition) during the usage period UP₁ starting at the time t₁ and ending at the time t₃ and during the usage period UP₄ that is starting at time t₇ . At time t₁ the revolving role detection function 211 comprised in the scheduling partition 201 detects the role "Currently-Active" (CA) - therefore the scheduling partition 101 is said to be the currently-active partition (or the CA-partition) during the usage period UP₁. At time t₁ the revolving role detection function 311 comprised in the scheduling partition 301 detects the role "Next-Active" (CA) - more precisely the role "first-NA" - therefore the scheduling partition 301 is said to be the next-active partition (or the NA-partition) during the usage periods UP₁ and UP₄ - more precisely the scheduling partition 301 can also be said to be the first next-active partition (first-NA-partition) during the usage periods UP₁ and UP₄.

At time t₃ the revolving role detection function 111 comprised in the scheduling partition 101 detects the role "Next-Active" (NA) - more precisely the role "first-NA" - therefore the scheduling partition 101 is said to be the next-active partition (or the NA-partition) during the usage period UP₂ starting at time t₃ and ending at the time t₅. At time t₃ the revolving role detection function 211 comprised in the scheduling partition 201 detects the role "Previously-Active" (PA) - therefore the scheduling partition 201 is said to be the previously-active partition (or the PA-partition) during the usage period UP₂. At time t₃ the revolving role detection function 311 comprised in the scheduling partition 301 detects the role "Currently-Active" (CA) - therefore the scheduling partition 301 is said to be the currently-active partition (or the CA-partition) during the usage period UP₂.

At time t₅, the revolving role detection function 111 comprised in the scheduling partition 101 detects the role "Currently-Active" (CA), therefore the scheduling partition 101 is said to be the currently-active partition (or the CA-partition) during the usage period UP₃ starting at time t₅ and ending at the time t₇. At time t₅ the revolving role detection function 211 comprised in the scheduling partition 201 detects the role "Next-Active" (NA) - more precisely the role "first-NA" - therefore the scheduling partition 201 is said to be the next-active partition (or the NA-partition) during the usage period UP₃ more precisely the scheduling partition 201 can also be said to be the first next-active partition (first-NA-partition) during the usage period UP₃. At time t₅ the revolving role detection function 311 comprised in the scheduling partition 301 detects the role "Previously-Active" (PA) - therefore the scheduling partition 301 is said to be the previously-active partition (or the PA-partition) during the usage period UP₃.

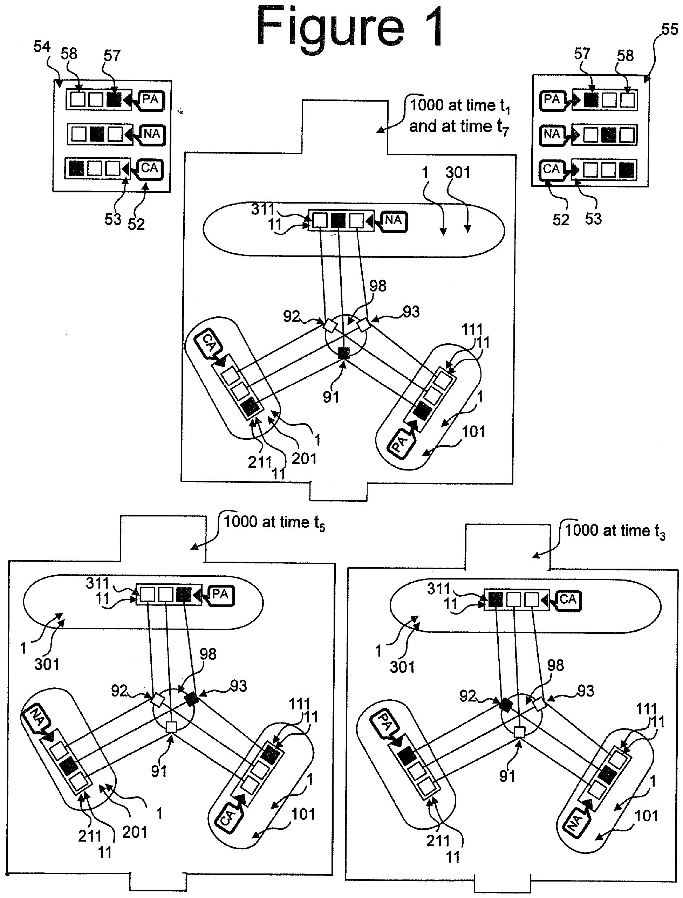

As a revolving role cycle period always starts when a partition is detecting the role PA (Previously-Active), the figure 1 shows how the scheduling partition 101 has completed it's first revolving role cycle period, and how the scheduling partition 201 has started at time t₃ it's first revolving role cycle period , and how the scheduling partition 301 has started at time t₅ it's first revolving role cycle period.

At time t₇ the usage period change mechanism 98 comprised in the scheduler 1000 has again the same state that it had at time t₁, also each instance of the revolving role detection functions 11 has at time t₇ the same state as it had at time t₁. As in this embodiment the time difference between t₁ and t₃ as well as between t₃ and t₅ and as well between t₅ and t₇ is always 15 minutes, the revolving role cycle period is 45 minutes, and the revolving role cyle period number is 3, because during the 45 minutes of the revolving role cycle period 3 different usage periods have been ended with a usage period change, namely at time t₃, t₅ and t₇..The scheduler 1000 comprises multiple instances of a scheduler partition 1, and throughout the revolving role cycle period shown in figure 1, the scheduler 1000 always comprises 3 partitions. The figure 1 shows how one of these multiple instances of a scheduler partition 1, namely an instance 301 of the scheduler partition 1 detects a role that it has during a usage period, where a first usage period UP₁ starts at time t₁ and ends at time t₃, and where a second usage period starts at time t₃ and ends at time t₅ and where a third usage period UP₃ starts at time t₅ and ends at time t₇ and where a fourth usage period UP₄ starts at time t₇ where the 3 Usage Periods UP₁, UP₂, and UP₃ belong to the first revolving role cycle period. The fourth usage period UP₄ is comprised in a second revolving role cycle period. The scheduler partition 301 has a different role in each of these three usage periods, and it detects this role via an instance of a revolving role detection functions 11, namely the revolving role detection function 311, which is comprised in the scheduler partition 301. The revolving role detection function 311 is connected to three bits contained in a usage period change mechanism 98 in a scheduler partition instance specific way, whereby these three bits are a first bit 91, a second bit 92 and a third bit 93, where at time t₁ the first bit 91 is having the value TRUE and the other bits having the value FALSE, and where these three bits comprised in the usage period change mechanism 98 are arranged in a ring-shift register which supports a clockwise ring-shift operation. Due to the ring structure and supported shift direction the shift operation shifts the old value of the bit 93 as new value into bit 91, the old value of bit 92 as new value into bit 93, and the old value of bit 91 as new value into bit 92. The detection function 311 is evaluating the bit 93 as least significant bit and the bit 92 as most significant bit, which in the time differentiated embodiment of scheduler 1000 at time t₁ evaluates to the role "Next Active", which is abbreviated as NA in all figures, based on the evaluation table 54 applicable for the revolving role detection function 311, because due to the circular symmetry the evaluation table 55 applies to the revolving role detection functions 111 and 211, as otherwise the writing of the abbreviation NA would have to be written upside down. In both tables (54 and 55) is the position of the least significant bit indicated as position 57 (close to the shift-direction indicator position 53) whereas the position of the most significant bit is indicated as position 58, and where the position 52 points to the position where the result of the revolving role detection function is shown for the benefit of the reader of the diagrams, where it should be clear that this display of the role is not a required part of the embodiment of any revolving role detection function 11 and is not a required part of the embodiment of the revolving role detection function 311. The figure 1 also shows the embodiment of scheduler 1000 at time t₃, immediately after a shift operation applied to the three bits 91,92 and 93 comprised in the usage period change mechanism 98 has resulted in bit 92 having the value TRUE and bits 93 and 91 having the value FALSE , which leads to the revolving role detection function 311 at time t₃ detecting the role "Currently Active" - abbreviated as CA in all figures. The figure 1 also shows the embodiment of scheduler 1000 at time t₅, immediately after a shift operation applied to the three bits 91, 92 and 93 comprised in the usage period change mechanism 98 has immediately resulted in bit 93 having the value TRUE and bits 91 and 92 having the value FALSE, which leads to the revolving role detection function 311 at time t₅ detecting the role "Previously Active" - abbreviated as PA in all figures. After completion of the next shift operation the scheduler 1000 will detect again the same value as at time t₅, where a usage period change event trigger such as the lapse of a predefined time of local clock 97 or the receipt of an external usage period change event trigger received via an external trigger import interface 96 triggers a usage period change event to the usage period change mechanism 98, resulting in the execution of the clockwise ring shift operation on the ring-shift-register comprised in the usage period change mechanism 98, whereby the value TRUE revolves in clockwise direction around the ring-shift register. The figure 1 shows also the behavior of 2 additional of these multiple instances of a scheduler partition 1, namely an instance 101 of the scheduler partition 1, and an instance 201 of scheduler partition 1. It can be seen that at each of the times t₁, t₃, and t₅, each of the 3 instances of the scheduler partition 1, namely the scheduler partition 101, 201 and 301 detect a different role via their instance of the revolving role detection function 11, and that the usage period change event can be implemented in hardware and can be executed in a single clock cycle.

### Figure 2

Embodiment of the scheduler 1000 according to the invention showing the scheduler 1000 at a time time t_{z2} between the time t_{z1} and the time t₂ where the time t₂ is after time t₁ and prior to time t₃, where the scheduler has been expanded at time t_{z1} from 3 partitions to 4 partitions and is just starting to work as a scheduler with 4 partitions. There are now 4 instances of the revolving role detection function 11, and the role they detect are shown in table 84 and 85. A fourth instance of scheduling partition 1 has been added, namely the scheduling partition 401, comprising a fourth instance of revolving role detection function 11, namely the revolving role detection function 411, which includes 4 bits. The scheduler 1000 uses scheduling resources from a scheduling resource pool 1001 for scheduling configuration operations such as for adding another partition on the fly - while normal scheduling operation continues. The scheduling resource pool 1001 of the scheduler 1000 includes FPGA Resources - so called programmable silicon resources - visualized as NAND-Gatter 9, and CPU resources, and memory resources and networking resources such as for broadcasting a trigger signal to multiple recipients in a way that a single trigger signal reaches multiple receivers simultaneously. An Intel Altera processor is an example of such a reprogrammable processor that includes FPGA resources and CPU resources. The scheduler 1000 includes building plan templates 7 that define how components of scheduling resources can be build from the available memory, FPGA, CPU and networking resources. The scheduler 1000 also includes pre-assembled resources such as pre-defined scheduling counter mechanisms 2. The scheduling resource pool 1001 includes also the buffer 500 which is used for buffering resource usage demands while they are waiting for demand satisfaction. The scheduler 1000 further comprises a buffer-pointer-register 501, with the value of the pointer stored in register 501 pointing to first free buffer location 503 in the buffer 500. The scheduler 1000 has prepared the switchover from a configuration of scheduler 1000 at time t₁ that works with 3 partitions to a configuration that works with 4 partitions. As can be seen, the ring shift register comprised in usage period change mechanism 98 has been expanded by enabling a previously disabled bit 94 which effectively expands the ring shift register. The bit is always inserted into the ring-shift register in a position as direct neighbor (and in shift direction as predecessor) of the bit that currently has the value TRUE. As can be seen all instances of the revolving role detection functions 11 now comprise 4 bits, as the revolving role detection function instances 111,211 and 311 have been expanded by one bit (the one shown as connected to the bit 94). In this preferred embodiment, the expansion bit has been already present but disabled and gets enabled simultaneously with the activation of bit 94 as part of the ring-shift register. The scheduler 1000 has an implementation specific maximum size of the ring-shift register - for example a sixteen bit ring shift register allows maximum expansion to 16 partitions (of which 14 are in the role next-active). Expanding the number of partitions can be used to reduce the usage period duration below the maximum queuing delay. It should be noted that the revolving role detection function where the least significant bit in position 57 is having the value TRUE is always detecting the role "Previously active" (PA) and that the revolving role detection function where the most significant bit in position 58 is always detecting the role "currently active" (CA), and that all other revolving role detection functions detect the role "next-active" (NA), more precisely in case of multiple next-active partitions the roles are differentiated regarding their position in the cycle, the one in clockwise direction following the currently active partition is the first next-active partition, the one that is in clockwise direction the predecessor of the Previously Active partititon is the last next active partititon.

Any other numbered objects refer to objects already described in the preceding figure.

### Figure 3

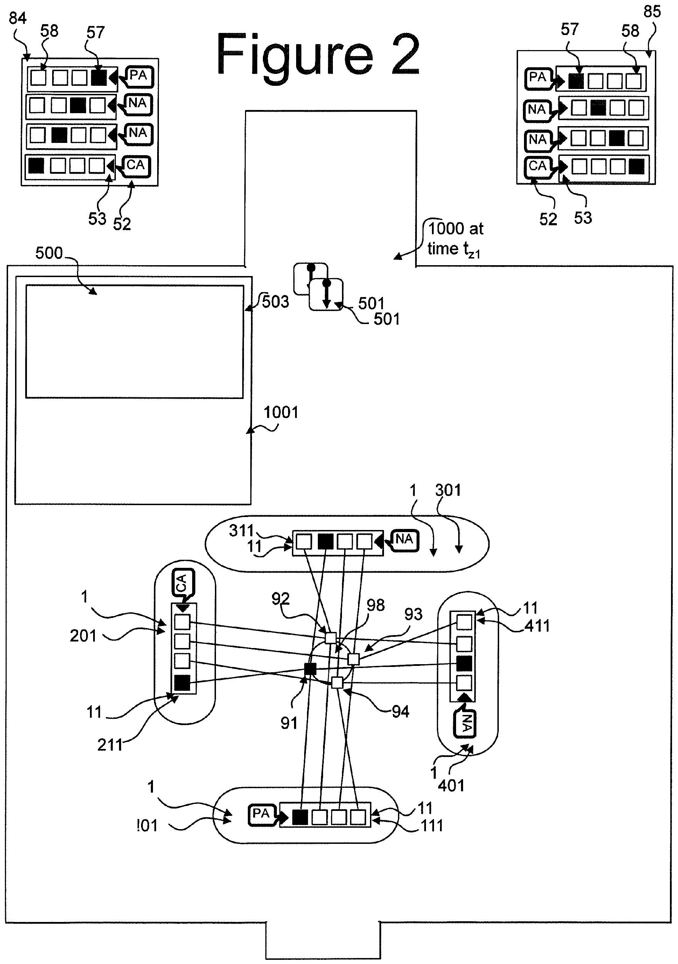

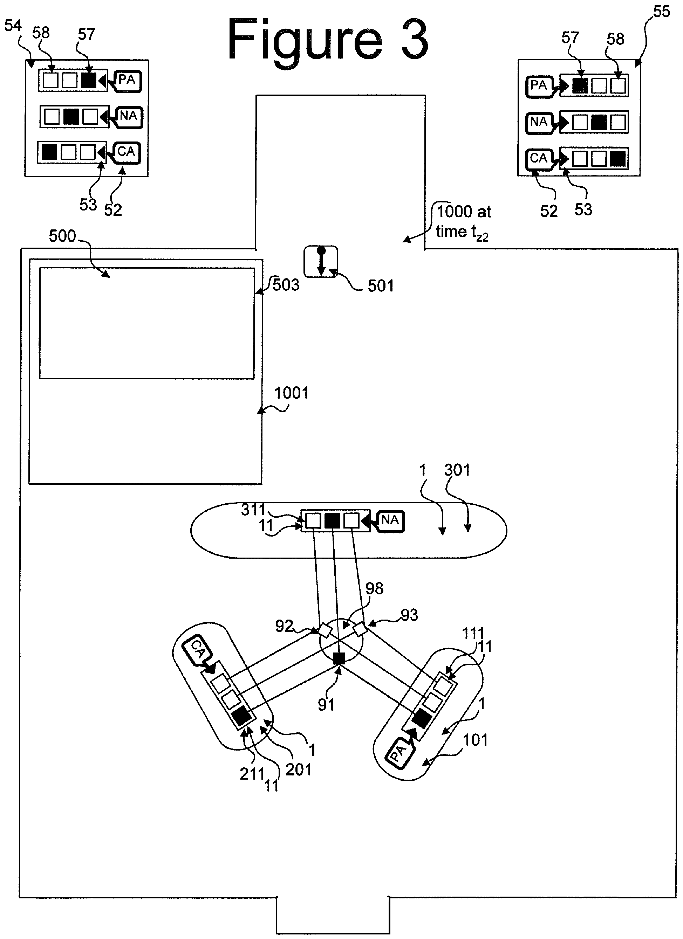

Embodiment of the scheduler 1000 according to the invention showing the scheduler 1000 at a time time t_{z2} between the time t_{z1} and the time t₂ where the time t₂ is after time t₁ and prior to time t₃, where the scheduler has been reconfigured and starts at time t_{z2} to work again with 3 partitions. Thus, the expansion shown in figure 2 has been reverted in figure 3, thus the scheduler 1000 at time time t_{z1} has again the the same configuration as the scheduler 1000 at time t₁. Any resources used for creating the fourth instance of scheduling partition 1, namely the scheduling partition 401 have been given back to the scheduling resource pool 1001 when the scheduling partition 401 has been deleted during the step of reconfiguration. Note that the deletion occurs to the bit that is a direct neighbor in anticlockwise direction of the bit which is currently having the value TRUE.

Any other numbered objects in this figure and in all subsequent figures refer to objects already described in the figures that are preceding the respective figure.

### Figure 4

Embodiment of the scheduler 1000 according to the invention showing the scheduler 1000 at a time time t_{z3} between the time t_{z2} and the time t₂, where the scheduler has again been reconfigured and starts at time t_{z3} to work with 2 partitions, because between the time t_{z2} and the time t_{z3} the third instance of the partition 1 - namely the instance 301 - has been removed and the scheduling resources have been given back to the scheduling resource pool 1001. It should be noted that the rule has been followed and that the deletion occurred to the bit that was a direct neighbor in anti-clockwise direction of the bit which had the value TRUE at the time t_{z2} , which means that the bit 93 has been removed because at time t_{z2} it was the anti-clockwise direct neighbor of bit 91, which had the value true at the time t_{z2} . Please note that now the tables 86 and 87 describe which roles the both remaining instances of the revolving role detection function 11 detect, namely the revolving role detection function 111 detects the role "previously-active" (PA) and the revolving role detection function 211 now detects the role "currently-active" (CA). Also shown is an initially empty usage data record chain 70 containing usage data records not yet externally exported, where that chain of usage data records is anchored by a usage data record chain anchor 71 being a pointer initialized with value 0 indicating an empty chain. Further shown is an external-export-interface 99,that is used for scheduler initiated export of data. The external-export-interface 99 always tries to empty the usage data record chain 70 and publishes any usage data present in the chain. This is used for exporting the results of reading out (and simultaneously resetting) all scheduling counter mechanisms where a minimum of one counting operation has taken place during the previous usage period - where reading-out operation is only possible when the scheduling partition 1 associated with the scheduling counter mechanism that is read out is comprising a revolving role detection function that detects the role "Previously-Active".

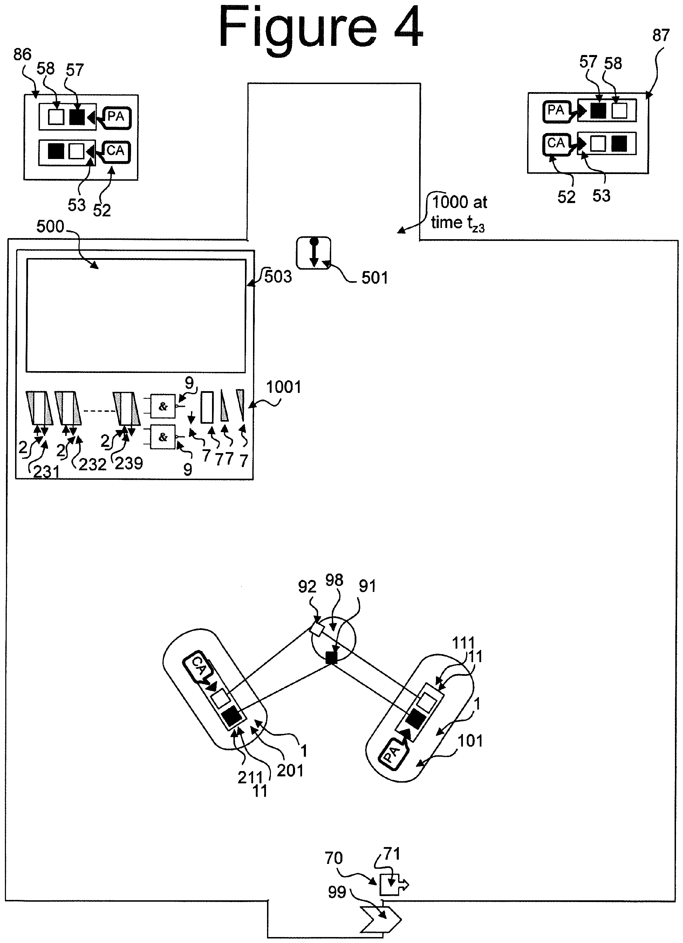

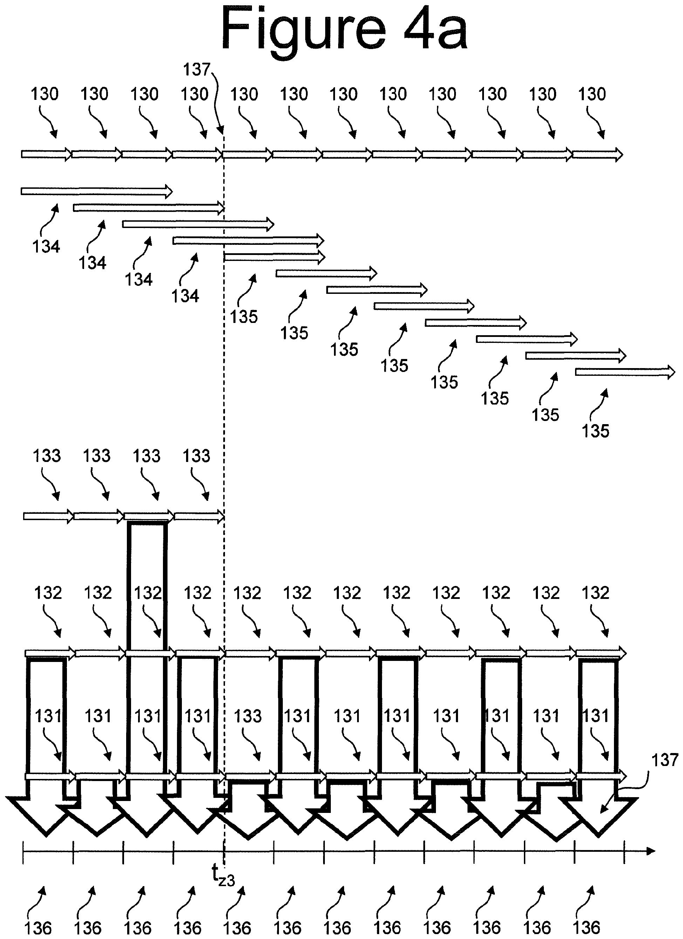

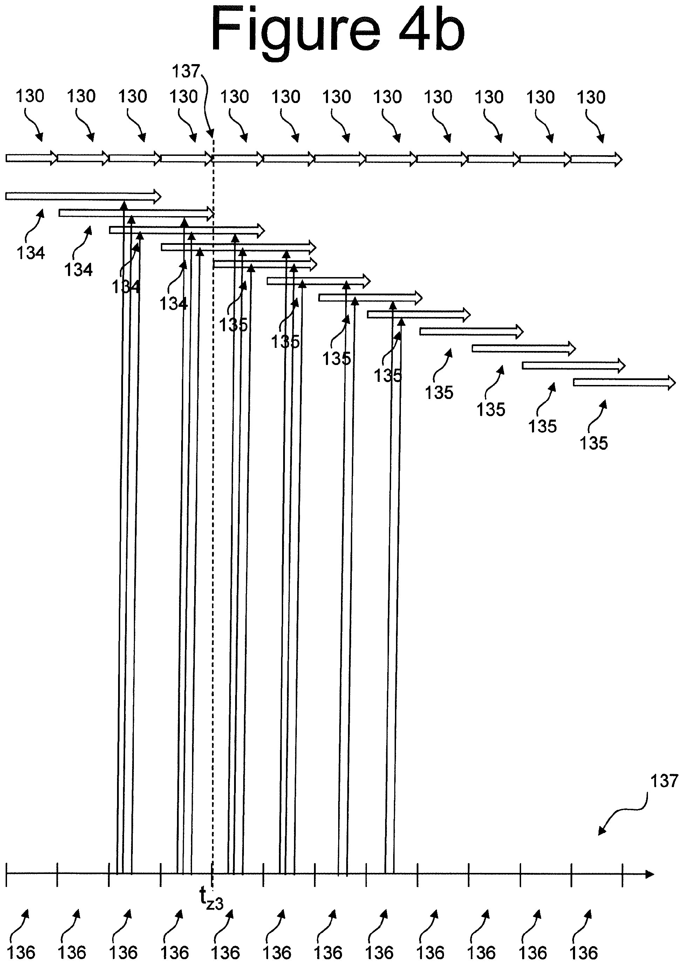

It should be noted that there is also the concept of an inclusive revolving role cycle period, which is the time duration from the point in time when a partition 1 is the previously active partition and has just completed all usage data value capture activities such as activities related to closing the previous usage period and to the closing of the previous revolving role cycle period, until the point in time when it is again in PA state and has completed all activities related to closing the previous usage period and to closing the revolving role cycle period. The activities related to closing the previous usage period include all activities related to the creation of usage data records and appending them to the usage data record chain 70, including the associated reset of scheduling counter mechanisms. The activities related to closing the previous revolving role cycle period include the de-association of all scheduling counter mechanisms from the partition and the de-association of the queueing system from the partition. An optimization may be applied that prevents de-association if immidiately after a re-association is required
In the following it will be shown that the scheduler 1000 operating with only 2 partitions can be used for an efficient implementation of Time of Day Accounting (TODA) - this occurs at the times t_{zi}, but the scheduler may alternatively proceed directly from time t₁ to time t₂ (without the intermezzo where it operates with only 2 partitions indicated with times t_{zi} for the two z in intermezzo). The two instances of scheduling partition 1 both do not have any scheduling counter mechanism 2 associated to them. Thus all scheduling counter mechanisms 2 can be considered to be associated with the scheduling resource pool 1001, including a first scheduling counter mechanism 231, a second scheduling counter mechanism 232, and a last scheduling counter mechanism 239. The scheduling resource pool 1001 also preferably contains a multiplicity of scheduling resources 7 which can be used to create scheduling counter mechanisms 2, with various attributes, in fact, another embodiment of the scheduler may comprise no pre-configured counters at all and create them on demand using the scheduling resources which include compute, storage and networking resources and the scheduling component building plans 7. In a preferred embodiment where the scheduler 1000 is part of a 5G UPF (User Plane Function) or of a 5G-AN (5G Access Node) the amount of scheduling counter mechanisms required for one scheduler may be defined by the amount of combinations of network slice instances (each identified by an S-NSSAI (single network slice selection assistance information), data network numbers (DNN) and standardized 5QI values defined in the system architecture for 5G systems as defined by 3GPP in the document 3GPP TS 23.501 V15.0.0 (2017-12), in Table 5.7.4-1. Figure 4 shows the situation at time t_{z3} where no time of day accounting has yet been defined for the resource usage of the resource scheduled by the scheduler 1000, but where the scheduler 1000 is already deployed for a scheduler where in future time of day accounting shall be supported at the wholesale level and/or at the slice instance level, where the different wholesale partners use different DNN (in 5G) or a different APN (in 2G, 3G, 4G), i.e. for GPRS, UMTS and LTE based data services. When an instance of the scheduling counter mechanism 2 is not associated with a partition, it is fully programmable.

### Figure 4a

Embodiment of the scheduler 1000 according to the invention showing the scheduler 1000 when the scheduler 1000 is operating with a usage period 130 that has a fixed length - here of 15 minutes. The figure 4 shows the time t_{z3} as a dotted timeline 138 and several usage periods prior to the time t_{z3} and several after usage periods after the time t_{z3}. At the time t_{z3} the scheduler is scaled down from 3 partitions to two partitions. Initially it starts with 3 partitions as shown in figure 3. At the time t_{z3} the scheduler has operated for at least 4 usage periods with 3 partitions, which means with a revolving role cycle period 134 that has a duration of 3 usage periods, in this embodiment a duration of 45 minutes. After the time t_{z3} the revolving role cycle period 135 has a duration of only 2 usage periods. The figure 4 also shows how a specific revolving role cycle period, or more precisely how the first usage period 131 of a revolving role cycle period during which the partition 101 is the previously active partition gets mapped to a time lot 136, and how another specific revolving role cycle period, represented by the first usage period 132 of a revolving role cycle period during which the partition 201 is the previously active partition gets mapped to a time lot 136 and how yet another specific revolving role cycle period, represented by the first usage period 133 of a revolving role cycle period during which the partition 301 is the previously active partition gets mapped to a time lot 136. The mapping 137 is an example of such a mapping, being a mapping between the partition 201 as previously active partition at the start of a revolving role cycle period and a time lot 136. A time lot is a defined instance of a usage period preferably with a defined start time in a predefined time zone such as UTC. It is implementation specific which partition of the scheduler 1000 will during a specific time lot be the active partition. This mapping determines which partition will be the active partition during a pre-defined time lot, and the mapping depends on the start configuration of the scheduler 1000, and the amount of usage period changes that have occurred and also scheduler scale up and scale down operation and their duration.

### Figure 4b

Embodiment of the scheduler 1000 according to the invention showing the scheduler 1000 at the same time period prior and after the time t_{z3} and in the same situation as shown in figure 4a, however here the mapping is shown how a time lot 136 gets mapped to multiple revolving role cycle periods. During times when the scheduler operates with 3 partitions the mapping is to 3 different paritition roles in the revolving role cycle period and when the scheduler operates with 2 partitions the mapping is to 2 different partition roles in the revolving role cycle period. This means that at times when the scheduler operates with 3 partitions, a time lot 136 has to get mapped to 3 different scheduling configuration specifications, namely a first one that defines how a first partition shall handle the usage period of the time lot as (first and last) next-active partition, a second one that defines how a second partition shall handle the usage period of the time lot as currently active partition, and a third one that defines how a third partition shall handle the associated usage data while in the role previously active. The figure 4b also shows the mapping during the scale-down transition of the scheduler 1000 to operating with only 2 partitions and shows the mapping of a time lot 136 at times when the scheduler operates with only 2 partitions. During these times of operating with only 2 partitions, a time lot 136 has to get mapped to 2 different scheduling configuration specifications, namely to a first scheduling configuration specification that defines how a first partition shall handle the usage period of the time lot as currently active partition, and a second scheduling configuration specification that defines how a second partition shall handle the associated usage data while in the role previously active.

### Figure 5

Embodiment of the scheduler 1000 according to the invention showing the scheduler 1000 at a time time t_{z4} between the time t_{z3} and the time t₂, where the scheduler 1000 has received via the scheduling configuration interface 95 a usage period specific scheduling configuration specification 42 and appended the scheduling configuration specification 42 to the specification chain 60 that previously had been empty and therefore the operation of appending comprised the step of writing the value of a pointer to the scheduling configuration specification 42 into the specification chain anchor 61 that previously contained the value 0 indicating an empty specification chain. The scheduling configuration specification 42 is valid for one inclusive revolving role cycle period the next usage period following the current usage period and a scheduling configuration specification 43 also received is valid for the over-next usage period. The scheduling configuration interface 95 is used for any control plane activities initiated from outside the scheduler that lead to re-configuration of the scheduler during normal operation, where the re-configuration takes place to the partition which is currently in the state PA (previously-active) and therefore currently not participating in the scheduler operation for handling demands. ". For sake of clarity, an optional management interface 96 is also shown, just to make clear that it is different from the interfaces 95 and 99, which may be considered as control plane interfaces or as charging interfaces. The visualization of the scheduling partitions 101 and 201 has been adapted, but the scheduling partitions 101 and 201 still have the same state as in figure 4.

### Figure 6

Embodiment of the scheduler 1000 according to the invention showing the scheduler 1000 at a time t_{z5} between the time t_{z4} and the time t₂, where the scheduler 1000 has received via the management interface 96 a trigger to perform a usage period change and where this "operator triggered" usage period change has affected a clockwise shift operation to the ring-shift-register comprised in the usage period change mechanism 98, whereby now the bit 92 is having the value "TRUE" and the bit 91 is having the value "FALSE. This has effected a usage period change from UP_{z1} to UP_{z2} and has resulted in the scheduling partition 101 now being the "Currently-Active" (CA) partition, the scheduling partition 201 now being the "Previously-Active" (PA) partition. Each instance of the scheduling partition 1 comprises an instance of an internal export&import interface 23. The scheduling partition 101 comprises an internal export&import interface 123, and the scheduling partition 201 comprises an internal export&import interface 223. An instance of the scheduling partition 23 is only activated, when the scheduling partition instance is having the role "Previously-Active", in which case the icon for the internal export&import interface 23 is shown in bold, to indicate that it is currently activated. The internal export&import interface 223 is currently activated. In the moment when it becomes activated by a usage period change, an activated internal export&import interface 23 always first creates a usage data record by reading out all scheduling counter mechanisms. As there are currently no scheduling counter mechanisms, nothing happens.

### Figure 7

Embodiment of the scheduler 1000 according to the invention showing the scheduler 1000 at a time t_{z6} between the time t_{z5} and the time t₂, where the scheduler 1000 has completed the actions that have been triggered in the partition with the role "Previously-Active" by the usage period change. These actions include:
1. Auto-Confirm all reservation tokens
2. Read-Out& reset of all scheduling counter mechanisms associated with the partition in PA role
3. Creation of usage data records (incl. number of auto-confirmed reservation tokens) triggering export via the external export interface 99
4. Activate any scheduling configuration specification that has an activation validity for the current usage period. The scheduling configuration specification 42 has a validity for the next usage period that starts at the next usage period change event. Given that the scheduler currently has a revolving role cycle period of 2 and comprises only 2 partitions, it must be activated now in the previously-active partition 201. Therefore the scheduling configuration specification 42 has been removed from the specification chain 60 of already received but not yet activated scheduling configuration specifications - and has been activated as an instance of an activated scheduling configuration specification 2, namely as activated scheduling configuration specification 203 - of course in the partition 201, as this is the partition with the role "Previously-Active", also referred to as previously-active partition. In detail: Upon completion of all demand satisfactions started in the previous usage period an activated internal export&import interface 23 - in this case the internal export&import interface 223 performs a read-out&reset operation for all scheduling counter mechanisms. For all scheduling counter mechanism where a counting has occurred, i.e. which is not still in the same state as it was when it has just been reset, it includes the results into an instance of a usage data record containing the usage data regarding the previous usage period that has just ended. It adds the usage data record to the usage data record chain 70 containing usage data records not yet externally exported, where that chain of usage data records is anchored by a usage data record chain anchor 71 being a pointer initialized with value 0 indicating an empty chain. As there did not occur any demand satisfactions during the usage period that has last ended the internal export&import interface 223 may not produce a usage data record, however, preferably it creates a usage data record 76 that does not include any usage data, but it documents as a minimum the identity of the scheduler 1000, the usage period identity and the usage period end time of the usage period that has just ended. The scheduler publishes these usage data - preferably immediately - via the external export interface 99, which includes a publish/subscribe capability, where e.g. an offline charging or a billing system can subscribe to receive the usage data. After having created the usage data record 76 the internal export&import interface 223 proceeds with the import portion of the interface. The internal export&import interface fetches all scheduling configuration specifications with a validity that impacts the scheduling partition currently in the role "Previously-Active" from the specification chain 60, in this case the current figure shows that the specification 42 is no longer in the chain, because at time t_{z6} it has already been fetched.

Based on the scheduling configuration specification 42 that the scheduler 1000 has received during UP_{z1} with a validity for a scheduler cycle that start with the UP_{z2}, the scheduler 1000 has implemented an instance of an activated scheduling configuration specification 3, namely the activated scheduling configuration 203 in the partition 201 which is currently the previously-active partition. assigned a queueing mechanism 40, namely a first queuing mechanism 1040 to the scheduling partition 201, whereby the queueing mechanism 1040 is identified as a shared queueing mechanism that can be shared by multiple partitions. The instance 1040 has been selected based on a queueing mechanism identifier attribute contained in the scheduling configuration specification, which defines the queueing mechanism to be used during a usage period from a group of predefined queueing mechanisms which the scheduler supports. Based on the scheduling configuration specification 42 the scheduler 1000 has further assigned an instance of the scheduling counter mechanism 2 to the scheduling partition 201, namely the scheduling counter mechanism 233, whereby the scheduling counter mechanism 233 has been configured according to the information contained in the scheduling configuration specification 42 with the following attribute-value pairs:
- Local Identity of scheduling counter mechanism 233: an identifier for the scheduling counter mechanism 233 with local significance inside the scheduler
- Specified identity of the scheduling counter mechanism (from scheduling specification 42) - to be presented as part of the read-out result
- Crementation type Decrementing: TRUE
- Counter type: long integer (due to Crementation Type Incrementing the counter is reset to 0)
- Identity of validity usage period: UP_{z2}
- Identity of scheduler 1000: a string that identifies the scheduler 1000 and implicitly all resources scheduled by scheduler 1000 during the usage period UP_{z2}
- Identity of the scheduling partition that is associated to the counter: an identifier for the scheduling partition 201
- Periodic recurring Usage Period end time: daily, at 11 p.m.
- Usage period counter
- Attributes to be published as result of scheduling counter mechanism read-out&reset (only for scheduling counter mechanisms where F differs from the reset value, i.e. where a counting has occurred:
   ∘ Identity of validity usage period
   ∘ Identity of scheduling counter mechanism 233
   ∘ F (Counter Fill Rate) during scheduling counter mechanism read-out&reset

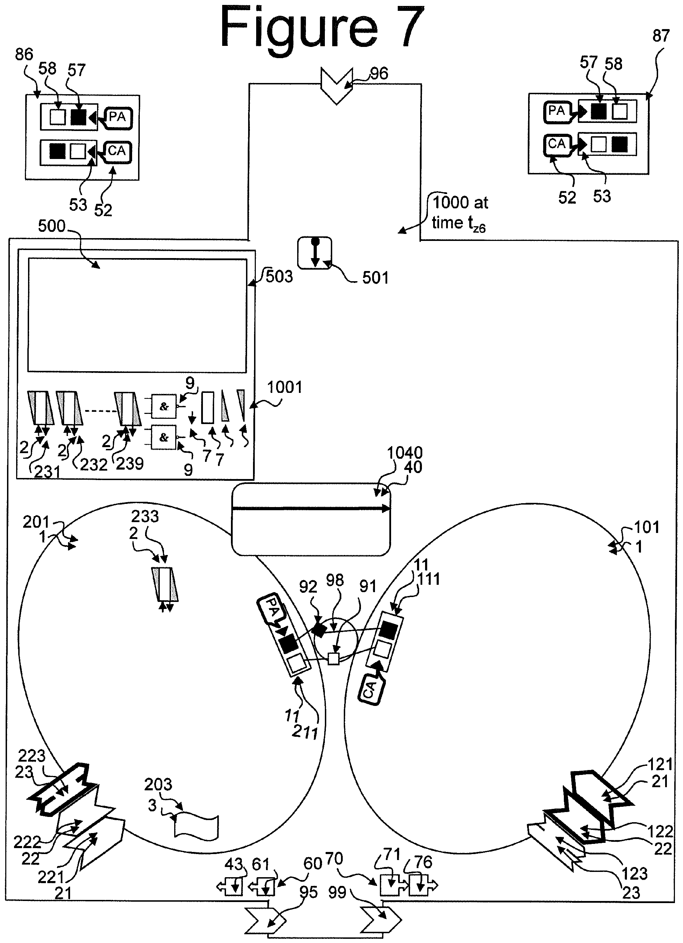

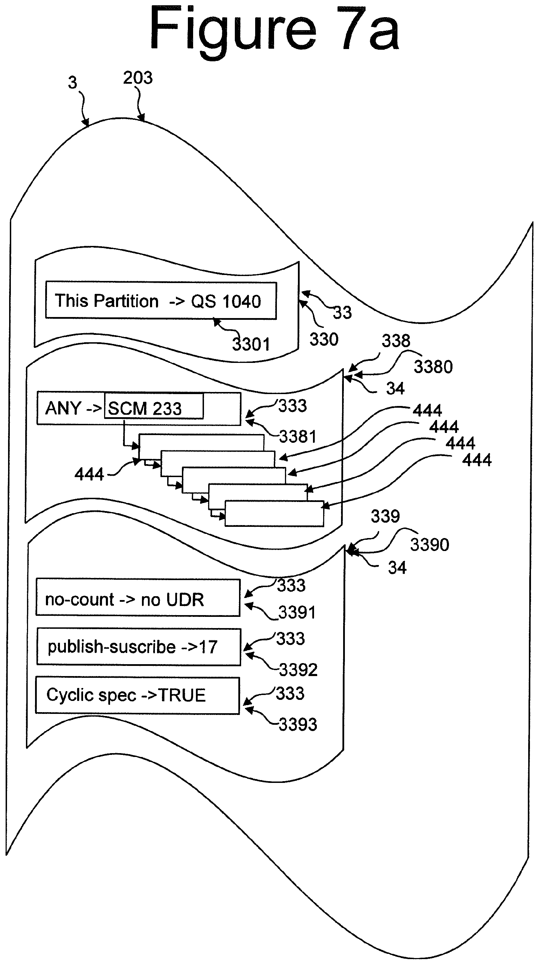

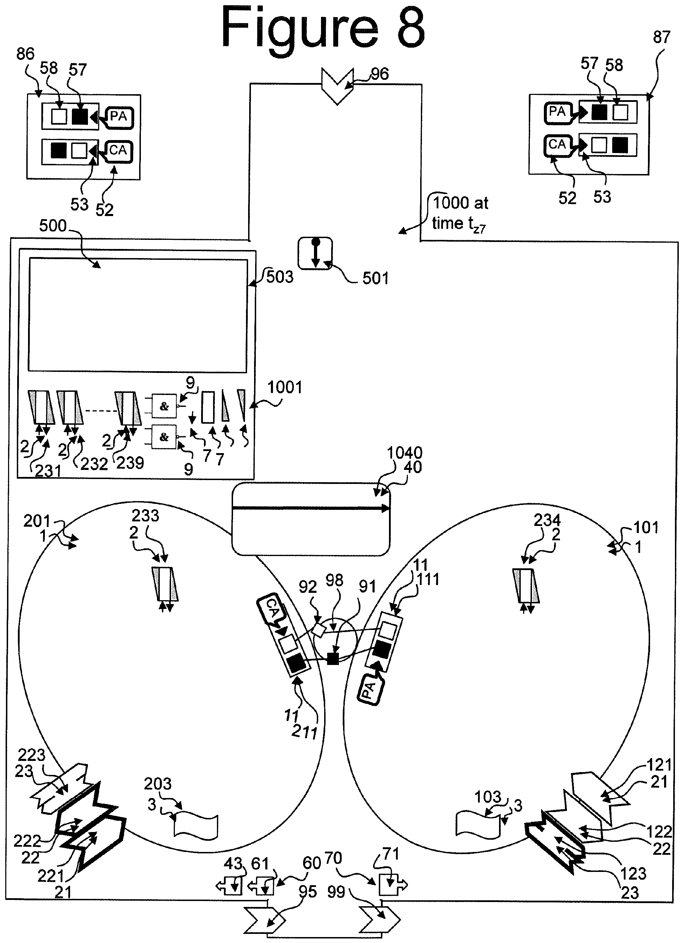

In summary, the figure 7 describes how first a usage data record 76 is being produced for a usage period (even though nothing had been counted in the Usage period), whereby resetting the scheduling counter mechanisms in the previously-active partition, and how the previously active partition is re-programmed by applying a scheduling configuration specification, which in this case asks for adding one scheduling counter mechanism to the scheduling partition.

### Figure 7a

Embodiment of an instance of an activated scheduling configuration specification 3, namely the activated scheduling configuration specification 203 that has been activated at time t_{z5} in the partition 201 of the scheduler 1000. Each instance of an activated scheduling configurations specification 3 is a specification that defines the configuration of one scheduling partition 1 for the duration of one inclusive scheduling cycle period. An inclusive scheduling cycle period is defined as the time duration between the time of the start of the activation of a first activated scheduling configuration specification 3 in a previously active partition when that partition's PA role is at the start of an inclusive revolving role cycle period and the time of the start of the activation of a first activated scheduling configuration specification 3 when that same partition after having cycled once through all roles in a revolving role cycle period is again the previously active partition. The point in time when this activation of the activated scheduling configuration 3 starts is the point in time that defines the start and end of an inclusive revolving role cycle period, also referred to as the inclusive revolving role cycle period start time. It starts when a previously active partition has finished all usage data value capture activities. The scheduling partition 1, for which an activated scheduling configuration specification 3 is valid is referred to as the specification validity partition. The specification validity partition is the partition in which a scheduling configuration specification such as the scheduling configuration 42 gets activated as an instance of an activated scheduling configuration specification 3. Each activated scheduling configurations specification 3 comprises a common specification part 33 and multiple usage period specific specification parts 34. The common specification part 330 is an instance of a common specification part 33, and comprises definitions that have a validity for the whole inclusive scheduling cycle period of the partition. This includes the mapping of the specification validity partition to a queuing mechanism for the duration of an inclusive scheduling cycle period. The mapping rule 3301 defines the mapping of the validity partition to the queueing mechanism 1040. This mapping will not change throughout a minimum of one inclusive scheduling cycle period. The activated scheduling configuration specification 203 comprises besides the common specification part 330 multiple usage period specific specification parts 34, namely a penultimate usage period specific specification part 338, which defines the partitions behavior when it is the currently-active partition, and an ultimate usage period specific specification part 339, which defines the partitions behavior when it is again the previously-active partition for the time prior to the end of an inclusive scheduling cycle period, which means that it defines how the usage data record handling shall be done for the partition. For each partition of the scheduler at the time when the scheduling configuration specification is activated in the previously active partition, there is one usage period specific specification part included in the scheduling configuration specification 3. As at the current point in time there are only 2 partitions, the scheduling configuration specification 3 only comprises 2 usage period specific specification parts, namely the penultimate usage period specific specification part 338 and the last penultimate usage period specific specification part 338. When the scheduler has more partitions, these precede the penultimate usage period specific specification part 338 in the activated scheduling configuration specification 203. Each penultimate usage period specific specification 338 comprises a multiplicity with a minimum of one mapping rule 333. The current embodiment shows the penultimate usage period specific specification 3380 as one instance of a penultimate usage period specific specification 338 which comprises only instance of the mapping rule 333, namely the mapping rule 3381, which defines that ANY resource usage unit type required to satisfy a demand is to be mapped at demand arrival time to the scheduling counter mechanism 233, where scheduling counter mechanism is abbreviated as SCM. The scheduling counter mechanism 233 has multiple associated attribute value pairs 444, which define the behavior of the scheduling counter mechanism. Based on the Attribute Value pairs 444 this embodiment of the scheduling counter mechanism 233 is a decrementing counter and has a size of 7. Whenever an underrun occurs, an interim usage data record shall be created. The identification of the counter is the ID of the scheduling counter mechanism 233.

Each activated scheduling configuration specification 3 comprises one ultimate usage period specific specification part 339, which defines the behavior of the validity partition when it is again the previously-active partition until the point in time, when it has completed all usage data value capture activities. The one ultimate usage period specific specification part 3390 is an instance of an ultimate usage period specific specification part 339, and comprises two mapping rules 333, namely a first mapping rule 3391 and a second mapping rule 3392. The first mapping rule 3391 defines that no usage data record shall be created if none of the counters has counted any consumption, i.e. in case all counters (in this embodiment the counter 233) is still in the Reset state, because no usage has occurred while the validity partition has been the currently active partition. The second mapping rule 3392 defines that a specific publish-subscribe mechanism identified by an identifier 17 shall be used to publish the usage records, where all applications that have subscribed to the publish-subscribe mechanism 17 will receive the usage data record. The third mapping rule 3393 defines that the currently activated scheduling configuration specification is cyclic, which means that in case there is no scheduling configuration specification with a validity for the current usage period present in the scheduling configuration specification chain 60 then the activated scheduling configuration specification 203 shall also be valid for the next revolving role cycle period.

### Figure 8

Embodiment of the scheduler 1000 according to the invention showing the scheduler 1000 at a time time t_{z7} between the time t_{z6} and the time t₂, where the time time t_{z7} is the time where the scheduler 1000 has received via the management interface 96 a trigger to perform a usage period change and where this "operator triggered" usage period change has affected a clockwise shift operation to the ring-shift-register comprised in the usage period change mechanism 98, whereby now the bit 91 is having the value "TRUE" and the bit 92 is having the value "FALSE. This has effected a usage period change from UP_{z2} to UP_{z3} and has resulted in the scheduling partition 201 now being the "Currently-Active" (CA) partition, the scheduling partition 201 now being the Currently-Active partition (CA), and the scheduling partition 101 now being the "Previously-Active" (PA) partition.

### Figure 9

Embodiment of the scheduler 1000 according to the invention showing the scheduler 1000 at a time t_{z8} between the time t_{z7} and the time t₂, where the scheduler 1000 has completed the actions that have been triggered in the partition with the role "Previously-Active" by the usage period change. These actions include:
1. Auto-confinn all reservation tokens in all scheduling counter mechanisms of the partition in PA role.
2. Read-Out& reset of all scheduling counter mechanisms associated with the partition in PA role
3. Creation of usage data records triggering export via the external export interface 99
4. Apply any scheduling configuration specification as far as applicable to the scheduling partition currently in the role "Previously-Active" - here: the scheduling configuration specification 43

In detail: Upon completion of all demand satisfactions started in the previous usage period an activated internal export&import interface 23 - in this case the internal export&import interface 123 performs a read-out&reset operation for all scheduling counter mechanisms. For all scheduling counter mechanism where a counting has occurred, i.e. which is not still in the same state as it was when it has just been reset, it includes the results into an instance of usage data record containing the usage data regarding the previous usage period that has just ended. It adds the usage data record to the usage data record chain 70 containing usage data records not yet externally exported, where that chain of usage data records is anchored by a usage data record chain anchor 71 being a pointer initialized with value 0 indicating an empty chain. As there did not occur any demand satisfactions during the previous usage period the internal export&import interface 123 may not produce a usage data record, however, preferably it creates a usage data record 77 that does not include any usage data, but it documents as a minimum the identity of the scheduler 1000, the usage period identity and the usage period end time of the usage period that has just ended. The scheduler publishes these usage data - preferably immediately - via the external export interface 99, which includes a publish/subscribe capability, where e.g. an offline charging or a billing system can subscribe to receive the usage data. After having created the usage data record 76 the internal export&import interface 123 proceeds with the import portion of the interface. The internal export&import interface fetches all configuration specifications with a validity that impacts the scheduling partition currently in the role "Previously-Active" from the specification chain 60, in this case the current figure shows that the specification 43 is no longer in the chain, because at time t_{z8} it has already been fetched. Based on the scheduling configuration specification 43 that the scheduler 1000 has received during UP_{z1} with a validity for a scheduling cycle that includes the UP_{z3} the scheduler 1000 has assigned a queueing mechanism 40, namely the first queuing mechanism 1040 to the scheduling partition 101, whereby the queueing mechanism 1040 is identified as a shared queueing mechanism that can be shared by multiple partitions. The instance 1040 has been selected based on a queueing mechanism identifier attribute contained in the scheduling configuration specification, which defines the queueing mechanism to be used during a usage period from a group of predefined queueing mechanisms which the scheduler supports. It should be noted that now both the partition101 and the partition 201 have installed an instance of an activated scheduling configuration specification, namely the partition 101 has installed the activated scheduling configuration specification 103. Based on this specification, more precisely based on the common part 33 of the specification 103, the partition 101 has selected and associated the same shared queuing mechanism, and therefore the queuing mechanism 1040 is now being shared by both partitions 101 and 201. Based on the activated scheduling configuration specification 103 that has been received as scheduling configuration specification 43 the the scheduler 1000 more precisely the partition 101 has further assigned an instance of the scheduling counter mechanism 2 to the scheduling partition 201, namely the scheduling counter mechanism 234, whereby the scheduling counter mechanism 234 has been configured according to the information contained in the activated scheduling configuration specification 103 with the same values as for scheduling counter mechanism 233 (described in figure 7 and 7a), except for the identity of the counter-mechanism and the identity of the associated scheduling partition (for scheduling counter mechanism 234 the associated scheduling partition is the scheduling partition 101), and except for the value of the attribute defining the Crementation-Direction, which in case of the scheduling counter mechanism 234 is "FALSE", making it an incrementing scheduling counter mechanism.

The tables 86 and 87 have been removed as they had been provided in previous tables only for ease of understanding,

### Figure 10

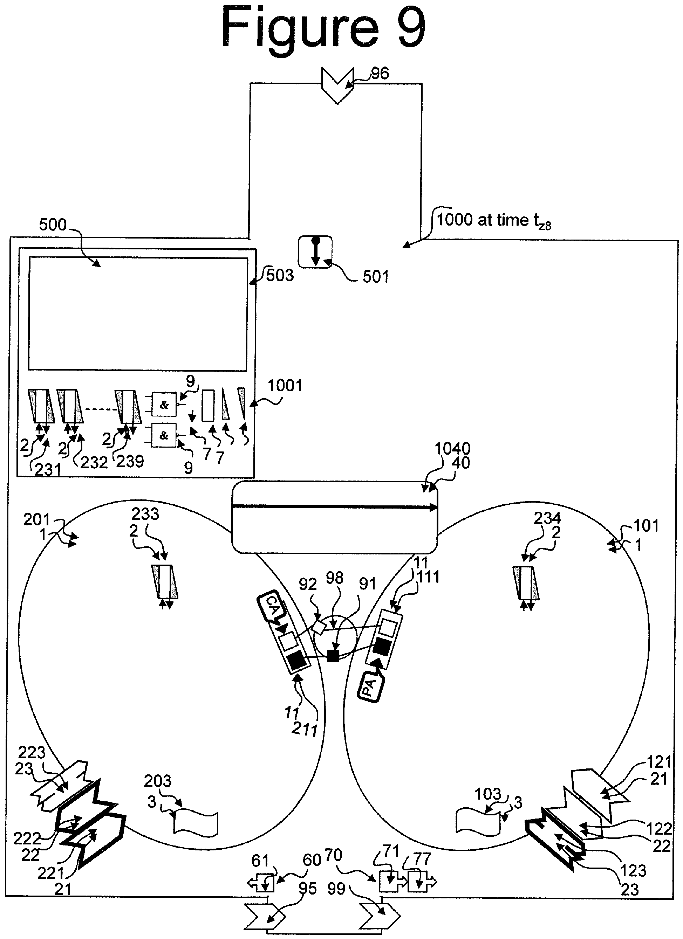

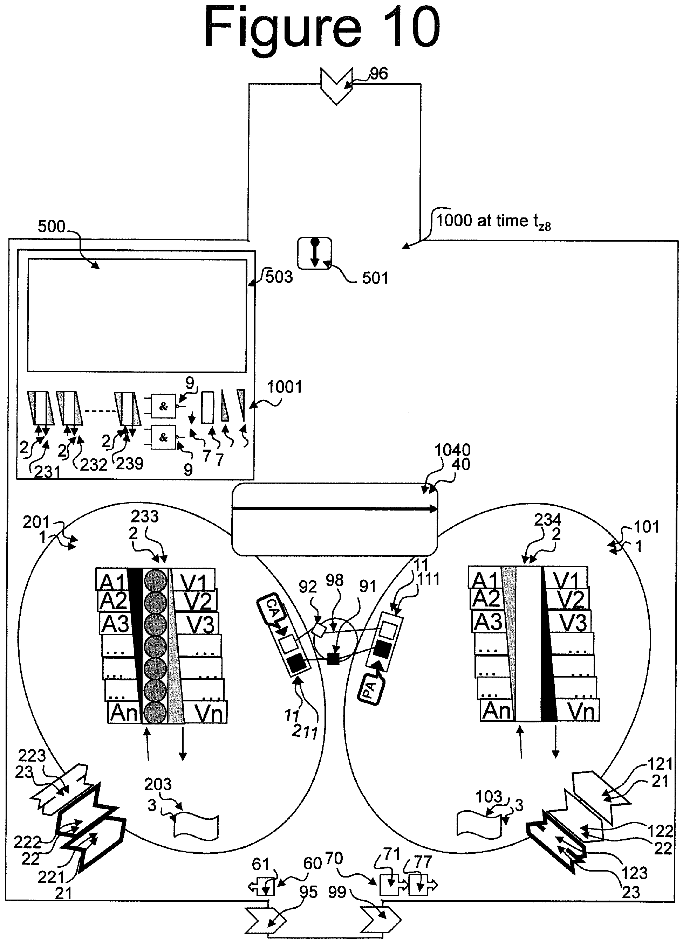

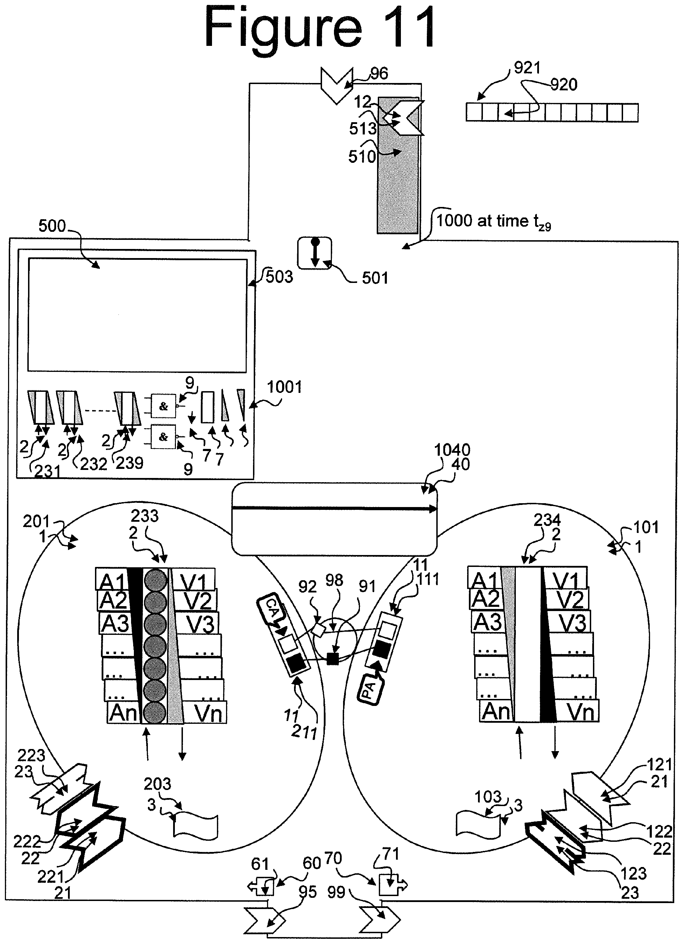

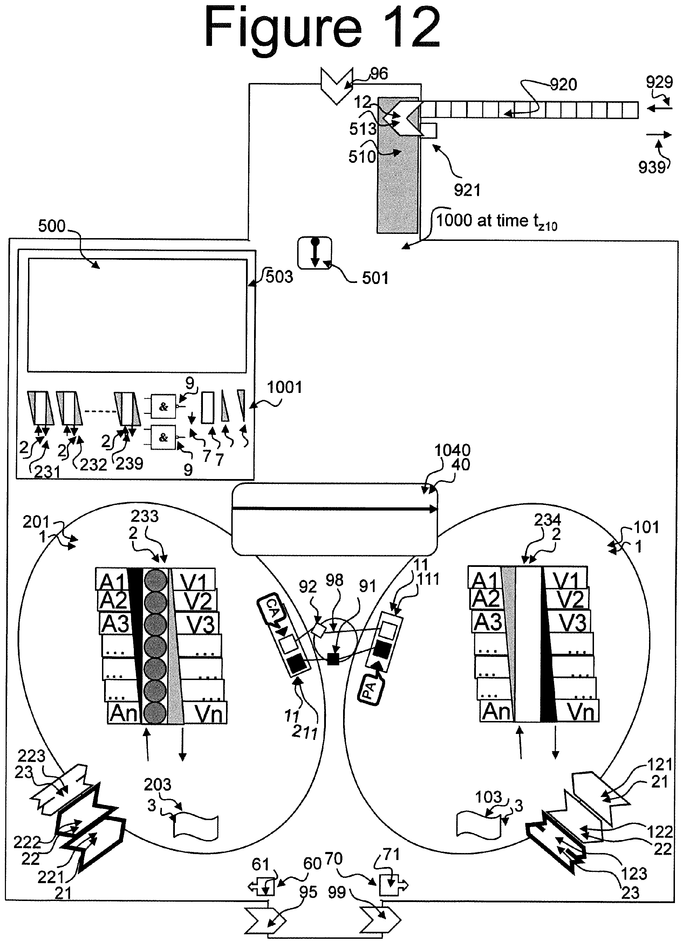

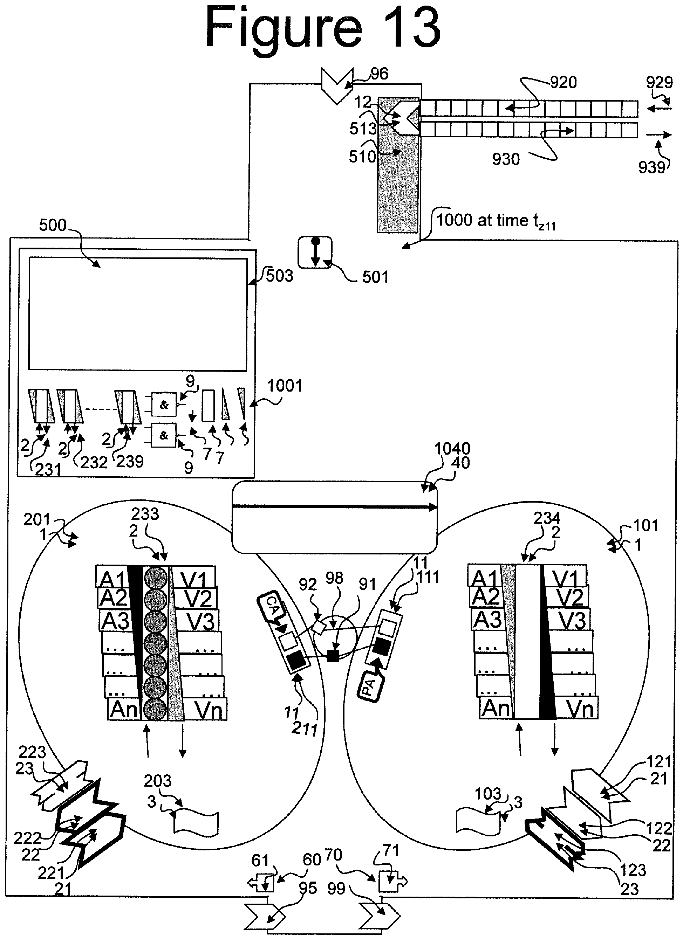

Embodiment of the scheduler 1000 according to the invention showing the scheduler 1000 also at the time t_{z8} which is the same time as in Figure 9. The only difference is that the figure 10 provides an expanded view of the scheduling counter mechanisms 233 and 234, showing that scheduling counter mechanism 233 is an decrementing counter and scheduling counter mechanism 234 is a incrementing counter (visualized by the downward black triangle for decrementing and by the upward black triangle for incrementing counter), and that they comprise a multiplicity of n attribute-value pairs, namely the n attribute value pairs (A₁, V₁), (A₂, V₂), (A₃, V₃), ...,(Aₙ, Vₙ). This shows that the scheduling counter mechanism is fully programmable, including optionally also the crementation direction of the counter. However, it is also possible to use programmable scheduling counter mechanisms without programmable crementation direction, if that is more resource efficient. For better visualization and understanding of the scheduling counter mechanism in the subsequent figures, it is assumed that one of the scheduling counter mechanism attributes (eg the attribute A₆) defines the size of the scheduling counter mechanism with a binary exponent and with a value 3, e.g.

A₆ = counter_size_in_binary_format and V₆ = 3 (this means the scheduling counter mechanism has a size of 8 as 2 exp 3 = 8, which means that the scheduling counter mechanism can count from 7 to 0 (and will not count lower - rather return a "FALSE" when trying to count lower. This is indicated by the two arrows at the bottom of the scheduling counter mechanism 233 and 234, which indicate that the scheduling counter mechanism offers a method "Count (L)" which tries to crement the scheduling counter mechanism by the integer argument L (length), and if successful, which means no scheduling counter mechanism overflow (for incrementing crementation direction) or underflow (for decrementing crementation direction) has occurred, the function "Count" will return TRUE, otherwise FALSE (and will not have cremented. Therefore the scheduling counter mechanism is protected against counter overflow or counter underflow, as it is up to the caller of the function to react when the function call returns a FALSE.

### Figure 11

Embodiment of the scheduler 1000 according to the invention showing the scheduler 1000 at a time t_{z9} between the time t_{z8} and the time t₂, where the where the time t_{z89} is the time where an instance of a resource detection and allocation function 12, namely a first instance of a resource detection and allocation function 513 detects a first unallocated resource unit 921. The resource detection and allocation function 513 is one of a multiplicity of instances of the resource detection and allocation function 12 - with a minimum of one - which are comprised in a demand allocation function 510, which itself is comprised in the scheduler 1000. The first unallocated resource unit 921 is comprised in a first stream 920 of unallocated resource units of a first resource unit type that move from the future towards the present moment in time in the reverse time direction 929 which is the direction of the movement of the first unallocated resource unit 921 through the time dimension from the future to the present moment. Prior to the time t_{z8} the source of the first stream 920 may have been disabled, for example a disabled transmission link in a network such as a radio link between an antenna and a number of mobile stations in the area covered by the antenna where the antenna is comprised in a mobile network, or a not yet enabled stream of normalized compute cycles that can be scheduled by a hypervisor.

### Figure 12

Embodiment of the scheduler 1000 according to the invention showing the scheduler 1000 at a time t_{z10} between the time t_{z9} and the time t₂, where the where the time t_{z10} is the time when the first unallocated resource unit 921 comprised in the first stream 920 of unallocated resource units of a first type starts to perish because it has not been allocated by the unallocated resource detection and allocation interface 514. Thus this unallocated resource unit starts to get wasted as is just passing the point in time t₁₀ which is the last time where it could have been allocated in this embodiment, where preferably no partial allocation is allowed.

### Figure 13

Embodiment of the scheduler 1000 according to the invention showing the scheduler 1000 at a time t_{z11} between the time t_{z10} and the time t₂, where the where the time t_{z11} is the time when the first unallocated resource unit 921 has already moved so far out towards the past that it is no longer visible in the first stream 930 of perished resource units , which are moving in the direction 939 of the time dimension from presence to past.

### Figure 14

Embodiment of the scheduler 1000 according to the invention showing the scheduler 1000 at a time t_{z12} between the time t_{z11} and the time t₂, where the time t_{z12} is the time when a first demand 850 comprising multiple demand units starts to arrive at the scheduler 1000, more precisely when a first resource usage demand 850 comprising multiple resource usage demand units starts to arrive at the scheduler, with a very first resource usage demand unit 858 being the first resource usage demand unit that starts to arrive at the time t_{z12} at an instance of a demand receiver interface 13, namely at a first demand receiver interface 521, which is comprised in a demand receiver function 520. The demand receiver function 520 is comprised in the scheduler 1000 and comprises multiple with a minimum of one instance of the demand receiver interface 13, namely the first demand receiver interface 521, a second demand receiver interface 522 and a third demand receiver interface 523. The purpose of a scheduler is to schedule demands such as the demands 850, 860 and 870, which may arrive in parallel via multiple interfaces and compete for access to the unallocated resource usage units that are scheduled by the scheduler. The most simple scheduling method is First-In First-Out (FIFO), and the scheduler 1000 is at time t_{z12} configured with an instance of a scheduling mechanism 40 which is a first queueing mechanism 1040 that supports only enqueueing at the tail and dequeuing at the head of the queue - which results in FIFO-scheduling. It should be noted that the demand 870 is a demand that carries some priority context field with a higher priority than the demands 850 and 860, indicated by thicker lines of the demand units comprised in demand 870. The task of the scheduler 1000 is to decide, in which sequence the demands get satisfied, in particular whether or not the higher priority demand 870 shall get satisfied prior to the normal priority demand 860. But since the queueing mechanism 1040 only supports FIFO-scheduling, this priority context field is currently ignored. It is anyway clear that the demand 850 will get satisfied first, because there are no demands waiting in buffer 500, and the demand 850 is just starting to arrive at the demand receiver interface 521 comprised in the demand receiver function 520. The demand receiver function may already start to store the arriving demand 850 at the location 503 but preferably waits till the demand has fully arrived.

### Figure 15a and 15b

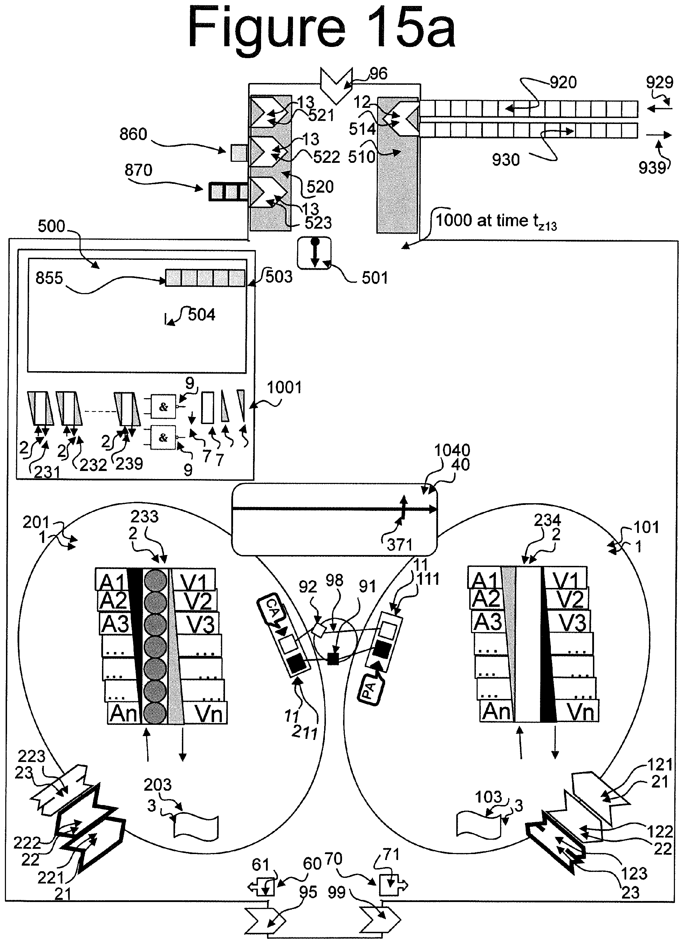

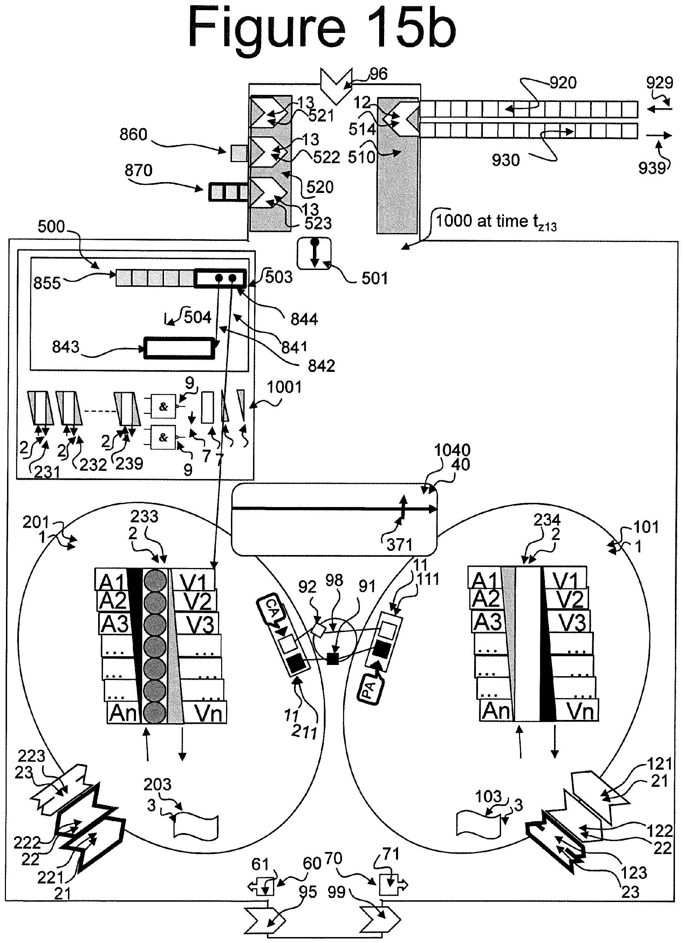

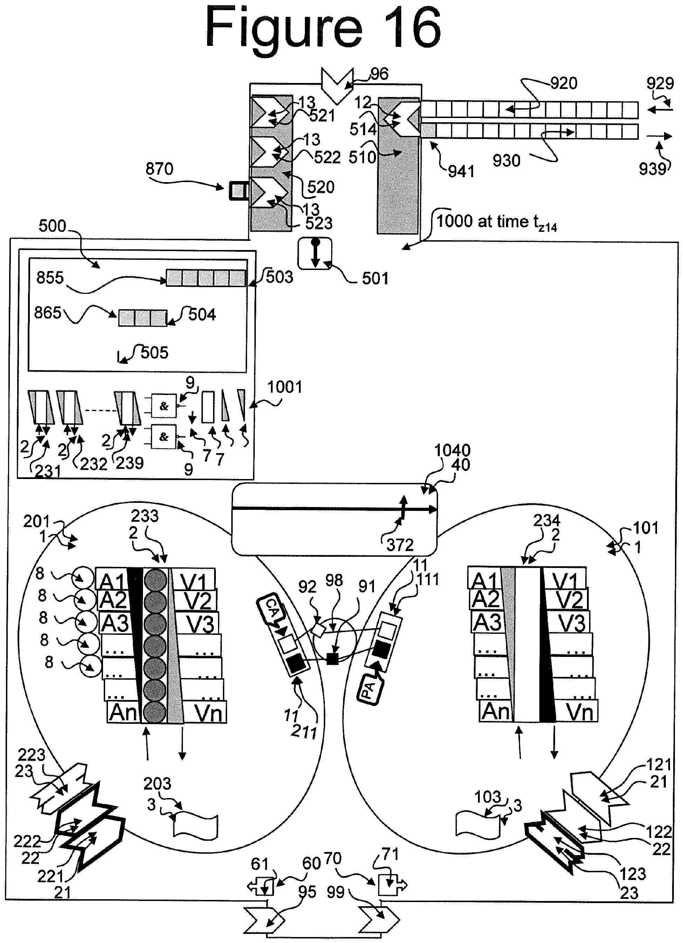

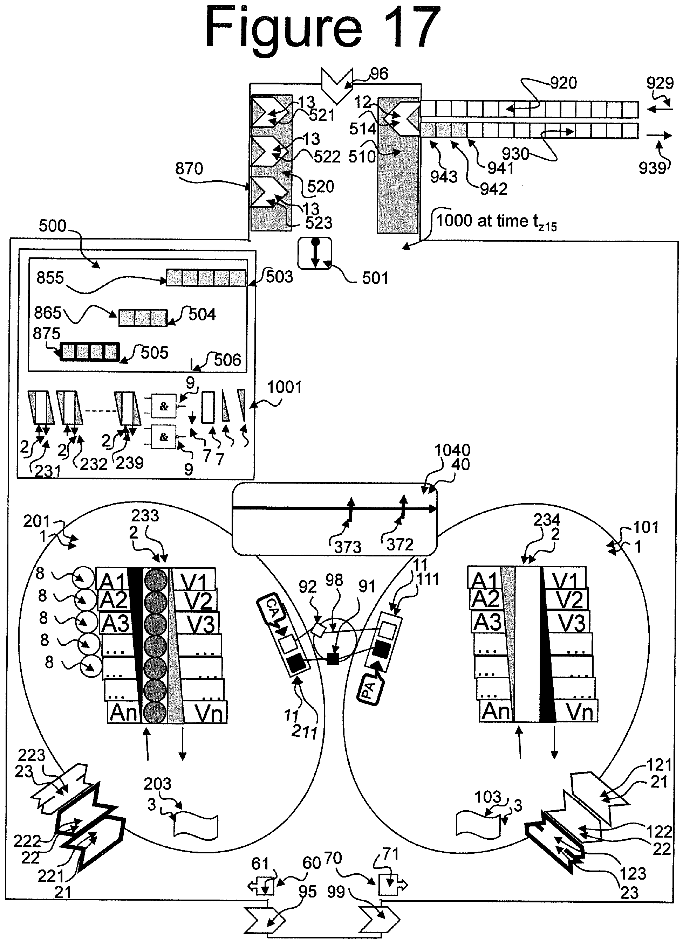

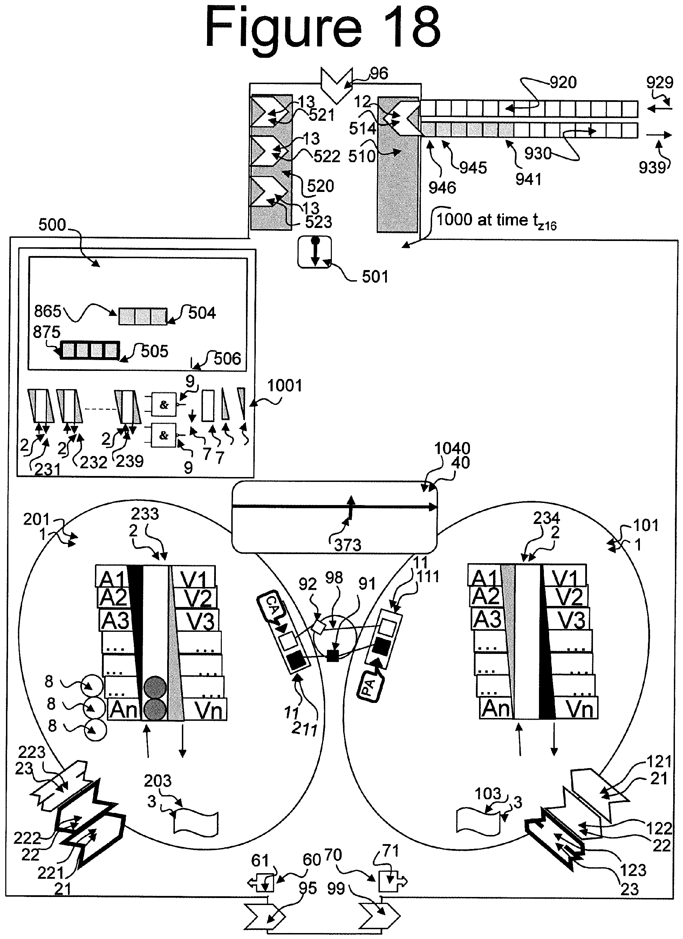

Embodiment of the scheduler 1000 according to the invention showing the scheduler 1000 at a time t_{z13} between the time t_{z12} and the time t₂, where the time t_{z12} is the time when the demand 850 has completed arrival, and has been stored in the buffer 500 as buffered demand 855 - including a preceeding buffered demand context field 844. The buffered demand context field 844 has a fixed length and comprises 2 pointer. The first comprised pointer is a pointer 841, which points to the scheduling counter mechanism that shall be used for counting at demand satisfaction time the amount of resource usage units allocated and consumed for demand satisfaction. This first pointer is referred to as the pointer to the demand associated scheduling counter mechanism, or shorthanded as counter pointer. As can be seen, the counter pointer 841 currently points to the counting mechanism 233 in the currently-active partition 201. The second comprised pointer is a pointer 842 which points to an optional variable length extension of the buffered demand context field 844. The pointer 842 is referred to as context field extension pointer, and points to a variable length extension field 843. This variable length extension field 843 is an optional extension of the buffered demand context field 844. When the value of the context field extension pointer 842 is 0, then the optional extension field is empty and does not exist. This is indeed the case at the current time t_{z13}, because the scheduler 1000 currently only has 2 partitions and therefore no next-active partition. It must be noted that for simplification of the figures, the details of the buffered demand context field are only shown in figure 15. In all subsequent figures, the details of the buffered demand context field is not being shown, however always present with every buffered demand. The pointer 371 - also referred to as demand pointer - points to the buffered demand - always including the preceeding fixed length buffered demand context field, this means that the buffered demand including the buffered demand context field starts at the buffer location 503. The pointer 371 points to the address of the buffer location 503, where the buffered demand is stored in the described way. The pointer 371 is referred to either as pointer to the buffered demand or short-handedly also as demand pointer, and it does not only point to the demand, but also to the demand context field, including indirectly to an optional variable length extension of the demand context field. The demand pointer 371 has been enqueued to an instance of a queueing mechanism 40, namely to the queueing mechanism which is associated with the currently-active partition 201 - regardless of the fact that the same queuing mechanism is also associated with partition 101, as indicated in the figure 15 by a corner of the queueing mechanism being located inside the partition. Latest by the time of complete demand arrival the length of the demand 850 is known. The length L of the demand is the amount of demand resource usage units comprised in the demand, in case of demand 850 this length L is 5. The length L gets stored in the demand context field. Before storing the demand as buffered demand, the next free location in the buffer where to store an arrived demand as buffered demand has to be determined, and a new next free location in the buffer also has to be determined prior to starting to store the demand as buffered demand. A new free location had been determined based on the length of the arrived demand and the length of the fixed length demand context field This new next free buffer location 504 has meanwhile been stored in the register 501. The demand receiver function 520 triggers to all partitions an enqueue request via a broadcast mechanism included in scheduler 1000. All instances of scheduling partition 1 with an activated enqueue-handler instance 21 receive and honor the enqueue request. Due to the partition 201 at time t_{z13} having the role "currently-Active" the demand pointer enqueuer 221 is the only partition that receives the broadcasted enqueue request. The demand pointer 371 is enqueued to the queuing mechanism 1040 which is associated with the partition 201. The demand pointer 371 points to the location 503 where the demand that has arrived as demand 850 is stored as buffered demand 855 - including the length L=5. As the queueing mechanism is a simple FIFO queueing mechanism comprised of a single queue, the enqueue appends the pointer to the tail of the queue. As the queue had previously been empty, it means that the demand pointer 371 immediately arrives at the head of the queue. This arrival of a pointer in the currently-active queue mechanism is indicated to the demand allocation function 510 via a hardware or software semaphore and trigger the demand allocation function 510 to start serving the active queue mechanisms immidiately or latest as soon as unallocated resource units become available. As no next-active partition is present, no enqueue to next-active partitions has to be considered. The scheduler determines that no enqueuer revocation.

### Figure 16

Embodiment of the scheduler 1000 according to the invention showing the scheduler 1000 at a time t_{z13} between the time t_{z14} and the time t₂, where the time t_{z14} is the time when the scheduler 1000 has dequeued the first demand pointer 371 and has retrieved the demand 855 and the associated length L=5 from the buffer, but not yet deleted in the buffer, because it has not yet been successfully satisfied. And where a second demand 860 has completed arrival and has been buffered and a demand pointer 372 has been enqueued that points to the buffer location 504 where the demand 860 is stored as buffered demand 865, where the enqueue operation has been done in the same way as previously described for demand pointer 371. The dequeue operation for the demand pointer 371 - which is no longer queued - has worked as follows: During times when a semaphore indicates that the active queue mechanism is not idle, each time an unallocated resource gets detected by the resource detection and allocation interface 514 comprised in the demand allocation function 510 it broadcasts a dequeue request to all instances of the demand pointer dequeuer 22. The currently-active demand pointer dequeuer 222 acts upon the request and selects the queueing mechanism associated with the partition 201, which is the queueing mechanism 1040. The demand pointer dequeuer 222 has at time t_{z14} performed the dequeue operation to the queueing mechanism 1040 and obtained the demand pointer 371. The demand dequeuer 222 retrieves with the demand pointer 371 which points to buffer location 503 the buffered-demand 855 and the associated demand length L=5. The demand dequeuer 222 performs a function COUNT(5) to the scheduling counter mechanism 233. As the scheduling counter mechanism 233 is programmed to count with prior reservation and auto-confirm, the function call COUNT(5) leads to the scheduling counter 233 increasing a second internal counter referred to as reservation counter, which has the same size as the main counter by 5. This is visualized by by associating 5 instances of a reservation token 8 to the scheduling counter mechanism 233. The reservation counter counts the reserved but not yet confirmed count operations. This reservation is visualized by 5 instances of a reservation token 8 being added to the scheduling counter mechanism 233. The demand dequeuer 222 hands the pointer length L and the pointer to the buffered demand to the demand allocation function 510 which hands this to the resource detection and allocation interface 514 which allocates 5 unallocated resource usage units for the demand satisfaction of the demand 850 stored in buffer 500 as buffered demand 855. At the time t_{z14} the resource detection and allocation interface 514 has already started demand satisfaction and has already consumed a first resource usage unit for demand satisfaction, namely the resource usage unit 941.

### Figure 17

Embodiment of the scheduler 1000 according to the invention showing the scheduler 1000 at a time t_{z15} between the time t_{z14} and the time t₂, where the time t_{z15} is the time when the scheduler 1000 has consumed two more of the 5 resource usage units previously allocated for demand satisfaction of the first demand 850, namely the resource usage units 942 and 943. It has now completely received the demand 870 and has buffered this demand by storing it as buffered demand 875 including the length L=4 at storage location 505 , and by enqueueing a pointer to buffer location 505 as demand pointer 373 in the queueing mechanism 1040 using the same procedure that has been used previously for enqueueing the demand pointers 372 and 371 - via the enqueuer handler 221 to the queueing mechanism associated with the partition. The register 501 now points to a next free location 506 in the buffer.

### Figure 18

Embodiment of the scheduler 1000 according to the invention showing the scheduler 1000 at a time t_{z16} between the time t_{z15} and the time t₂, where the time t_{z16} is the time when the scheduler 1000 has completed the demand satisfaction of the first demand 850 and started the demand satisfaction of the second demand 860. The resource detection and allocation interface 514 has consumed all 5 allocated resource usage units (including the resource usage units 941 and 945). It has also already started with demand satisfaction of the second demand 860 that is buffered as buffered demand 865 and has already consumed 1 resource usage unit, namely the resource usage unit 946, for demand satisfaction of the second demand 860. Even prior to completion of demand satisfaction of the first demand 850 the resource detection and allocation function 510 has been looking ahead and already allocated the next 3 unallocated resource usage units to the second demand 860. This has been done in detail in the following way: 1. When having been informed by the resource detection and allocation interface 514 of the upcoming resource detection (this may occur even prior to the unallocated resource arriving at the resource detection and allocation interface 514) the resource detection and allocation function 510 broadcasts a dequeuer request. The currently-active demand pointer dequeuer 222 acts upon the request and the queueing mechanism associated with the partition 201, being the queueing mechanism 1040. The demand pointer dequeuer 222 has at time t_{z16} performed the dequeue operation to the queueing mechanism 1040 and obtained the demand pointer 372. The demand dequeuer 222 retrieves with the demand pointer 372 which points to buffer location 504 the buffered-demand 865 and the associated demand length L=3. The demand dequeuer 222 performs a function COUNT(3) to the scheduling counter mechanism 233, which leads to the scheduling counter mechanism 233 - programmed to count with prior reservation and auto-confirm - to interpret the new reservation as in implicit confirmation of the previous reservation and to a new reservation with length L=3. This results in the scheduling counter mechanism 233 removing the 5 instances of reservation token 8 and results in the crementation of the counter by these 5 tokens, as it is a decrementing counter 5 tokens have been decremented reducing F=7 to F=2 (F is derived from the fill rate of a token bucket). The number 5 is the Length L=5 of the first demand which caused the reservation of 5 instances of reservation token 8 at the time when the demand satisfaction started. The function COUNT(3) of course also results in 3 instances of reservation token 8 being newly added (or the respective reservation counter incremented by 3). The currently-active demand dequeuer 222 handed the demand pointer 372 to the resource detection and demand allocation function 510. The demand allocation function 510 has handed the pointer to the resource detection and allocation interface 514, which has finally started to fetch the demand. It has already started with the demand satisfaction whereby it has already consumed one resource usage unit, namely the resource usage unit depicted as resource usage unit 946 in the figure.

### Figure 19

Embodiment of the scheduler 1000 according to the invention showing the scheduler 1000 at a time t_{z17} between the time t_{z16} and the time t₂, where the time t_{z17} is the time when the scheduler 1000 has completed a usage period change and also has completed the auto-confirm triggered by the usage period change. By the time t_{z17} a second resource usage unit 947 has been consumed for demand satisfaction of the buffered demand 865. Triggered by the usage period change the bit 91 is now having the value TRUE and the bit 92 now having the value FALSE, resulting in the revolving role detection function 211 now detecting the role "Previously-Active" and the revolving role detection function 111 now detecting the role "Currently-Active". This has resulted in the internal export&reprogramming interface 223 now being the currently-active internal export&reprogramming interface, the first demand pointer enqueuer 121 now being the currently-active demand pointer enqueuer, and the first demand pointer dequeuer 122 being the currently-active demand pointer dequeuer. For the purpose of creating a usage data record the currently-active internal export&reprogramming interface 223 has first auto-confirmed all reservation tokens in all scheduling counter mechanisms of the partition, and then has read-out all counters where a counting has taken place in the previous usage period. The current figure shows the situation after the auto-comfirm of the reservation tokens has been done, but before the read-out and reset of the scheduling counter mechanisms and therefore before creation of the usage data record. As the auto-confirm creates a counter underrun of the decrementing scheduling counter mechanism 233, an under/overrun accounting record 78 is created by the currently-active internal export&reprogramming interface. This is a special type of usage data record that captures the fact of a counter under/overrun. The counter underrun (by one token) is implemented in the scheduling counter mechanism 233 resulting in the scheduling counter mechanism now having one less token than the maximum count, in this case 6 tokens or a scheduling counter mechanism Fill attribute value F = 6. It should be noted that this embodiment of the counter shows a scheduling counter mechanism that is protected against under/overrun, and always returns a TRUE to the function call COUNT-WITH-RESERVATION-AUTOCONFIRMED(). Combined with the strategy to capture in usage data records the last amount autoconfirmed reservation tokens and the strategy to assume a new allocation proofes that the previous allocation was successful, this constitutes a very efficient method for counting whereby enabling a charging system to guarantee that no overcharging can happen (charging for an uncompleted demand satisfaction). The activated scheduling configuration specification 203 continues in the new scheduling cycle, based on information contained in the specification that it shall be repeated indefinitely until a different specification is received and installed for a future first usage period after the periodic repetititon has ended.

### Figure 20

Embodiment of the scheduler 1000 according to the invention showing the scheduler 1000 at a time t_{z18} between the time t_{z17} and the time t₂, where the time t_{z18} is the time when the scheduler 1000 has performed the Read-Out&Reset of the scheduling counter mechanism 233, more precisely the internal export&reprogramming interface 223 has performed the Read-Out&Reset and has put the result of the Read-Out into an usage data record 79. For some reason, the usage data record 78 is still not exported by the external export interface 99, even though it could have meanwhile been exported.

### Figure 21

Embodiment of the scheduler 1000 according to the invention showing the scheduler 1000 at a time t_{z19} between the time t_{z18} and the time t₂, where the time t_{z19} is the time when the scheduler 1000 has completed the export of usage data record 78 via the external export interface 99 and has completed the demand satisfaction of buffered demand 865 - which means that the last resource usage unit 948 that was allocated for the demand satisfaction of buffered demand 865 has left the demand detection and allocation interface 914. As a result, the buffered demand 865 has been deleted in the buffer 500. The resource detection and allocation interface 514 detects unallocated resources latest at the time t_{z18} (or earlier by some kind of look-ahead) and triggers the currently-active demand pointer dequeuer 122 to dequeue the next demand pointer 373. The currently-active demand pointer dequeuer 122 has selected the queuing mechanism 1040 via the scheduling counter mechanism attribute pointing to the queuing mechanism 104 and has dequeued the demand pointer 373 and has looked up the associated buffered demand 875 in the buffer 500 at location 505, where it is stored including the Length L=4. The currently-active demand pointer dequeuer 122 crements the scheduling counter mechanism 234 by this Length L=4 using the function call COUNT-WITH-RESERVATION-AUTOCONFIRMED(4). As a result, 4 reservation tokens 8 get associated with the scheduling counter mechanism 234. The currently-active demand dequeuer 122 handed the demand pointer 372 to the resource detection and demand allocation function 510 which hands the pointer to the resource detection and allocation interface 514, which is at the time t_{z18} starting to fetch the buffered demand 875 at the buffer location 505.

### Figure 22

Embodiment of the scheduler 1000 according to the invention showing the scheduler 1000 at a time t_{z20} between the time t_{z19} and the time t₂, where the time t_{z20} is the time when the scheduler 1000 has completed the export of usage data record 79 via the external export interface 99 and has completed the demand satisfaction of the buffered demand 875, and therefore has deleted the buffered demand 875 in the buffer 500.

### Figure 23

Embodiment of the scheduler 1000 according to the invention showing the scheduler 1000 at a time t_{z21} between the time t_{z20} and the time t₂, where the time t_{z21} is the time when the scheduler 1000 has completed another usage period change and the auto-confirm of all reservation tokens associated with scheduling counter mechanism 234 which has been triggered by the usage period change. The time t_{z20} is the time just before the Read-Out&Reset of the scheduling counter mechanism 234 is occurring, which has also been triggered by the usage period change event, more precisely by the internal import&export interface 123 getting activated by the usage period change.

### Figure 24

Embodiment of the scheduler 1000 according to the invention showing the scheduler 1000 at a time t_{z22} between the time t_{z21} and the time t₂, where the time t_{z22} is the time when the scheduler 1000 or more precisely the internal export&reprogramming interface 123 has performed the Read-Out&Reset and has put the result of the Read-Out into an usage data record 80.

### Figure 25

Embodiment of the scheduler 1000 according to the invention showing the scheduler 1000 at a time t_{z23} between the time t_{z22} and the time t₂, where the time t_{z23} is the time when the scheduler 1000 or more precisely the external export interface 99 has exported the usage data record 80.

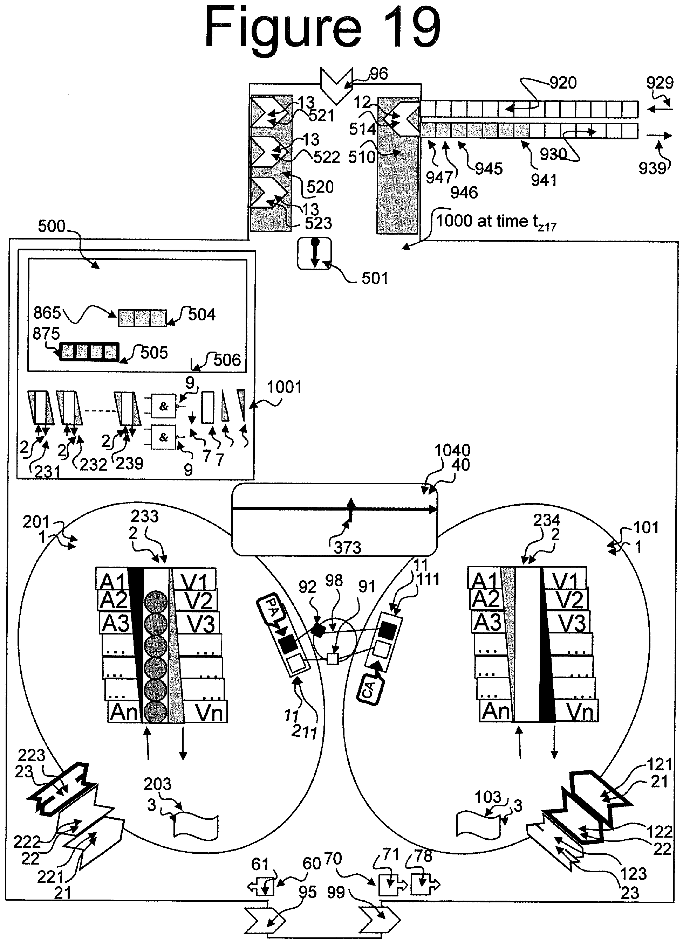

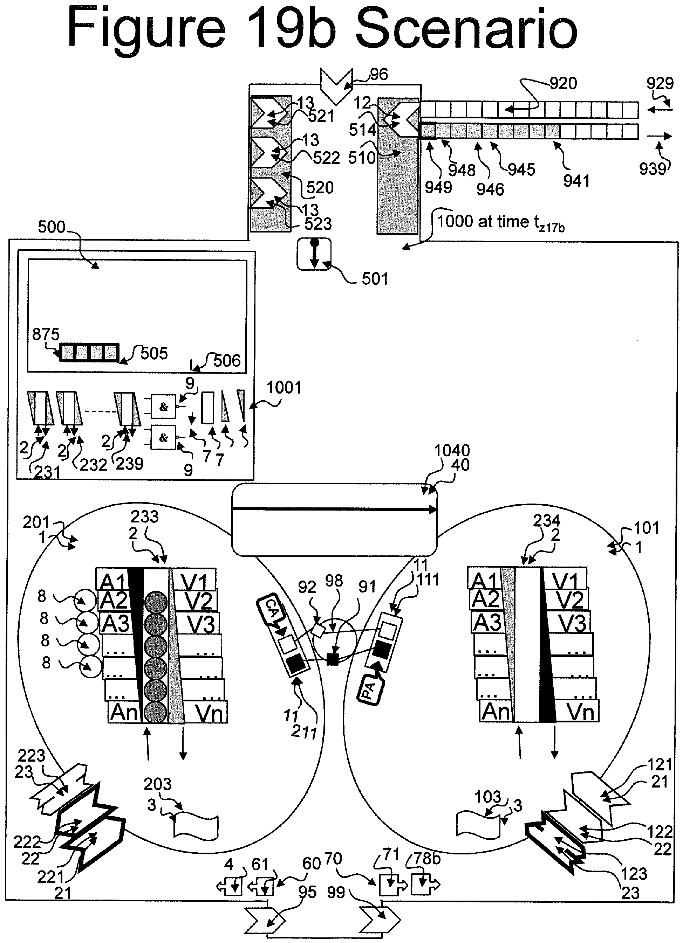

### Figure 19b (scenario with different timing of 2 usage period changes)

Embodiment of the scheduler 1000 according to the invention showing the scheduler 1000 at a time t_{z17b} between the time t_{z16} and the time t₂, where the time t_{z17b} is the time when the scheduler 1000 has completed the demand satisfaction of the second demand 860 and started the demand satisfaction of the third demand 870. The resource detection and allocation interface 514 has consumed all 3 allocated resource usage units (including the resource usage units 941 and 945) that have been allocated for the demand satisfaction of demand 860. It has also already started with demand satisfaction of the third demand 870 that is buffered as buffered demand 875 and has already consumed 1 resource usage unit, namely the resource usage unit 949, allocated for demand satisfaction of the second demand 870, more precisely allocated for demand satisfaction of the first demand usage unit of the buffered demand 875. Even prior to completion of demand satisfaction of the second demand 860 the resource detection and allocation function 510 has been looking ahead and already allocated the next 4 unallocated resource usage units to the third demand 870. This has been done in detail in the following way: 1. When having been informed by the resource detection and allocation interface 514 of the upcoming resource detection (this may occur even prior to the unallocated resource arriving at the resource detection and allocation interface 514) the resource detection and allocation function 510 triggers the broadcast of a dequeue request. The currently-active demand pointer dequeuer 222 acts upon the request and selects queuing mechanism associated with the partition 201, being the queueing mechanism 1040. The demand pointer dequeuer 222 has at time t_{z16b} performed the dequeue operation to the queueing mechanism 1040 and obtained the demand pointer 373. The demand dequeuer 222 retrieves with the demand pointer 373 which points to buffer location 505 the buffered-demand 875 and the associated demand length L=4. The demand dequeuer 222 performs a function COUNT-WITH-RESERVATION-AUTOCONFIRMED(4) to the scheduling counter mechanism 233, which leads to the scheduling counter mechanism 233 interpreting the new reservation as in implicit confirmation of the previous reservation and to a new reservation with length L=4. This results in the scheduling counter mechanism 233 removing the 3 instances of reservation token 8 and results in the crementation of the counter by these 3 tokens, as it is a decrementing counter 3 tokens have been decremented. This creates a counter underrun of the decrementing scheduling counter mechanism 233 by one token. As a result an under/overrun accounting record 78b is created by the currently-active internal export&reprogramming interface. This is a special type of usage data record that captures the fact of a counter under/overrun. The counter underrun (by one token) is implemented in the scheduling counter mechanism 233 resulting in the scheduling counter mechanism now having one less token than the maximum count, in this case 6 tokens or a scheduling counter mechanism Fill attribute value F = 6. The function COUNT-WITH-RESERVATION-AUTOCONFIRMED(4) also results in the scheduling counter mechanism 233 creating 4 instances of reservation tokens 8. The currently-active demand dequeuer 222 handed the demand pointer 373 to the resource detection and demand allocation function 510 which hands the pointer to the resource detection and allocation interface 514, which has finally started to fetch the buffered demand 875 and has already started with the demand satisfaction whereby it has already consumed one resource usage unit, namely the resource usage unit 949.

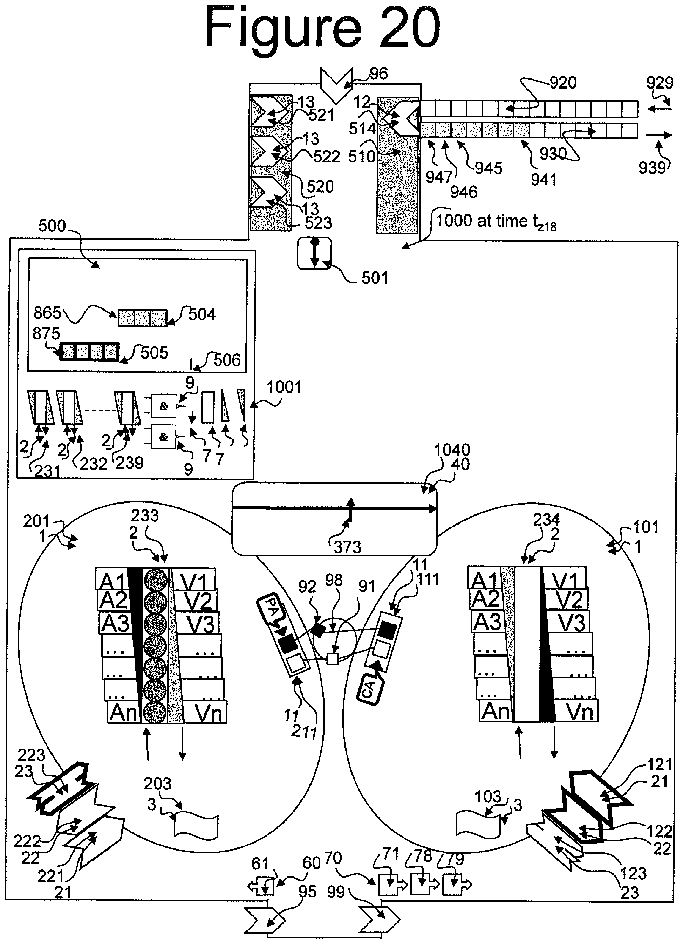

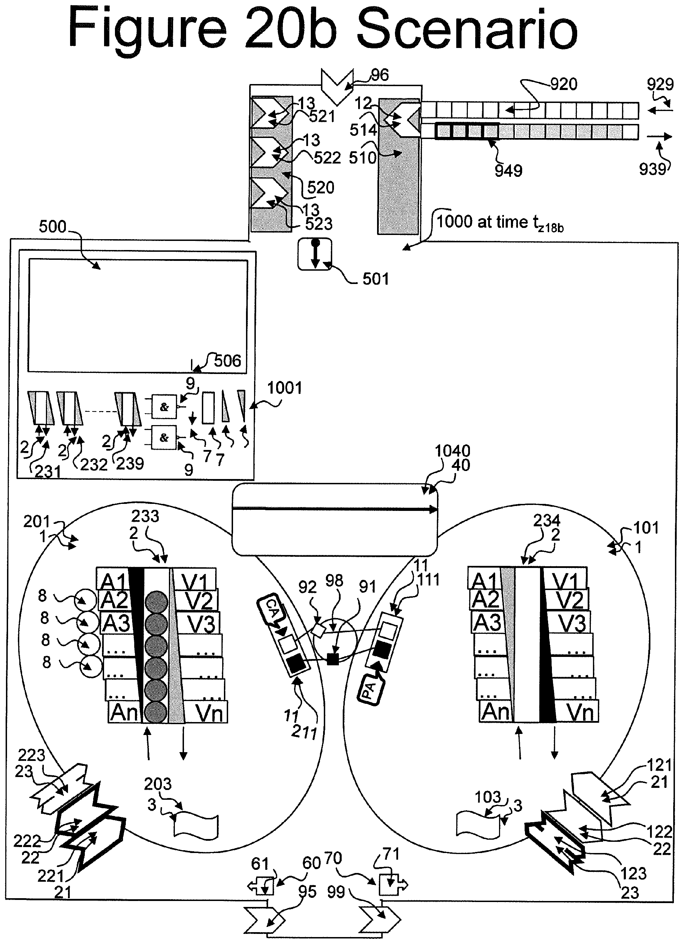

### Figure 20b (scenario with different timing of 2 usage period changes)

Embodiment of the scheduler 1000 according to the invention showing the scheduler 1000 at a time t_{z18b} between the time t_{z17b} and the time t₂, where the time t_{z18b} is the time when the scheduler 1000 has completed the demand satisfaction of the third demand 870 and has exported the usage data record 78b. The buffered demand 875 has been deleted in the buffer.

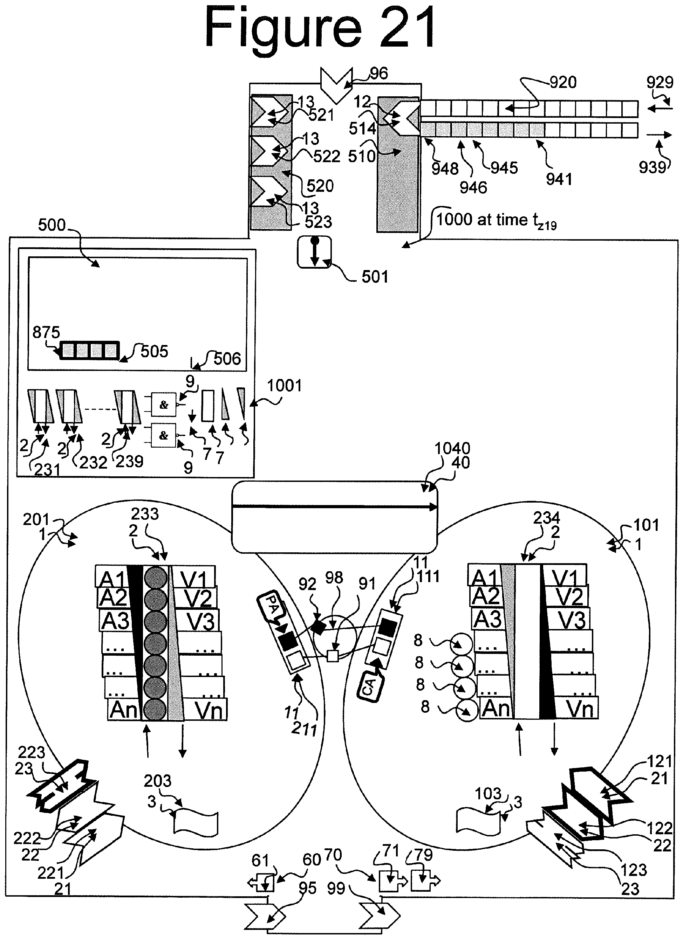

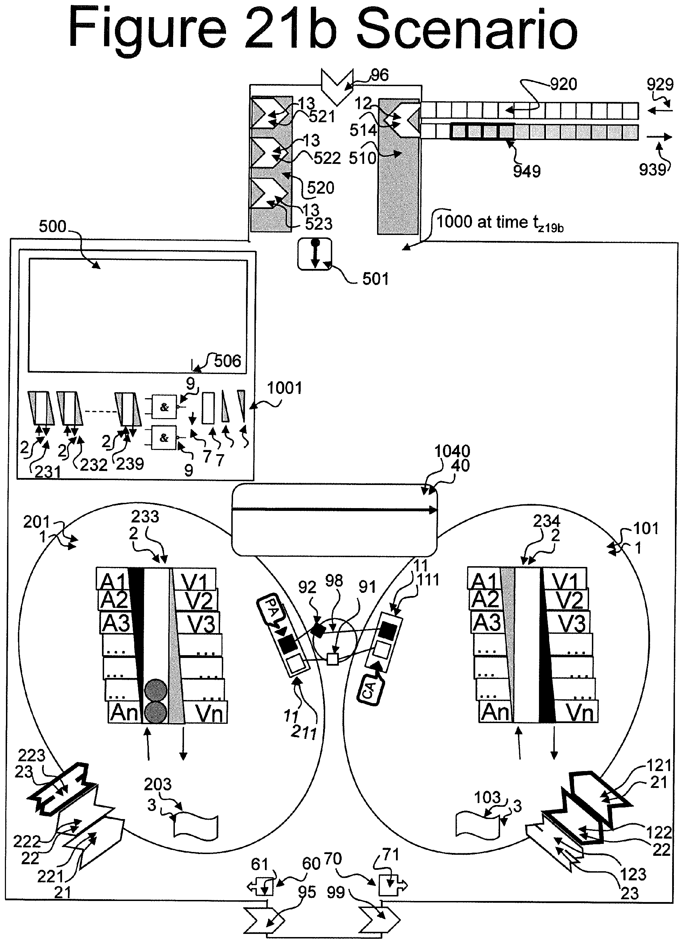

### Figure 21b (scenario with different timing of 2 usage period changes)

Embodiment of the scheduler 1000 according to the invention showing the scheduler 1000 at a time t_{z19b} between the time t_{z18b} and the time t₂, where the time t_{z19b} is the time when the scheduler 1000 has completed a usage period change , but has not yet performed the Readout&Reset of the scheduling counter mechanisms that also is triggered by the usage period change. The usage period change has been triggered by a shift operation in the usage period change mechanism 98, namely the bit 92 now having the value TRUE and the bit 91 now having the value FALSE. This results in the internal import&export interface 223 becoming activated and performing the auto-config for all instances of reservation tokens in the partition that is detecting the previously-active role, which means it has been auto-confirming the 4 reservation tokens of scheduling counter mechanism 233, leading to a decrementation of the scheduling counter mechanism 233 by 4. The current figure shows the situation just prior to the Read-Out & Reset operation which has also been triggered by the usage period change.

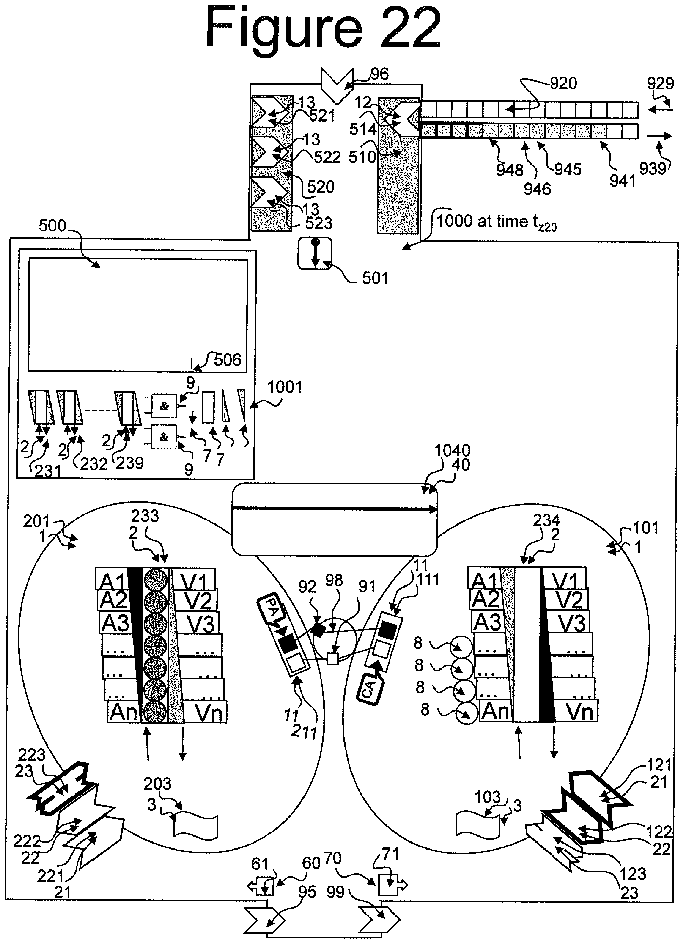

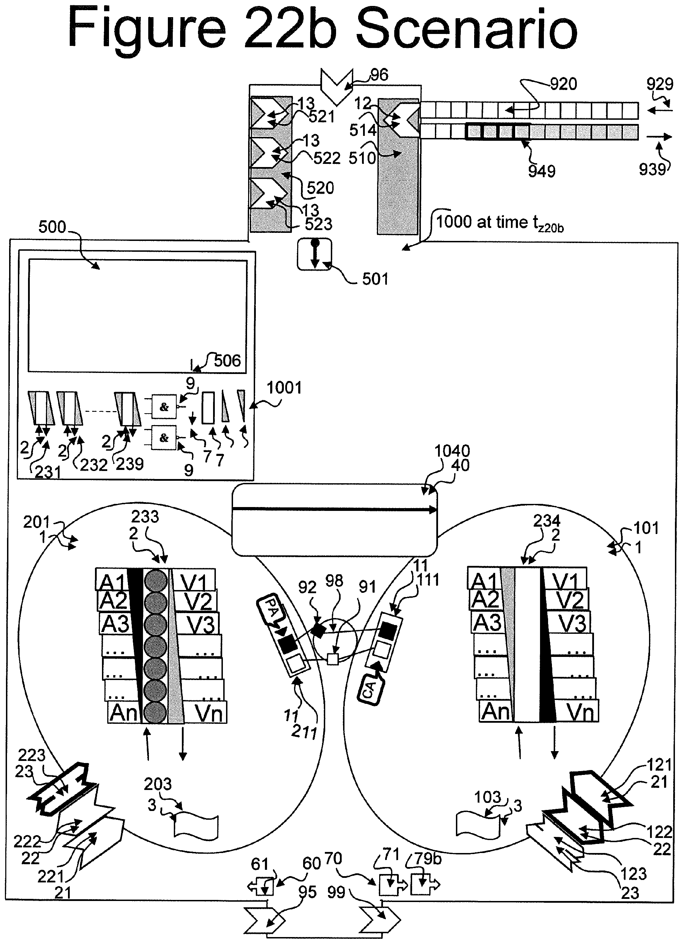

### Figure 22b (scenario with different timing of 2 usage period changes)

Embodiment of the scheduler 1000 according to the invention showing the scheduler 1000 at a time t_{z20b} between the time t_{z19b} and the time t₂, where the time t_{z20b} is the time when the scheduler 1000 has completed the Readout&Reset of the scheduling counter mechanisms and has created a usage data record 79b with the result of the readout.

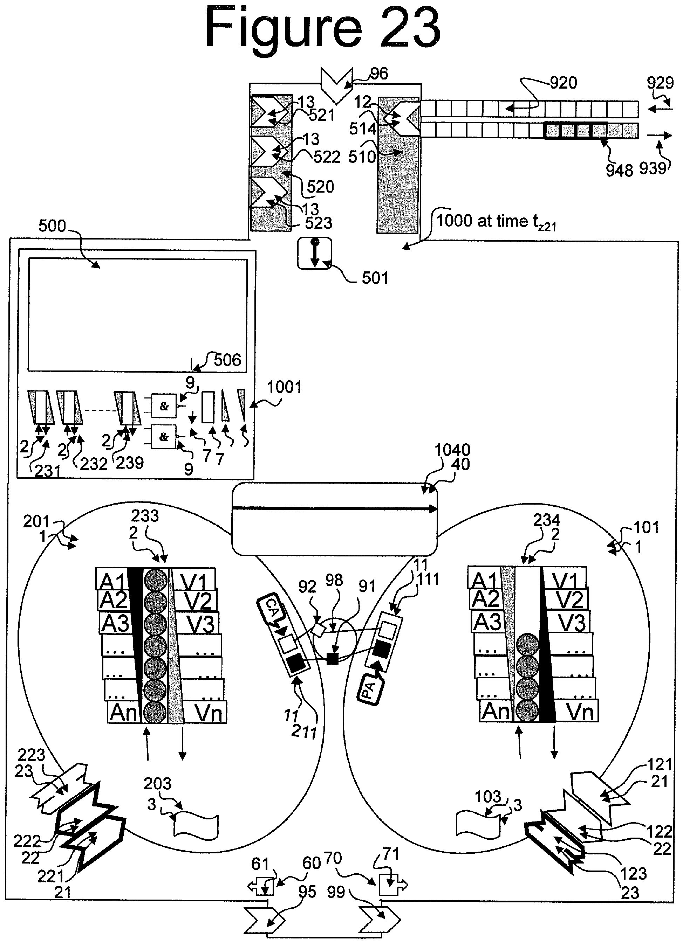

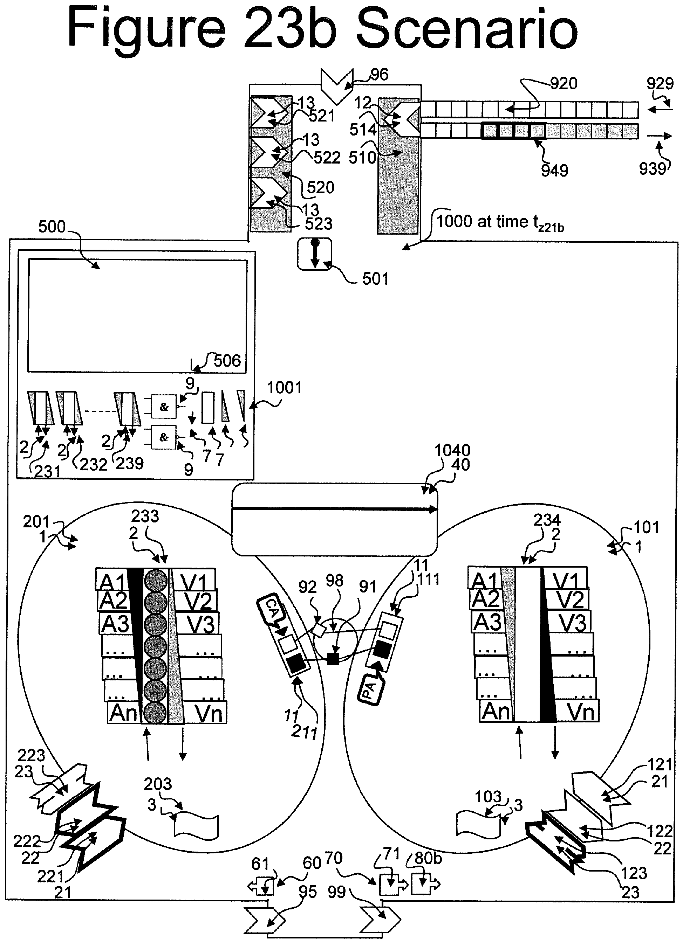

### Figure 23b (scenario with different timing of 2 usage period changes)

Embodiment of the scheduler 1000 according to the invention showing the scheduler 1000 at a time t_{z21b} between the time t_{z20b} and the time t₂, where the time t_{z21b} is the time when the scheduler 1000 has completed another usage period change, without reading any scheduling counter mechanism because no counting has taken place since the last usage period change. Preferably, a usage data record 80b is created to capture the stop time and sequence number of the usage period that has ended.

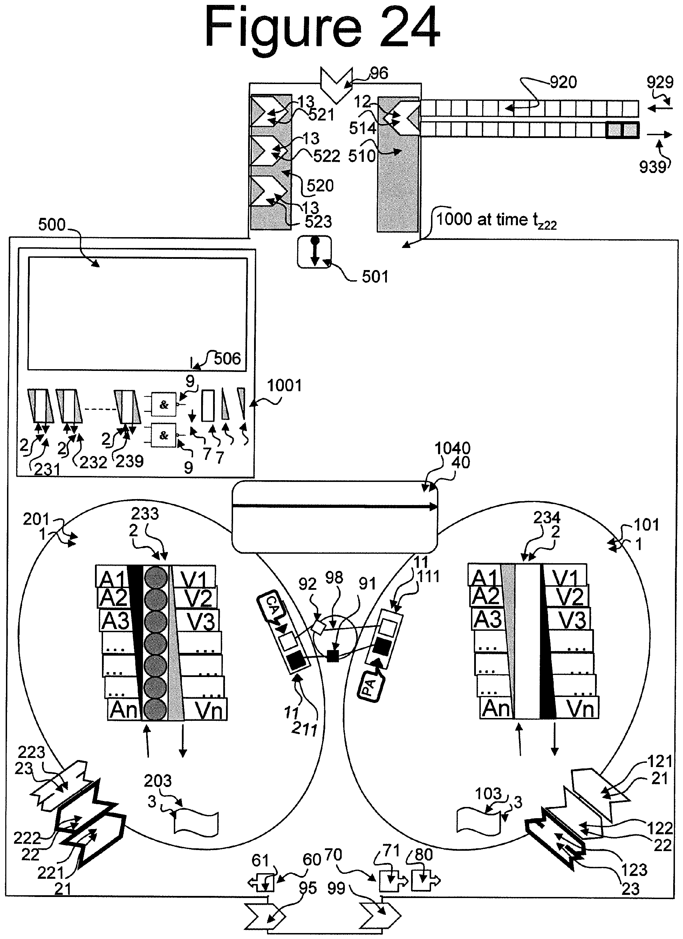

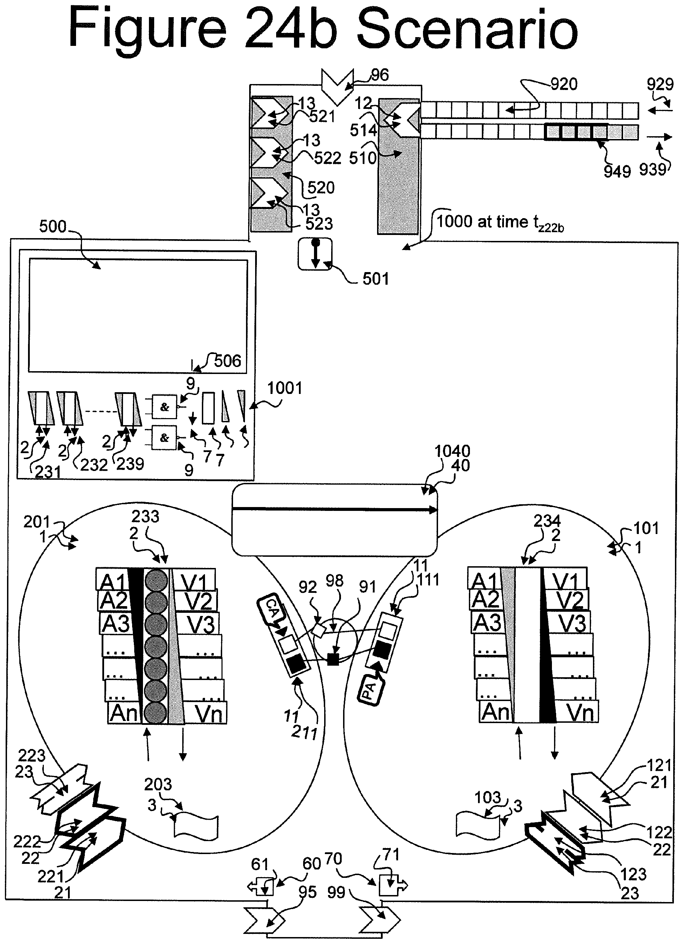

### Figure 24b (scenario with different timing of 2 usage period changes)

Embodiment of the scheduler 1000 according to the invention showing the scheduler 1000 at a time t_{z22b} between the time t_{z21b} and the time t₂, where the time t_{z22b} is the time when the scheduler 1000 has completed the export of usage data record 80b.

When compared with scenario a, the scenario b has resulted in the same result overall regarding the number of usage periods and the number of resource usage units consumed and documented in usage data records, however the in the scenario a the third demand has been counted in a different usage period than the first and second demand, whereas in scenario b all three demands have been counted in the same usage period. The both scenarios have been document in detail in order support to support the claim 1.

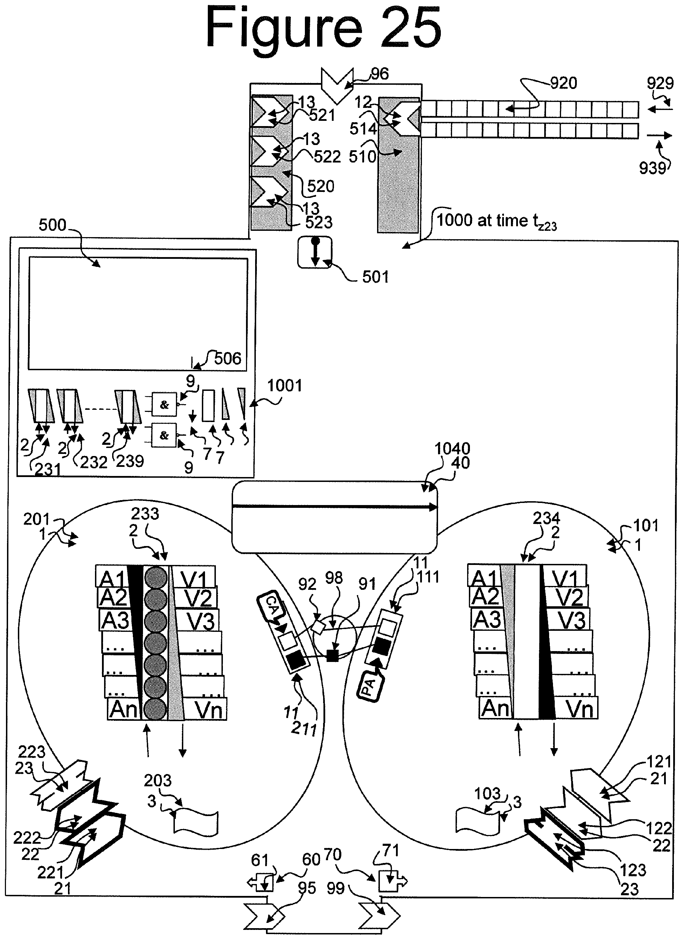

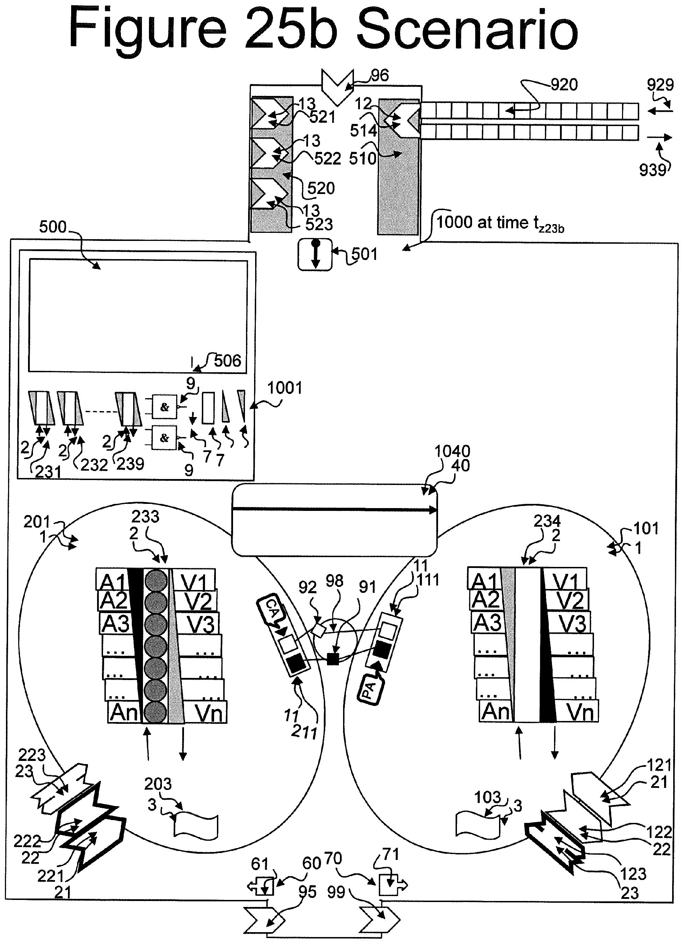

### Figure 25b (scenario with different timing of 2 usage period changes)

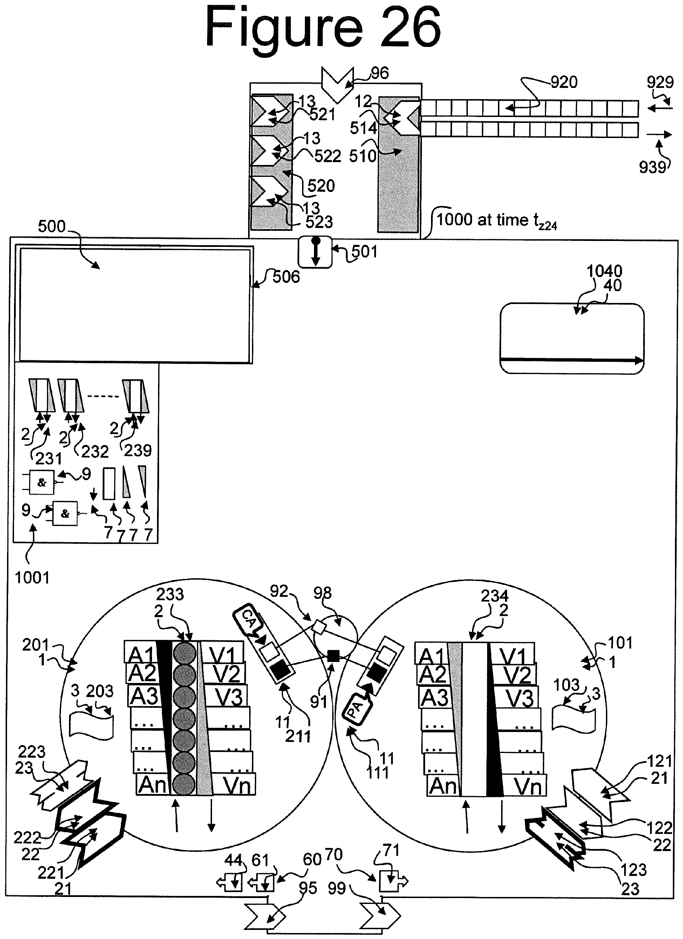

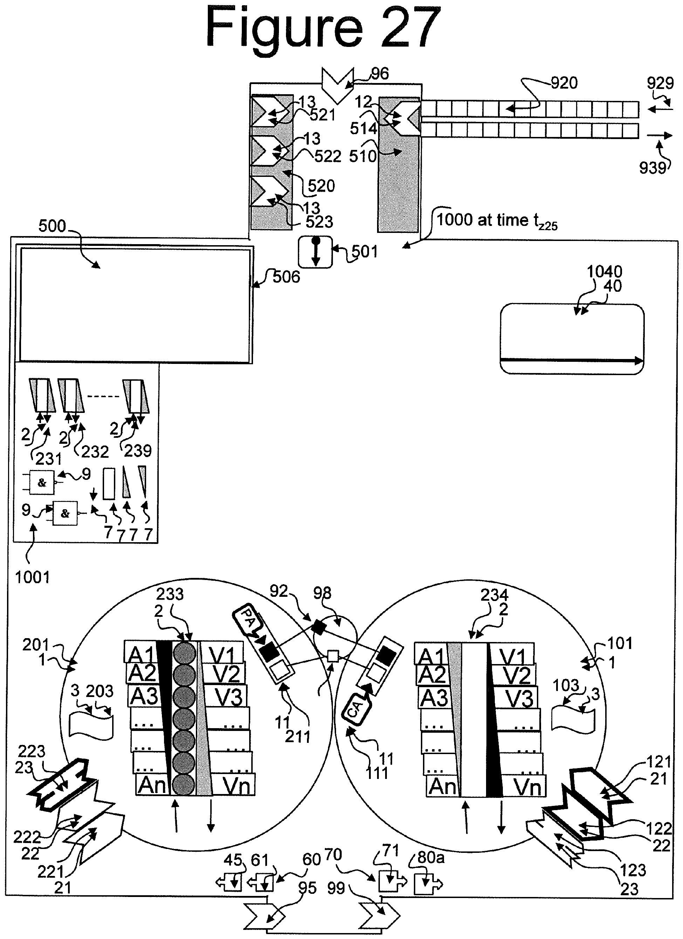

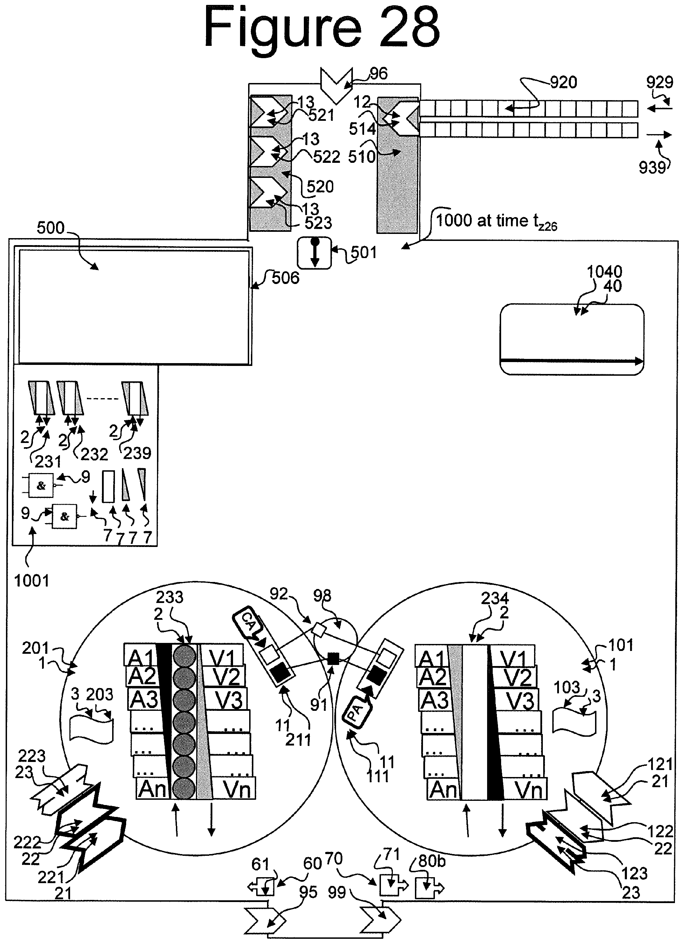

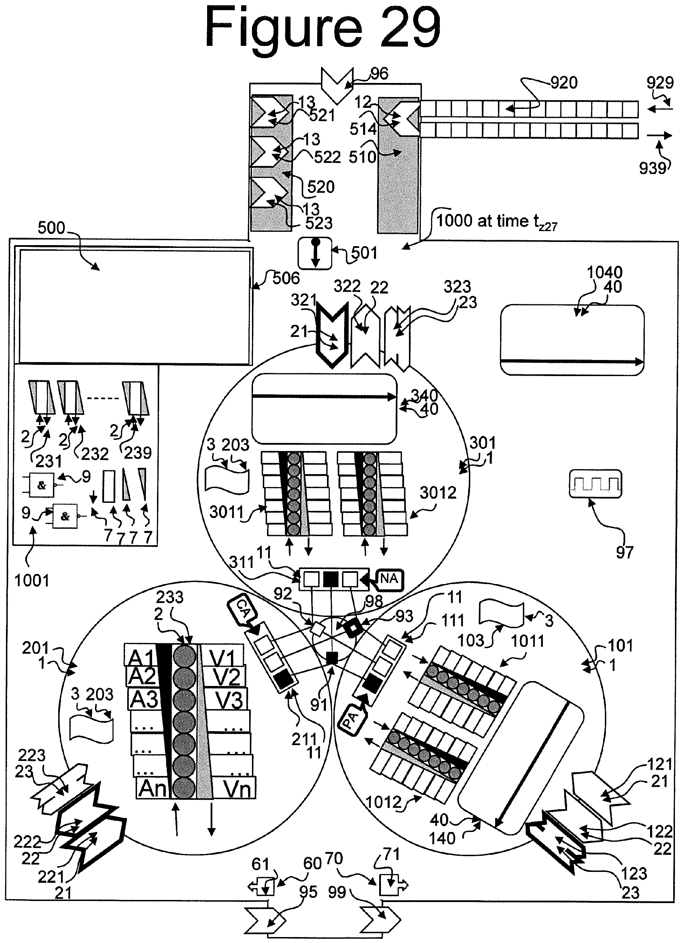

Embodiment of the scheduler 1000 according to the invention showing the scheduler 1000 at a time t_{z23b} between the time t_{z22b} and the time t₂, where the time t_{z23b} is a time where nothing has changed compared to t_{z22b} and where the Figure 25b is equivalent to the figure 25, so basically both scenarios "unite", and the scheduler can get reconfigured from a common base starting with figure 26.

### Figure 26 (both scenarios re-joined)

Embodiment of the scheduler 1000 according to the invention showing the scheduler 1000 at a time t_{z24} between the time t_{z23} (or T_{z23b}) and the time t₂, where the time t_{z24} is a time where a scheduling configuration specification 44 has been received by the scheduler 1000 via the external import interface 95, which specifies the upscaling of the scheduler from 2 partitions to 3 partitions, starting with the next usage period. The figure 26 gets slightly re-arranged to make room for visualizing this upscaling - but in figure 26 no changes occur except the receipt of the scheduling configuration specification 44. The scheduling configuration specification specified a usage period change at a pre-determined time t_{z25}. This empty usage period change is inserted for visualization reasons only. The scheduling configuration specification 44 specifies the following:
1. Do a usage period change at the future time t_{z25}
2. After the usage period change configure the partition currently in PA role in a way that the next time it will be detecting the role PA, it shall not create a usage data record if no usage has occurred in the preceding usage period where the partition had been in the role currently-active.

### Figure 27

Embodiment of the scheduler 1000 according to the invention showing the scheduler 1000 at a time t_{z25} between the time t_{z24} and the time t₂, where the time t_{z25} is the time where another scheduling configuration specification 45 has been received by the scheduler 1000 via the external import interface 95, after the empty usage period change specified in the scheduling configuration specification 44 has been executed and a usage data record 80a has been created. The scheduling configuration specification 45 specifies the following:
3. Apply the following changes:
a. Associate an instance of a queueing mechanism 40 to the partition in PA, namely an instance that gives preferential treatment to usage demands marked as high priority usage demands in a context field of the usage demand over usage demands with normal priority.
b. Add 2 scheduling counter mechanism to the partition currently in PA role, one for counting normal priority usage demands and one for counting high priority usage demands.
c. The next time when detecting the role PA in the partition that currently has the role PA (this is the partition 201), do not create a usage data record if no usage has occurred in the preceding usage period where the partition had been in the role currently-active.
d. None (placeholder)
e. upscale the scheduler from 2 partitions to 3 partitions by inserting a third partition between the partition in PA role and the partition in CA role, which has the role NA (next-active)
f. Associate an instance of a queueing mechanism 40 to the newly added partition (the partition 301), namely a queueing mechanism 340 that gives preferential treatment to usage demands marked as high priority usage demands in a context field of the usage demand over usage demands with normal priority.
g. Add 2 scheduling counter mechanism to the newly added partition, one for counting normal priority usage demands and one for counting high priority usage demands.
h. When detecting the role PA in the newly added partition, do not create a usage data record if no usage has occurred in the preceding usage period where the partition had been in the role currently-active.

### Figure 28

Embodiment of the scheduler 1000 according to the invention showing the scheduler 1000 at a time t_{z26} between the time t_{z25} and the time t₂, where the time t_{z26} is the time after the usage period change specified in the scheduling configuration specification 45 has been executed at the time specified in the scheduling configuration specification 45, however without having implemented any other actions specified in the scheduling configuration specification 45.

### Figure 29

Embodiment of the scheduler 1000 according to the invention showing the scheduler 1000 at a time t_{z27} between the time t_{z26} and the time t₂, where the time t_{z27} is the time when the changes specified in the scheduling configuration specification 45 have been implemented except the enablement of the bit 93, which is still disabled during the time where the newly added partition is not yet completely configured. If a usage period change would occurred during the time when the bit 93 is still disabled, the usage period change mechanism 98 and the revolving role detection functions 111 and 211 would continue to operate as if the scheduler had only 2 partitions. The following changes have been applied at time t_{z26}:
a. An instance of a queueing mechanism 40 has been associated to the partition in PA role (the partition 101), namely a queueing mechanism 140 that gives preferential treatment to usage demands marked as high priority usage demands in a context field of the usage demand over usage demands with normal priority.
b. Two instances of a scheduling counters mechanism 2 have been configured and associated to the partition currently in PA role (the partition 101), namely the scheduling counter mechanism 1011 for counting normal priority usage demands , and the scheduling counter mechanism 1012 for counting high priority usage demands indicated in the demand context field.
c. The next time when detecting the role PA in the partition that currently has the role PA, do not create a usage data record if no usage has occurred in the preceding usage period where the partition had been in the role currently-active.
d. The usage data record 8a has been exported via the external export interface 99.
e. The scheduler 1000 has been up-scaled from 2 partitions to 3 partitions by inserting a third partition 301 between the partition in PA role (and the partition in CA role, where the new partition 301 would detect the role NA (next-active) once the bit 93 is enabled, but at this stage the inserted bit 93 is not yet enabled. The bit 93 is part of the scalable usage period change mechanism 98, which comprises a ring-shift register that can be scaled up and down - in this embodiment from minimum 2 enabled/disabled bits to 8 disabled/enabled bits in the ring shift register. Only enabled bits act as if they are part of the ring shift register.
f. An instance of a queueing mechanism 40 has been selected and associated with the newly added partition 301, namely a queueing mechanism 340 that gives preferential treatment to usage demands marked as high priority usage demands in a context field of the usage demand over usage demands with normal priority.
g. Two instances of a scheduling counters mechanism 2 have been configured and associated to the newly added partition 301, namely the scheduling counter mechanism 3011 for counting normal priority usage demands indicated in the demand context field, and the scheduling counter mechanism 3012 for counting high priority usage demands indicated in the demand context field.
h. When detecting the role PA in the newly added partition 301, do not create a usage data record if no usage has occurred in the preceding usage period where the partition had been in the role currently-active.

### Figure 30

Embodiment of the scheduler 1000 according to the invention showing the scheduler 1000 at a time t_{z28} between the time t_{z27} and the time t₂, where the time t_{z28} is the time when the bit 93 has been enabled, and thus the scheduler has been scaled up to 3 partitions, and when the scheduling configuration specifications 46 and 47 have been received.

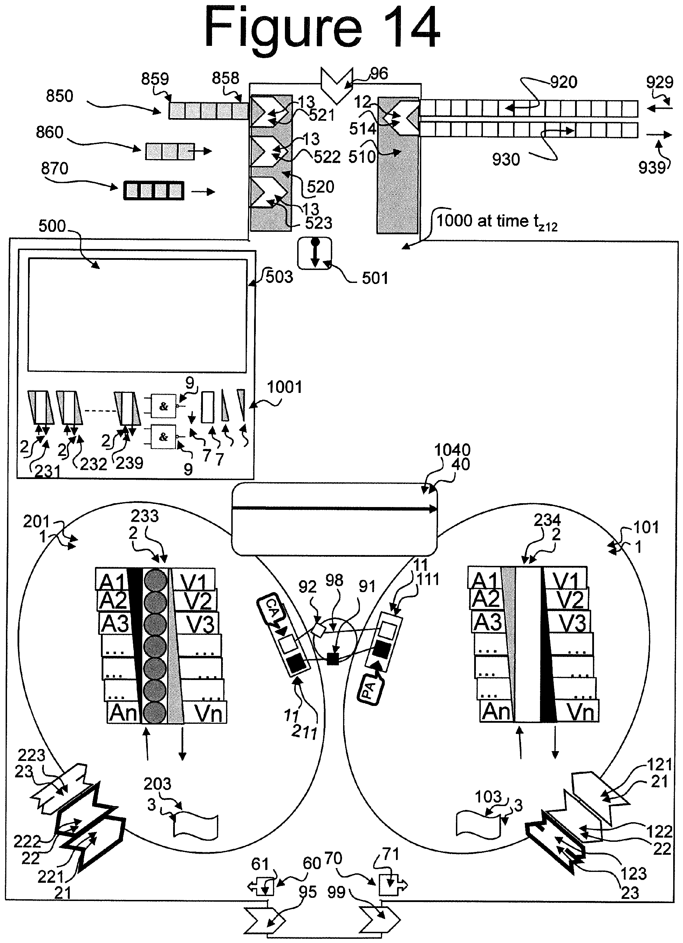

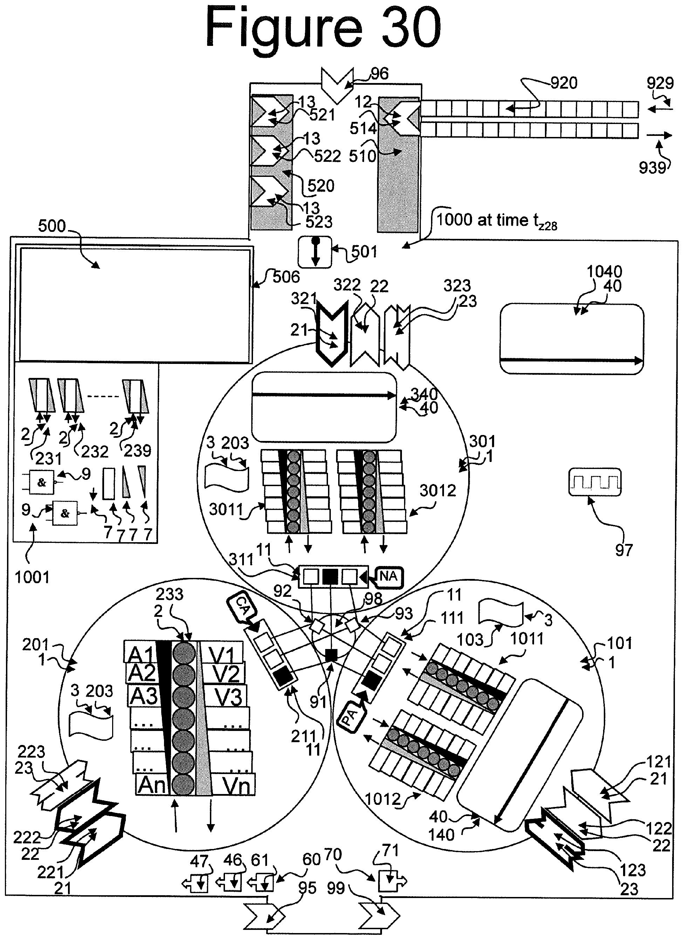

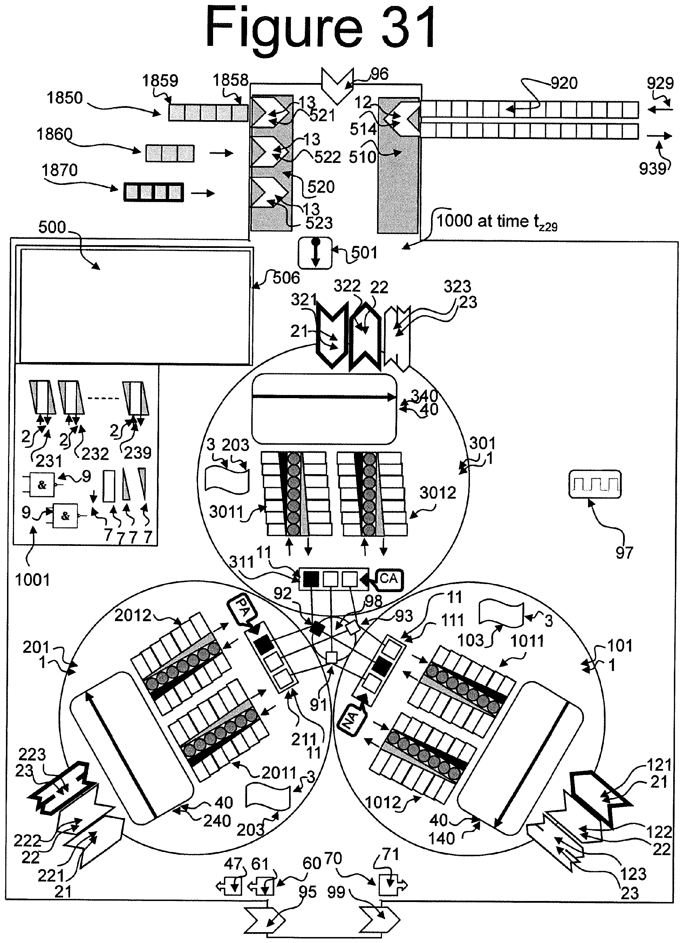

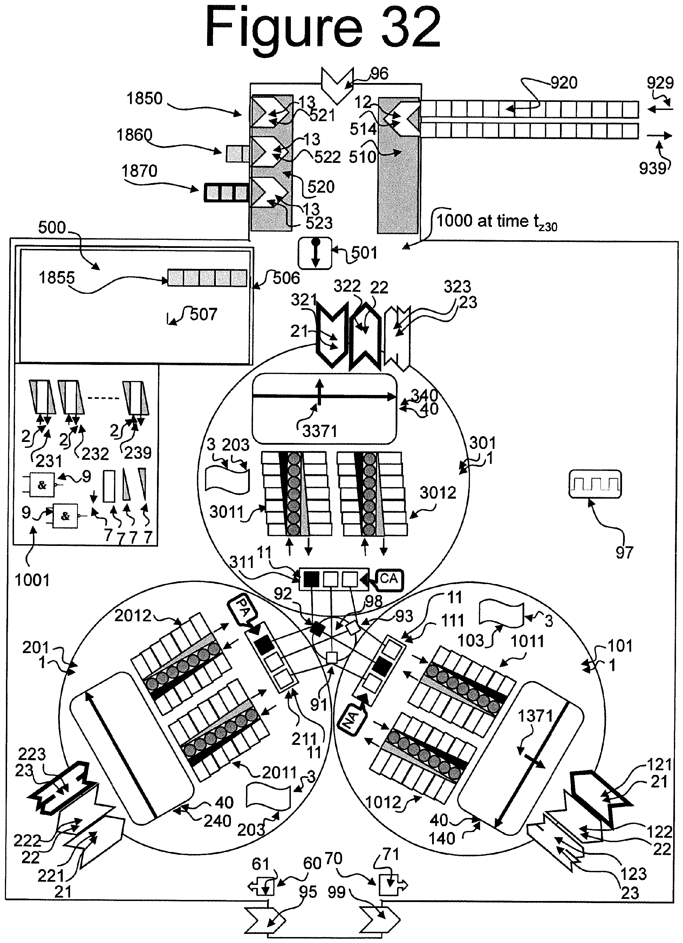

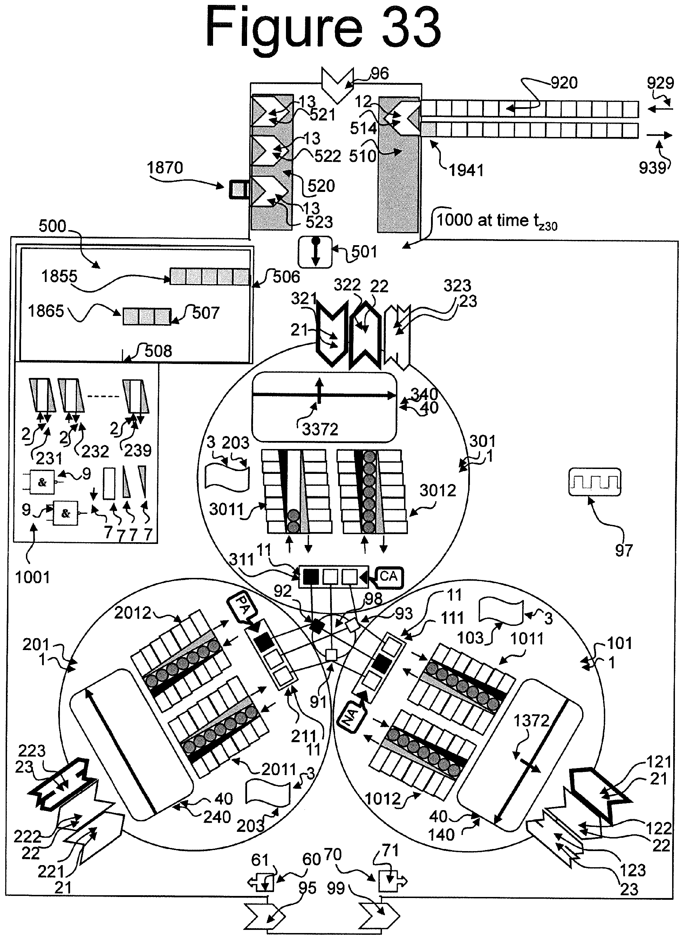

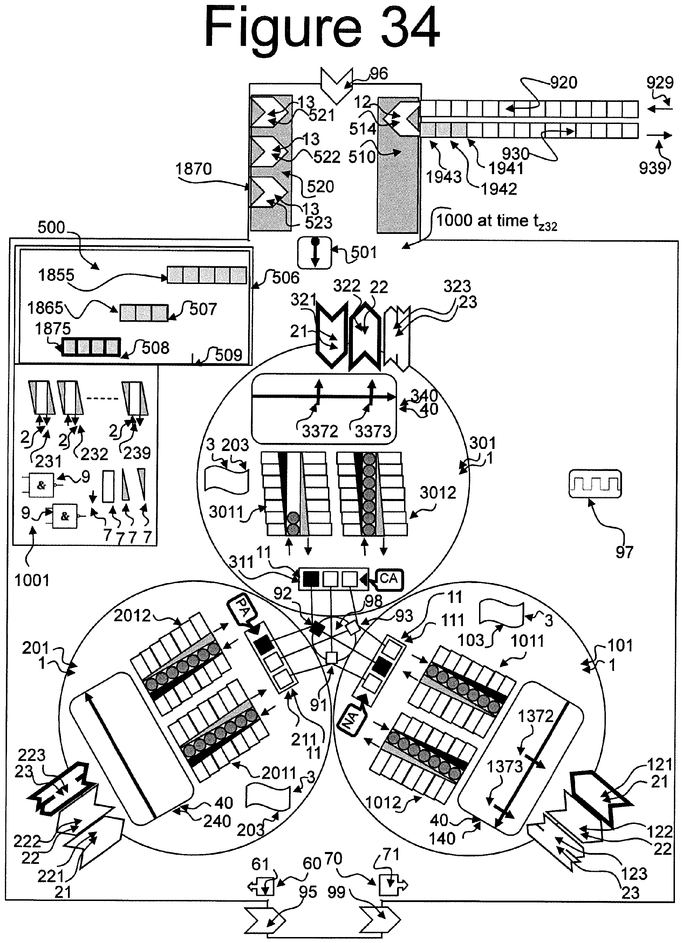

The scheduler 1000 is now starting to operate as 3 partition scheduler. In preparation of the situation after the next usage period change, where each partition shall give preferential treatment to priority demands, newly arriving demands are beginning with the point in time t_{z28} enqueued in parallel into 2 queueing mechanisms, namely into the queueing mechanism of the currently-active partition (which does not give preferential treatment to high priority demands) and into the queueing mechanism of the next-active partition, which will give preferential treatment not only to demands that are newly arriving in the next usage period, but also to demands that have arrived in the current usage period and have been buffered at the point in time, when the usage period change occurs. When changing the queueing mechanism in the inactive partition of a 2 partition scheduler these buffered demands would be lost. The figure 30 is the first figure that support claim 6. Subsequent figures do support claim 6 as well, when assuming a sequence of arriving demands as shown in figure 14ff.

### Figure 31

Embodiment of the scheduler 1000 according to the invention showing the scheduler 1000 at a time t_{z29} between the time t_{z28} and the time t₂, where the time t_{z29} is the time when another usage period change has occured and the scheduling configuration specifications 46 has been activated in the validity partition 201 as activated scheduling configuration specification 203 being an instance of an activated scheduling configuration specification 3 whereby the following changes have been applied to the previsously active partition 201 currently in the PA Role:
a. An instance of a queueing mechanism 40 has been selected and associated with the partition 201, namely a queueing mechanism 240 that gives preferential treatment to usage demands marked as high priority usage demands in a context field of the usage demand over usage demands with normal priority indicated in the demand context field.
b. As the partition 201 was the last partition that had been associated with the queueing mechanism 1040, and is now no longer associated with the queueing mechanism 1040, the scheduler 1000 returns the resources of the queueing mechanism 1040 to the scheduling resource pool 1001.
c. Two instances of a scheduling counters mechanism 2 have been configured and associated to the partition 201, namely the scheduling counter mechanism 2011 for counting normal priority usage demands indicated in the demand context field, and the scheduling counter mechanism 2012 for counting high priority usage demands indicated in the demand context field.

The scheduler 1000 is now operating as 3 partition scheduler where each partition including the currently active partition give preferential treatment to priority demands, and where newly arriving demands are enqueued in parallel into 2 queueing mechanisms, namely the queueing mechanism of the currently-active partition and of the next-active partition.

The time t_{z29} is the time when a first demand 1850 comprising multiple demand units starts to arrive at the scheduler 1000, more precisely when a first resource usage demand 1850 comprising multiple resource usage demand units starts to arrive at the scheduler, with a very first resource usage demand unit 1858 being the first resource usage demand unit that starts to arrive at the time t_{z29} at the first demand receiver interface 521, which is comprised in the demand receiver function 520. The currently active partition 301 is configured with an instance of a scheduling mechanism 40 which is a queueing mechanism 340 that supports priority handling for demands marked as priority demands in a demand context field. It should be noted that the demand 870 is a demand that carries some priority context field with a higher priority than the demands 850 and 860, indicated by thicker lines of the demand units comprised in demand 870. The task of the scheduler 1000 is to decide, in which sequence the demands get satisfied, in particular whether or not the higher priority demand 1870 shall get satisfied prior to the normal priority demand 860. Since now the active queueing mechanism 340 supports priority differentiated scheduling, this priority context field is currently not ignored as was the case with the queueing mechanism 1040. However it is anyway clear that the demand 1850 will get satisfied first, because there are no demands waiting in buffer 500, and the demand1 850 is just starting to arrive at the demand receiver interface 521 comprised in the demand receiver function 520. The demand receiver function may already start to store the arriving demand 1850 at the location 503 but preferably waits till the demand has fully arrived.

### Figure 32

Embodiment of the scheduler 1000 according to the invention showing the scheduler 1000 at a time t_{z30} between the time t_{z29} and the time t₂, where the time t_{z30} is the time when the demand 1850 has completed arrival, has been stored in the buffer and where a pointer to the buffered demand 1855 has been enqueued to the currently-active queueing mechanism 340 and to the next-active queueing mechanism 240. Latest by the time of complete demand arrival the length of the demand is known. The length L of the demand is the amount of resource usage units required to satisfy the demand at demand satisfaction time, in case of demand 1850 this length L is 5. The demand including the length L and the fixed length demand context field gets stored in the buffer 500. Before doing so, the location where to store the demand including the length gets determined by reading the free buffer location register 501, whereby obtaining the address of the location 506 and replacing the value in free buffer location register 501 with another value that gets calculated by determining the amount of buffer resources required to store the demand 1850 with the fixed length part of the demand context field. As a result a location 507 gets determined and the address of location 507 gets stored in the free buffer location register 501. The demand receiver function 520 triggers to all partitions an enqueue request via a broadcast mechanism included in scheduler 1000. All instances of scheduling partition 1 with an activated enqueue-handler instance 21 receive and honor the enqueue request. Due to the partition 301 at time t_{z30} having the role "currently-Active" and the partition 201 having the role "next-active" the demand pointer enqueuer 321 and the demand pointer enqueuer 221 both receives the broadcasted enqueue request. The demand pointer 3371 is enqueued to the queuing mechanism 340 in the currently active partition 301 and the demand pointer 1371 is enqueued to queuing mechanism 140 in the Next-Active partition 101. Both demand pointers 3371 and 1371 point to the same location 506 where the buffered demand 1855 is stored, including the length L=5 and the fixed length demand context field. The enqueue handler of the next-active partitions, which in this embodiment is the enqueue handler 121, stores an enqueue revocation pointer in the variable length part of the demand context field that allows efficient revocation of the enqueue operation to the next-active partition, in effect it allows an efficient removal of the pointer 1371 in case the demand satisfaction for the current demand starts in the current usage period. As both the queueing mechanisms 340 and 240 have previously been empty, the pointers are immediately located at the head of the queue.

### Figure 33

Embodiment of the scheduler 1000 according to the invention showing the scheduler 1000 at a time t_{z31} between the time t_{z30} and the time t₂, where the time t_{z30} is the time when the scheduler 1000 has dequeued the demand pointer 3371 and has also deleted the pointer 1371 using the revocation pointer and has retrieved the buffered demand 1855 and the associated length L=5 from the buffer, but has not yet deleted it in the buffer, because it has not yet been successfully satisfied. At the time t_{z31} a second demand 1860 has completed arrival and has been buffered and a demand pointer 3372 has been enqueued to the currently active qeueuing mechanism 340 and a demand pointer 1372 has been enqueued to the next-active queueing mechanism 140 and where an enqueue revocation pointer has been stored in the variable length part of the demand context field that allows efficient revocation of the enqueue operation to the next-active partition. Both demand pointers 3372 and 1372 point to the same buffer location 507 where the demand 1860 is stored as buffered demand 1865. The enqueue operation has been done in the same way as previously described for the pointers 3371 and 1371. The dequeue operation for the demand pointer 3371 - which at time t_{z31} is no longer queued - has worked as follows: During times when a semaphore indicates that the active queue mechanism is not idle, each time an unallocated resource gets detected by the resource detection and allocation interface 514 comprised in the demand allocation function 510 it broadcasts a dequeue-request to all instances of the demand pointer dequeuer 22. The currently-active demand pointer dequeuer 322 acts upon the dequeue-request and selects the queueing mechanism associated with the partition 301, which is the queueing mechanism 340. The demand pointer dequeuer 322 has at time t_{z31} performed the dequeue operation to the queueing mechanism 340 and obtained the demand pointer 3371. The demand dequeuer 322 retrieves with the demand pointer 3371 which points to buffer location 506 the buffered-demand 1855 and the associated demand length L=5. The demand dequeuer 322 performs a function call COUNT(5) to the scheduling counter mechanism 3011, which leads to the scheduling counter mechanism 3011 crementing the counter by 5 without prior reservation - in line with how the counter 3011 has been programmed to count (as decrementing counter that counts directly without prior reservation). This crementation is visualized by 5 tokens having been removed from the scheduling counter mechanism 3011. The demand dequeuer 322 hands the pointer length L and the pointer to the buffered demand 1855 to the demand allocation function 510 which hands this to the resource detection and allocation interface 514 which allocates 5 unallocated resource usage units for the demand satisfaction of the demand 1850 stored in buffer 500 as buffered demand 1855. At the time t_{z31} the resource detection and allocation interface 514 has already started demand satisfaction and has already consumed a first resource usage unit for demand satisfaction, namely the resource usage unit 1941.

### Figure 34

Embodiment of the scheduler 1000 according to the invention showing the scheduler 1000 at a time t_{z32} between the time t_{z31} and the time t₂, where the time t_{z32} is the time when the scheduler 1000 has consumed two more of the 5 resource usage units allocated for demand satisfaction of the first demand 1850, namely the resource usage units 1942 and 1943. It has now completely received the demand 1870 and has buffered this demand by storing it as buffered demand 1875 including the length L=4 at storage location 508. The demand receiver function 520 executes the demand arrival time procedure applied to the third demand 1870:
Demand arrival time procedure (preferably executed by the demand receiver function 520) comprising the following steps:
- determine the amount of resource usage units that will be consumed during demand satisfaction (also referred to as Length L)
- determine the buffer location where to store the arrived demand as buffered demand (including a preceeding demand context field) by
   - Lock a semaphore to prevent others from changing the buffer location register 501.
   - Determine from the Length L the amount of buffer memory required to store the arrived demand, and calculate the new value of the buffer register 501
   - Read the buffer location pointer register 501 and store in a register as pointer to the buffered demand
   - Write the new value of the buffer regiser 501 into the buffer location register 501 - and release the semaphore.
- determine the resource usage unit type of the resource usage units required to satisfy the demand, and using the mapping rule in the usage period specific part of the scheduling configuration specification that is valid for the currently active partition, determine the scheduling counter mechanism that shall be used to count the amount or resource usage units consumed during demand satisfaction and store a pointer to the scheduling counter mechanism in the buffered demand context field.

An identifier for a scheduling counter mechanism that shall be used for counting the amount of resource usage units allocated and consumed during demand satisfaction. Preferably the demand scheduling control context shall also allow to store for each next-active partition a pointer to facilitate the efficient revocation of demand pointers still enqeueued to a next-active partition when the demand is already satisfied.
- Preferably use the value of the buffer location register 501 as pointer to the buffered demand.
- Determine the demand associated scheduling counter mechanism which shall be used at demand satisfaction time for counting the resource usage units consumed for demand satisfaction, preferably using scheduling counter mechanism mapping rules contained in the scheduling configuration specification valid for the usage period during which the previously-active partition will be the currently-active partition. The scheduling counter mechanism mapping rules may comprise just one rule that says: Map ANY demand to a first SCM (Scheduling counter mechanism) with a first ID. Such a simple mapping rule is sufficient for the implementation of Time of Day accounting. Preferably, all possible demand types that may arrive during a usage period must have an associated mapping to a scheduling counter mechanism that is used to count the resource usage units consumed for the demand satisfaction of the demand. This completeness of the mapping is preferably achieved by including as last mapping rule a so called Default mapping rule, being a rule that maps ANY other demand not covered by a previous mapping rule. For demands that are data packets arriving at a scheduler comprised in a 5G system described by the 5G system architecture document 3GPP TS 23.501 V15.0.0 (2017-12) (Release 15), more complicated scheduling counter mapping rules may apply, such as described in chapter 5.7 of the 5G system architecture, which defines the 5G QoS model. A potential application of the invention at the subscriber level could involve the mapping of demands being arriving data packets to UE-specific scheduling counter mechanisms implementing the UE-AMBR. This would allow offering services with a Usage period specific UE-AMBR (Aggregate Maximum Bitrate). The invention offers not only resource independant subscriber level counting and subscriber session level counting, but also resource dependent wholesale charged party level counting. For wholesale charged party level counting the mapping rules must have at least the granularity to count ANY traffic associated with a charged party, where the charged party may be identified by an APN in 4G Systems, or by a S-NSSAI or a DNN, or the combination of an S-NSSAI and a DNN in a 5G system. The scheduling counter mechanism mapping rules are used to define the product. It should be noted that the invention allows resource specific upgrade charging at the wholesale charged party level. For example, schedulers according to the invention could be deployed in all Radio Access nodes providing service to the stadium where the NHL final takes place, inviting bids for a usage period being the day of the final, where the bids determine a bid success rank and the bid success rank determines the priority with which buffered downstream demands will be served by the radio access node, or parallel arriving upstream demands competing for access to the radio resource in the stadium area.-assumed to be a scarce and highly demanded resource on the day of the final taking place. Depending on the queueing mechanism associated with the active partition in the scheduler deployed in the Radio Access Nodes providing coverage for the stadium during the Usage Period that includes the time of the final, different scheduling strategies and bidding strategies may apply. For example strict queueing may not be acceptable as users associated with a charged party belonging to the low bidders may not receive any service. A weighted fair queuing algorithm may be more appropriate where the relative weights get determined by the relation of each bid relative to the sum of all bids. A single scheduling counter mechanism mapping rule that maps all traffic associated with a charged party to a charged party associated scheduling counter mechanism would be sufficient, if the wholesale charged party level offer does not differentiate between the different QoS-Flows. This means that the same weighted fair queueing algorithm with the same weights apply for all QoS-Flows. This determines the quality of service that customers associated with a charged party receive when visiting the stadium for the NHL final, but the upgrade price is not differentiated per traffic class (QoS-Flow). For each packet that receives a scheduling treatment upgrade the same upgrade price applies, If the scheduling upgrade shall be offered separately for e.g. delay insensitive traffic classes and delay sensitive traffic classes, two scheduling counter mechanism are required per bidder being the wholesale charged party.
- Store a pointer to the demand associated scheduling counter mechanism in the demand context field that is stored together with the buffered demand in the buffer 500.

Given a scheduler 1000 with currently n partitions: For each demand arrival and for each enqueue affected partition being each partition except the previously-active partition:
1. Store the demand in the buffer, preferably including a preceding fixed length demand context field
2. Determine the Length of the demand, preferably as the amount of resource usage units that shall be allocated and consumed during demand satisfaction, and store the length in a first predetermined position of the demand context field
3. Determine the demand associated scheduling counter mechanism that shall be used at demand satisfaction time for counting the resource usage units consumed for demand satisfaction, preferably the associated scheduling counter mechanism can be determined by determining the first matching mapping rule in an ordered list of mapping rules that is comprised in each scheduling configuration specification, whereby each mapping rule comprises exactly one scheduling counter mechanism as result of the mapping specified in the mapping rule, and store an ID of the scheduling counter mechanism in a second pre-determined position of the fixed length demand context field, preferably an ID that gets resolved at runtime into a pointer to an address of the scheduling counter mechanism.
4. Determine the demand associated queueing system preferably from a usage period to queueing system mapping rule comprised in each of n-1 scheduling configuration specifications, each scheduling configuration specification having a different validity usage period during which the scheduling configuration is valid, where preferably the validity of a first scheduling configuration specification is the current usage period and where the validity of a second scheduling configuration specification also referred to as first next scheduling configuration specification is the first in a sequence of m next usage periods and where an m^{th}-next scheduling configuration specification is the m^{th} -next in a sequence of n-2 usage periods, and where the m^{th} -next scheduling configuration specification is implemented preferably on a partition that is associated with an element of a logical ring structure comprised in the usage period change mechanism and is the clockwise direct neighbor of the partition with the implementation of the (m-1)^{th} next scheduling configuration - with 1<m<n and n being the current cycle number of the scheduler which also defines the current number of partitions comprised in the scheduler.
5. Determine the demand associated enqueue-parameter-list containing the parameters provided to the queueing system during the enqueuer operation as input parameters or as signal, preferably presented as parameters of an enqueue() function call in case of a software implementation of the scheduler 1000, and preferably presented as output signals of multiple sets of connected NAND-Gates in case of an FPGA based hardware implementation of the scheduler, where the demand associated enqueue-parameter-list gets determined from a usage period to Enqueue-parameter list mapping comprised in each of n-1 scheduling configuration specifications, each scheduling configuration specification having a different validity usage period during which the scheduling configuration is valid, where preferably the validity of a first scheduling configuration specification is the current usage period and where the validity of a second scheduling configuration specification also referred to as first next scheduling configuration specification is the first in a sequence of m next usage periods and where an m^{th} -next scheduling configuration specification is the m^{th} -next in a sequence of n-2 usage periods, and where the m^{th} -next scheduling configuration specification is implemented preferably on a partition that is associated with an element of a logical ring structure comprised in the usage period change mechanism and is the clockwise direct neighbor of the partition with the implementation of the (m-1)^{th} next scheduling configuration specification - with 1<m<n and n being the current cycle number of the scheduler which also defines the current number of partitions comprised in the scheduler.
6. Determine a group of configurable attributes that affect the configuration of the queueing system associated with the enqueuer affected partition (such as weights in a weighted fair queueing system or priority ranks in a strict priority queueing system).
7. For each partition in the group of enqueuer affected partitions determine the scheduling counter mechanismthat shall be used at demand satisfaction time for counting the resource usage units consumed for demand satisfaction. Thesescheduling counter mechanisms are the enqueue affected scheduling counter mechanisms.
8. Determine a newly calculated next free buffer space address from the current next free buffer space address, the length of the demand and the length of the fixed length demand context field. Store the demand at the address of the old value of the buffer location register 501 and Store the newly calculated next free buffer space address at the buffer location register 501 and store the demand 1870 as buffered demand 1857 at the address of the old next free buffer space address.
9. Preferably store the length of the demand, the demand scheduling context field comprises the amount of resource usage units required to satisfy the demand (also referred to as Length L) and an identifier for a scheduling counter mechanism that shall be used for counting the amount of resource usage units allocated and consumed during demand satisfaction. Preferably the demand scheduling control context shall also allow to store for each next-active partition a pointer to facilitate the efficient revocation of demand pointers still enqeueued to a next-active partition when the demand is already satisfied. Trigger all activated demand pointer enqueuer instances 21 to determine the counter that will be used for counting the demand.
10. Determine the queueing mechanism that is active in the partition (e.g. strict priority, weighted fair queueing etc)
11. For the queueing mechanism determine which variable(s) of the counter influences the enqueue operation.
12. Performing the enqueue operation to the queueing mechanism, include all relevant attribute value pairs of the counter, such as the priority rank of the scheduling counter mechanism or the scheduling weight of the scheduling counter mechanism.
13. Broadcast an enqueue request to all activated demand enqueuers, including the demand enqueuers in the currently-active partition and the demand enqueuer in each next-active partition.
14. All activated demand enqueuers perform an enqueuer operation to the queueing mechanism associated with the partition comprising the demand enqueuer. The response from the queueing mechanism is the location where the demand pointer is stored in the queueing mechanism and can be easily removed to revocate the enqueuer operation. This response is stored in the variable length portion of the demand context, preferably in an array of pointers (where the first element in the array is associated with the first partition 101, the second with the second partition 201, etc).

At the time t_{z32} the demand pointer enqueuer 321 of the currently-active partition 301 is activated and the demand pointer enqueuer 121 of the next-active partition 101 is activated. The demand receiver function 520 of the scheduler 1000 starts the enqueue with the partition that is currently having the role Next-Active, and which is a direct neighbor of the partition currently having the role Previously-Active. This is the partition 101. As the queueing mechanism 140 to which the enqueue is done is supporting preferential treatment for demands that are marked as a priority demand, and gets returned a location, where the enqueued pointer can be efficiently invalidated. It continues with any partition also in state next active that is a direct neighbor to the partition where the previous enqueue was done. At the time t_{z32} , the scheduler 1000 comprises only one partition in the role next-active. Therefore the second enqueue is done to the demand pointer enqueuer of the currently active partition, namely the demand pointer enqueuer 321. The demand receiver function 520 requests to enqueue a demand pointer 3373 as double pointer, as it points to the demand 1870 stored as buffered demand 1875 in location 508 of the buffer 500, and it also points to the location where the demand pointer 1373 can be invalided and thus effectively removed from the queueing mechanism 140. The free buffer location register 501 now points to a next free location 509 in the buffer. The enqueue time algorithm is as follows: The demand receiver interface 523 detects that the demand 1870 has been completely received. It signals this to the demand receiver function 520. The demand receiver function 520 enqueues it to all queueing mechanisms in role next-active and to the currently-active partition. The demand receiver function 520 starts the enqueue with the partition that has the partition in the role PA as direct neighbor in clockwise direction, and receives a positive response that includes the location, where the enqeueued pointer can be invalidated and thus effectively removed from the qeueing mechanism. The demand receiver function 520 continues with the partition that is a direct neighbor in clockwise direction to the partition to which the previous enqueue was done, and includes in the enqueue the invalidation location soliciting to enqueue a double pointer. At last the demand receiver function 520 enqueues a double pointer to the partition in the role currently-active.

## Claims

1. A method for scheduling resource usage demands with an associated resource usage demand arrival time by using a scheduler (1000), said method comprising the steps of:
operating a usage period change mechanism (98) to revolve a cyclic structure (1000) of multiple scheduling partitions with which the scheduler is currently operating, the mechanism (98) being associated with multiple revolving role detection functions (11), each of which being comprised in each of the multiple scheduling partitions (1);
each scheduling partition comprising at least a first and a second scheduling counter mechanisms (2, 231, 232, .. 239) for counting resource usage units within a usage period,
a) counting a first amount of resource usage units consumed for demand satisfaction of a first resource usage demand in a first scheduling counter mechanism (233) associated with a first scheduling partition (1), and
b1) counting a second amount of resource usage units consumed for demand satisfaction of a second resource usage demand also in said first scheduling counting mechanism if no usage period change occurs between a demand satisfaction start time of the first resource usage demand and a demand satisfaction start time of the second resource usage demand and
b2) else counting the second amount of resource usage units consumed for demand satisfaction of the second resource usage demand in a second scheduling counter mechanism if between the demand satisfaction start time of the first resource usage demand and the demand satisfaction start time of the second resource usage demand exactly one first usage period change occurs, independently of the time at which this first usage period change occurs.

2. Method of claim 1, wherein said usage period change mechanism (98) is implemented by changing the value of a single variable
i) in a single clock cycle, preferably executed in a hardware based implementation of said mechanism, or
ii) in a single command comprised in code being executed in a computer.

3. Method of any of the previous claims, wherein a first resource usage demand consumes for demand satisfaction a first amount of resource usage units of a first resource usage unit type, and where the mapping of the first resource usage unit type to a first scheduling counter mechanism (233) used for counting the amount of resource usage units allocated and consumed for demand satisfaction of the first resource usage demand has been defined in a first scheduling configuration specification with validity for a demand satisfaction starting in a first usage period and has been imported by the scheduler prior to the start of the first usage period.

4. Method of any of the previous claims where the scheduler continues scheduling while the scheduling configuration of the scheduler is changed from a first scheduling configuration defined in a first scheduling configuration specification to a second scheduling configuration defined in a second scheduling configuration specification.

5. Method of claims 3 or 4, where the first scheduling configuration specification determines a first queueing mechanism to be used for scheduling during the first usage period and where the second scheduling configuration specification determines a second queueing mechanism to be used for scheduling during the second usage period and where a single usage period change marks the end of the first usage period and the start of the second usage period.

6. Method of any of the previous claims where the demand satisfaction of a second resource usage demand starts prior to the demand satisfaction of the first resource usage demand if and only if between the start of the demand satisfaction of the first demand and the start of the demand satisfaction of the second demand a usage period change occurs.

7. Method of any of the previous claims where the demand satisfaction of the second resource usage demand starts prior to the demand satisfaction of the first resource usage demand if and only if between the start of the demand satisfaction of the first demand and the start of the demand satisfaction of the second demand a usage period change occurs, and where the reason for the second demand receiving preferential treatment over the first demand is one of the following:
i) a first mapping rule comprised in the first scheduling configuration specification directly or indirectly maps the first resource usage demand to a different queueing mechanism than the second resource usage demand, where the difference between the queueing mechanisms is based on the fact that different input parameters are considered during the enqueue operation applied to the first queuing mechanism and the enqueue operation applied to the second queuing mechanism, where a first input parameter is not considered as being different from a second input parameter if the first input parameter is equal to the value of the value part of a first attribute value pair and where the second input parameter is equal to the value of the value part of a second attribute value pair, and where the attribute part of the first attribute value pair is equal to the attribute part of the second attribute value pair;
ii) a first mapping rule comprised in the first scheduling configuration specification directly or indirectly maps the first resource usage demand to a different queueing mechanism than the second resource usage demand, where the difference between the queueing mechanisms is based on the fact that different input parameters are considered during the dequeue operation applied to the first queuing mechanism and the dequeue operation applied to the second queuing mechanism, where a first input parameter is not considered as being different from a second input parameter if the first input parameter is equal to the value of the value part of a first attribute value pair and where the second input parameter is equal to the value of the value part of a second attribute value pair, and where the attribute part of the first attribute value pair is equal to the attribute part of the second attribute value pair;
iii) a first mapping rule comprised in the first scheduling configuration specification directly or indirectly maps the first resource usage demand to a different queueing mechanism than the second resource usage demand, where the difference between the queueing mechanisms is based on the fact that different input parameters are considered during the enqueue operation applied to the first queuing mechanism and during the enqueue operation applied to the second queuing mechanism and during the dequeue operation applied to the first queuing mechanism and the dequeue operation applied to the second queuing mechanism, where a first input parameter is not considered as being different from a second input parameter if the first input parameter is equal to the value of the value part of a first attribute value pair and where the second input parameter is equal to the value of the value part of a second attribute value pair, and where the attribute part of the first attribute value pair is equal to the attribute part of the second attribute value pair;
iv) a first mapping rule comprised in the first scheduling configuration specification directly or indirectly maps the first resource usage demand to a different instance of the same queueing mechanism as the second resource usage demand, where the different queueing behavior between the two instances of the same queueing mechanisms is based on the fact that the same input parameters, but with different values of the parameters are considered during the enqueue operation applied to the first queuing mechanism and the enqueue operation applied to the second queuing mechanism, where a first input parameter is not considered as being different from a second input parameter if the first input parameter is equal to the value of the value part of a first attribute value pair and where the second input parameter is equal to the value of the value part of a second attribute value pair, and where the attribute part of the first attribute value pair is equal to the attribute part of the second attribute value pair;
v) a first mapping rule comprised in the first scheduling configuration specification directly or indirectly maps the first resource usage demand to a different instance of the same queueing mechanism as the second resource usage demand, where the different queueing behavior between the two instances of the same queueing mechanisms is based on the fact that the same input parameters, but with different values of the parameters are considered during the dequeue operation applied to the first queuing mechanism and the dequeue operation applied to the second queuing mechanism, where a first input parameter is not considered as being different from a second input parameter if the first input parameter is equal to the value of the value part of a first attribute value pair and where the second input parameter is equal to the value of the value part of a second attribute value pair, and where the attribute part of the first attribute value pair is equal to the attribute part of the second attribute value pair;
vi) a first mapping rule comprised in the first scheduling configuration specification directly or indirectly maps the first resource usage demand to a different instance of the same queueing mechanism as the second resource usage demand, where the different queueing behavior between the two instances of the same queueing mechanisms is based on the fact that the same input parameters, but with different values of the parameters are considered during the enqueue operation applied to the first queuing mechanism and during the enqueue operation applied to the second queuing mechanism and during the dequeue operation applied to the first queuing mechanism and the dequeue operation applied to the second queuing mechanism, where a first input parameter is not considered as being different from a second input parameter if the first input parameter is equal to the value of the value part of a first attribute value pair and where the second input parameter is equal to the value of the value part of a second attribute value pair, and where the attribute part of the first attribute value pair is equal to the attribute part of the second attribute value pair.

8. Method of any of the previous claims where the scheduler imports both the first scheduling configuration specification and the second scheduling configuration specification via an API, Application Programming Interface.

9. Method of any of the previous claims where the API, Application Programming Interface, allows to create a scheduling counter mechanism with a multiplicity of attribute value pairs.

10. Method of claims 7 to 9, where the attribute in the first attribute value pair or in the second attribute value pair is one of the following:
i. a local identity of the scheduler comprising the scheduling counter mechanism (2, 231, 232, .. 239);
ii. a global identity of the scheduler comprising the scheduling counter mechanism (2, 231, 232, .. 239);
iii. a local identity of the scheduling counter mechanism (2, 231, 232, .. 239);
iv. a global identity of the scheduling counter mechanism (2, 231, 232, .. 239);
v. an identity of the validity usage period;
vi. a Boolean variable identifying whether offline charging or online charging is used with the scheduling counter mechanism;
vii. an identity of a charged party;
viii. an identity of a charging party to receive usage data records for the purpose of charging the charged party using offline charging method;
ix. an identity of a charging party providing quotas on behalf of the charged party using online charging method;
x. an identity of a predefined priority rank associated with the scheduling counter mechanism (2, 231, 232, .. 239), which influences the queuing mechanism;
xi. an offline-charging unit value to be included in any usage data record for offline charging;
xii. an online-charging value determining the amount of quota units to be devaluated per consumed resource usage unit in online charging method;
xiii. an identity referencing a predetermined resource usage unit type where consumed resource usage units of this resource usage unit type shall be counted by the scheduling counter mechanism (2, 231, 232, .. 239) when consumed during demand satisfaction;
xiv. a Boolean variable defining whether "consumed" has the same meaning as "allocated for demand satisfaction" or not (Count without reservation);
xv. a Boolean variable defining whether "consumed" has the same meaning as "allocated for demand satisfaction and demand satisfied" or not (Count using reservation and "Auto-Confirm)"
xvi. a Boolean variable defining the crementation direction programmability;
xvii. a Boolean variable defining the crementatin direction (incrementing or decrementing);
xviii. an integer variable defining the size of the counting mechanism in binary exponent format (e.g. value 3 = 2 exp 3 = 8 means that the counter has 8 values and can count from 0 to 7);
xix. an integer variable defining the size of the counting mechanism in integer 16 format;
xx. an integer variable defining the size of the counting mechanism in integer32 format;
xxi. an integer variable defining the size of the counting mechanism in integer64 format;
xxii. an integer variable defining the size of the counting mechanism in integer128 format;
xxiii. a Boolean variable defining if Overrun/Underrun protection mode via creation of a usage data record per Overrun/Underrun event applies;
xxiv. a Boolean variable defining if Overrun/Underrun protection mode via using a Function Call Return Value "FALSE" applies;
xxv. an identity referencing a pre-configured queuing mechanism that has been pre-configured on the scheduler;
xxvi. an identity of a pre-determined queueuing mechanism that gets configured at runtime at the scheduler based on a template that defines how such a queueing mechanism can be configured at runtime; and
xxvii. an identity of a charging-value to scheduling priority mapping algorithm, that determines how the charging value influences the priority rank determined by the scheduler, e.g. a higher charging value always resulting in a higher scheduling weight and thus in a higher probability of receiving preferential treatment, or a higher charging value always resulting in a higher priority rank in the queueing mechanism and thus always resulting in preferential treatment.

11. Method of any of the previous claims, where a pointer to a buffered demand gets enqueued in parallel into one or more queueing mechanisms, and where a scheduling configuration specification determines for a future usage period the number of parallel queues into which an arriving demand shall get enqueued during that usage period.

12. Method of any of the previous claims, where the scheduler supports Time of Day Accounting by means of multiple scheduling counter mechanisms (2, 231, 232, .. 239) using the same queueing mechanism.

13. Method of any of the previous claims, where a usage period change not only changes the charging value (either the online-charging value or the offline charging value or both the online charging value and the offline charging value) of a resource usage unit of the first resource usage unit type, but depending on the ranking of the charging value of the resource usage unit of the first resource usage unit type relative to the charging value of a resource usage unit of other resource usage unit types also the priority rank of buffered demands waiting for demand satisfaction where the demand satisfaction requires the allocation of a resource usage unit of the first resource usage unit type, and where a higher charging value results in a higher priority rank, and a higher priority rank results in preferential treatment during scheduling.

14. A system for scheduling resource usage demands with an associated resource usage demand arrival time which is adapted to perform the method according to any of claims 1 to 13.

## Patentansprüche

1. Verfahren zum Planen von Ressourcennutzungs-Anforderungen mit einer zugehörigen Ankunftszeit der Ressourcennutzungs-Anforderung unter Verwendung einer Planungseinrichtung (1000), wobei das Verfahren die Schritte aufweist:
Betreiben eines Mechanismus (98) zur Änderung der Nutzungsdauer, um eine zyklische Struktur (1000) von mehreren Planungspartitionen zu umlaufen, mit denen die Planungseinrichtung gegenwärtig arbeitet, wobei der Mechanismus (98) mit mehreren Umlaufrollen-Erfassungsfunktionen (11) verbunden ist, von denen jede in jeder der mehreren Planungspartitionen (1) enthalten ist;
wobei jede Planungspartition mindestens einen ersten und einen zweiten Planungszählmechanismus (2, 231, 232, .. 239) zum Zählen von Ressourcennutzungs-Einheiten innerhalb einer Nutzungsdauer aufweist,
a) Zählen einer ersten Menge von Ressourcennutzungs-Einheiten, die zur Anforderungserfüllung einer ersten Ressourcennutzungs-Anforderung verbraucht werden, in einem ersten Planungszählmechanismus (233), der mit einer ersten Planungspartition (1) verbunden ist, und
b1) Zählen einer zweiten Menge von Ressourcennutzungs-Einheiten, die zur Anforderungserfüllung einer zweiten Ressourcennutzungs-Anforderung verbraucht werden, ebenfalls im ersten Planungszählmechanismus, wenn keine Änderung der Nutzungsdauer zwischen einer Anforderungserfüllungs-Startzeit der ersten Ressourcennutzungs-Anforderung und einer Anforderungserfüllungs-Startzeit der zweiten Ressourcennutzungs-Anforderung stattfindet, und
b2) sonst Zählen der zweiten Menge von Ressourcennutzungs-Einheiten, die zur Anforderungserfüllung der zweiten Ressourcennutzungs-Anforderung verbraucht werden, in einem zweiten Planungszählmechanismus, wenn zwischen der Anforderungserfüllungs-Startzeit der ersten Ressourcennutzungs-Anforderung und der Anforderungserfüllungs-Startzeit der zweiten Ressourcennutzungs-Anforderung genau eine erste Änderung der Nutzungsdauer stattfindet, unabhängig von der Zeit, zu der die erste Änderung der Nutzungsdauer stattfindet.

2. Verfahren nach Anspruch 1, wobei der Mechanismus (98) zur Änderung der Nutzungsdauer durch Ändern des Werts einer einzelnen Variablen
i) in einem einzelnen Taktzyklus implementiert wird, der vorzugsweise in einer hardwarebasierten Implementierung des Mechanismus ausgeführt wird, oder
ii) in einem einzelnen Befehl implementiert wird, der in Code enthalten ist, der in einem Computer ausgeführt wird.

3. Verfahren nach einem der vorhergehenden Ansprüche, wobei eine erste Ressourcennutzungs-Anforderung zur Anforderungserfüllung eine erste Menge von Ressourcennutzungs-Einheiten eines ersten Ressourcennutzungs-Einheitstyps verbraucht, und wobei die Abbildung des ersten Ressourcennutzungs-Einheitstyps auf einen ersten Planungszählmechanismus (233), der zum Zählen der Menge der Ressourcennutzungs-Einheiten verwendet wird, die die zur Anforderungserfüllung der ersten Ressourcennutzungs-Anforderung zugewiesen und verbraucht werden, in einer ersten Planungskonfigurations-Spezifikation mit einer Gültigkeit für eine Anforderungserfüllung definiert worden ist, die in einer ersten Nutzungsdauer beginnt und durch die Planungseinrichtung vor dem Start der ersten Nutzungsdauer importiert worden ist.

4. Verfahren nach einem der vorhergehenden Ansprüche, wobei die Planungseinrichtung die Planung fortsetzt, während die Planungskonfiguration der Planungseinrichtung von einer ersten Planungskonfiguration, die in einer ersten Planungskonfigurations-Spezifikation definiert ist, auf eine zweite Planungskonfiguration geändert wird, die in einer zweiten Planungskonfigurations-Spezifikation definiert ist.

5. Verfahren nach Anspruch 3 oder 4, wobei die erste Planungskonfigurations-Spezifikation einen ersten Warteschlangenmechanismus bestimmt, der zum Planen während der ersten Nutzungsdauer verwendet werden soll, und wobei die zweite Planungskonfigurations-Spezifikation einen zweiten Warteschlangenmechanismus bestimmt, der zum Planen während der zweiten Nutzungsdauer verwendet werden soll, und wobei eine einzige Änderung der Nutzungsdauer das Ende der ersten Nutzungsdauer und den Beginn der zweiten Nutzungsdauer markiert.

6. Verfahren nach einem der vorhergehenden Ansprüche, wobei die Anforderungserfüllung einer zweiten Ressourcennutzungs-Anforderung vor der Anforderungserfüllung der ersten Ressourcennutzungs-Anforderung dann und nur dann beginnt, wenn zwischen dem Beginn der Anforderungserfüllung der ersten Anforderung und dem Beginn der Anforderungserfüllung der zweiten Anforderung eine Änderung der Nutzungsdauer stattfindet.

7. Verfahren nach einem der vorhergehenden Ansprüche, wobei die Anforderungserfüllung der zweiten Ressourcennutzungs-Anforderung vor der Anforderungserfüllung der ersten Ressourcennutzungs-Anforderung dann und nur dann beginnt, wenn zwischen dem Beginn der Anforderungserfüllung der ersten Anforderung und dem Beginn der Anforderungserfüllung der zweiten Anforderung eine Änderung der Nutzungsdauer stattfindet, und wobei der Grund dafür, dass die zweite Anforderung gegenüber der ersten Anforderung eine bevorzugte Behandlung erfährt, einer der folgenden ist:
i) eine erste Abbildungsregel, die in der ersten Planungskonfigurations-Spezifikation enthalten ist, bildet direkt oder indirekt die erste Ressourcennutzungs-Anforderung auf einen anderen Warteschlangenmechanismus als die zweite Ressourcennutzungs-Anforderung ab, wobei der Unterschied zwischen den Warteschlangenmechanismen auf der Tatsache beruht, dass unterschiedliche Eingabeparameter während der Operation der Einreihung in die Warteschlange, die auf den ersten Warteschlangenmechanismus angewendet wird, und der Operation der Einreihung in die Warteschlange berücksichtigt werden, die auf den zweiten Warteschlangenmechanismus angewendet wird, wobei ein erster Eingabeparameter nicht als von einem zweiten Eingabeparameter verschieden angesehen wird, wenn der erste Eingabeparameter gleich dem Wert des Werteteils eines ersten Attributwertpaars ist, und wobei der zweite Eingabeparameter gleich dem Wert des Werteteils eines zweiten Attributwertpaars ist, und wobei der Attributteil des ersten Attributwertpaars gleich dem Attributteil des zweiten Attributwertpaars ist;
ii) eine erste Abbildungsregel, die in der ersten Planungskonfigurations-Spezifikation enthalten ist, bildet direkt oder indirekt die erste Ressourcennutzungs-Anforderung auf einen anderen Warteschlangenmechanismus als die zweite Ressourcennutzungs-Anforderung ab, wobei der Unterschied zwischen den Warteschlangenmechanismen auf der Tatsache beruht, dass unterschiedliche Eingabeparameter während der Operation der Entfernung aus der Warteschlange, die auf den ersten Warteschlangenmechanismus angewendet wird, und der Operation der Entfernung aus der Warteschlange berücksichtigt werden, die auf den zweiten Warteschlangenmechanismus angewendet wird, wobei ein erster Eingabeparameter nicht als von einem zweiten Eingabeparameter verschieden angesehen wird, wenn der erste Eingabeparameter gleich dem Wert des Werteteils eines ersten Attributwertpaars ist, und wobei der zweite Eingabeparameter gleich dem Wert des Werteteils eines zweiten Attributwertpaars ist, und wobei der Attributteil des ersten Attributwertpaars gleich dem Attributteil des zweiten Attributwertpaars ist;
iii) eine erste Abbildungsregel, die in der ersten Planungskonfigurations-Spezifikation enthalten ist, bildet direkt oder indirekt die erste Ressourcennutzungs-Anforderung auf einen anderen Warteschlangenmechanismus als die zweite Ressourcennutzungs-Anforderung ab, wobei der Unterschied zwischen den Warteschlangenmechanismen auf der Tatsache beruht, dass unterschiedliche Eingabeparameter während der Operation der Einreihung in die Warteschlange, die auf den ersten Warteschlangenmechanismus angewendet wird, und während der Operation der Einreihung in die Warteschlange, die auf den zweiten Warteschlangenmechanismus angewendet wird, und während der Operation der Entfernung aus der Warteschlange, die auf den ersten Warteschlangenmechanismus angewendet wird, und der Operation der Entfernung aus der Warteschlange berücksichtigt werden, die auf den zweiten Warteschlangenmechanismus angewendet wird, wobei ein erster Eingabeparameter nicht als von einem zweiten Eingabeparameter verschieden angesehen wird, wenn der erste Eingabeparameter gleich dem Wert des Werteteils eines ersten Attributwertpaars ist, und wobei der zweite Eingabeparameter gleich dem Wert des Werteteils eines zweiten Attributwertpaars ist, und wobei der Attributteil des ersten Attributwertpaars gleich dem Attributteil des zweiten Attributwertpaars ist;
iv) eine erste Abbildungsregel, die in der ersten Planungskonfigurations-Spezifikation enthalten ist, bildet direkt oder indirekt die erste Ressourcennutzungs-Anforderung auf eine andere Instanz desselben Warteschlangenmechanismus als die zweite Ressourcennutzungs-Anforderung ab, wobei das unterschiedliche Warteschlangenverhalten zwischen den beiden Instanzen derselben Warteschlangenmechanismen auf der Tatsache beruht, dass dieselben Eingabeparameter, jedoch mit unterschiedlichen Werten der Parameter während der Operation der Einreihung in die Warteschlange, die auf den ersten Warteschlangenmechanismus angewendet wird, und der Operation der Einreihung in die Warteschlange berücksichtigt werden, die auf den zweiten Warteschlangenmechanismus angewendet wird, wobei ein erster Eingabeparameter nicht als von einem zweiten Eingabeparameter verschieden angesehen wird, wenn der erste Eingabeparameter gleich dem Wert des Werteteils eines ersten Attributwertpaars ist, und wobei der zweite Eingabeparameter gleich dem Wert des Werteteils eines zweiten Attributwertpaars ist, und wobei der Attributteil des ersten Attributwertpaars gleich dem Attributteil des zweiten Attributwertpaars ist;
v) eine erste Abbildungsregel, die in der ersten Planungskonfigurations-Spezifikation enthalten ist, bildet direkt oder indirekt die erste Ressourcennutzungs-Anforderung auf eine andere Instanz desselben Warteschlangenmechanismus als die zweite Ressourcennutzungs-Anforderung ab, wobei das unterschiedliche Warteschlangenverhalten zwischen den beiden Instanzen derselben Warteschlangenmechanismen auf der Tatsache beruht, dass dieselben Eingabeparameter, jedoch mit unterschiedlichen Werten der Parameter während der Operation der Entfernung aus der Warteschlange, die auf den ersten Warteschlangenmechanismus angewendet wird, und der Operation der Entfernung aus der Warteschlange berücksichtigt werden, die auf den zweiten Warteschlangenmechanismus angewendet wird, wobei ein erster Eingabeparameter nicht als von einem zweiten Eingabeparameter verschieden angesehen wird, wenn der erste Eingabeparameter gleich dem Wert des Werteteils eines ersten Attributwertpaars ist, und wobei der zweite Eingabeparameter gleich dem Wert des Werteteils eines zweiten Attributwertpaars ist, und wobei der Attributteil des ersten Attributwertpaars gleich dem Attributteil des zweiten Attributwertpaars ist;
vi) eine erste Abbildungsregel, die in der ersten Planungskonfigurations-Spezifikation enthalten ist, bildet direkt oder indirekt die erste Ressourcennutzungs-Anforderung auf eine andere Instanz desselben Warteschlangenmechanismus als die zweite Ressourcennutzungs-Anforderung ab, wobei das unterschiedliche Warteschlangenverhalten zwischen den beiden Instanzen derselben Warteschlangenmechanismen auf der Tatsache beruht, dass dieselben Eingabeparameter, jedoch mit unterschiedlichen Werten der Parameter während der Operation der Einreihung in die Warteschlange, die auf den ersten Warteschlangenmechanismus angewendet wird, und während der Operation der Einreihung in die Warteschlange, die auf den zweiten Warteschlangenmechanismus angewendet wird, und während der Operation der Entfernung aus der Warteschlange, die auf den ersten Warteschlangenmechanismus angewendet wird, und der Operation der Entfernung aus der Warteschlange berücksichtigt werden, die auf den zweiten Warteschlangenmechanismus angewendet wird, wobei ein erster Eingabeparameter nicht als von einem zweiten Eingabeparameter verschieden angesehen wird, wenn der erste Eingabeparameter gleich dem Wert des Werteteils eines ersten Attributwertpaars ist, und wobei der zweite Eingabeparameter gleich dem Wert des Werteteils eines zweiten Attributwertpaars ist, und wobei der Attributteil des ersten Attributwertpaars gleich dem Attributteil des zweiten Attributwertpaars ist.

8. Verfahren nach einem der vorhergehenden Ansprüche, wobei der Planungseinrichtung sowohl die erste Planungskonfigurations-Spezifikation als auch die zweite Planungskonfigurations-Spezifikation über eine API, Anwendungsprogrammierungs-Schnittstelle importiert.

9. Verfahren nach einem der vorhergehenden Ansprüche, wobei die API, Anwendungsprogrammierungs-Schnittstelle, es ermöglicht, einen Planungszählmechanismus mit einer Vielzahl von Attributwertpaaren zu erzeugen.

10. Verfahren nach einem der Ansprüche 7 bis 9, wobei das Attribut im ersten Attributwertpaar oder im zweiten Attributwertpaar eines der folgenden ist:
i. eine lokale Identität der Planungseinrichtung, die den Planungszählmechanismus (2, 231, 232, .. 239) aufweist;
ii. eine globale Identität der Planungseinrichtung, die den Planungszählmechanismus (2, 231, 232, .. 239) aufweist;
iii. eine lokale Identität des Planungszählmechanismus (2, 231, 232, .. 239);
iv. eine globale Identität des Planungszählmechanismus (2, 231, 232, .. 239);
v. eine Identität der Gültigkeitsnutzungsdauer;
vi. eine Boolesche Variable, die kennzeichnet, ob eine Offline-Abrechnung oder Online-Abrechnung mit dem Planungszählmechanismus verwendet wird;
vii. eine Identität einer belasteten Partei;
viii. eine Identität einer Abrechnungspartei, die die Nutzungsdatenaufzeichnungen zum Zweck der Abrechnung mit der belasteten Partei unter Verwendung des Offline-Abrechnungsverfahrens empfangen soll;
ix. eine Identität einer Abrechnungspartei, die Kontingente im Namen der belasteten Partei unter Verwendung des Online-Abrechnungsverfahrens bereitstellt;
x. eine Identität eines vordefinierten Prioritätsrangs, der mit dem Planungszählmechanismus (2, 231, 232, .. 239) verbunden ist, der den Warteschlangenmechanismus beeinflusst;
xi. einen Offline-Einheitsabrechnungswert, der in jeder Nutzungsdatenaufzeichnung zur Offline-Abrechnung enthalten sein soll;
xii. einen Online-Abrechnungswert, der die Menge der Kontingenteinheiten bestimmt, die pro verbrauchter Ressourcennutzungs-Einheit im Online-Abrechnungsverfahren entwertet werden sollen;
xiii. eine Identität, die sich auf einen vorgegebenen Ressourcennutzungs-Einheitstyp bezieht, wobei verbrauchte Ressourcennutzungs-Einheiten dieses Ressourcennutzungs-Einheitstyps durch den Planungszählmechanismus (2, 231, 232, .. 239) gezählt werden sollen, wenn sie während der Anforderungserfüllung verbraucht werden;
xiv. eine Boolesche Variable, die definiert, ob "verbraucht" dieselbe Bedeutung hat wie "zur Anforderungserfüllung zugewiesen" oder nicht (Zählung ohne Vorbehalt);
xv. eine Boolesche Variable, die definiert, ob "verbraucht" dieselbe Bedeutung hat wie "zur Anforderungserfüllung zugewiesen und Anforderung erfüllt" oder nicht (Zählung unter Vorbehalt und "Automatische Bestätigung")
xvi. eine Boolesche Variable, die die Programmierbarkeit der Krementierungsrichtung definiert;
xvii. eine Boolesche Variable, die die Krementierungsrichtung (Inkrementieren oder Dekrementieren) definiert;
xviii. eine ganzzahlige Variable, die die Größe des Zählmechanismus im binären Exponentialformat definiert (z. B. Wert 3 = 2 exp 3 = 8 bedeutet, dass der Zähler 8 Werte aufweist und von 0 bis 7 zählen kann);
xix. eine ganzzahlige Variable, die die Größe des Zählmechanismus im Integer16-Format definiert;
xx. eine ganzzahlige Variable, die die Größe des Zählmechanismus im Integer32-Format definiert;
xxi. eine ganzzahlige Variable, die die Größe des Zählmechanismus im Integer64-Format definiert;
xxii. eine ganzzahlige Variable, die die Größe des Zählmechanismus im Integer128-Format definiert;
xxiii. eine Boolesche Variable, die definiert, ob ein Überlauf-/Unterlaufschutzmodus durch Erstellen einer Nutzungsdatenaufzeichnung pro Überlauf-/Unterlaufereignis zutrifft;
xxiv. eine Boolesche Variable, die definiert, ob ein Überlauf-/Unterlaufschutzmodus durch die Verwendung eines Funktionsaufruf-Rückgabewerts "FALSE" zutrifft;
xxv. eine Identität, die auf einen vorkonfigurierten Warteschlangenmechanismus verweist, der auf der Planungseinrichtung vorkonfiguriert wurde;
xxvi. eine Identität eines vorbestimmten Warteschlangenmechanismus, der zur Laufzeit in der Planungseinrichtung basierend auf einer Vorlage konfiguriert wird, die definiert, wie ein solcher Warteschlangenmechanismus zur Laufzeit konfiguriert werden kann; und
xxvii. eine Identität eines Abbildungsalgorithmus des Abrechnungswerts auf die Planungspriorität, der bestimmt, wie der Abrechnungswert den von der Planungseinrichtung bestimmten Prioritätsrang beeinflusst, wobei z.B. ein höherer Abrechnungswert immer zu einem höheren Planungsgewicht und folglich zu einer höheren Wahrscheinlichkeit führt, eine Vorzugsbehandlung zu erhalten, oder ein höherer Abrechnungswert immer zu einem höheren Prioritätsrang im Warteschlangenmechanismus und folglich immer zu einer Vorzugsbehandlung führt.

11. Verfahren nach einem der vorhergehenden Ansprüche, wobei ein Zeiger auf eine gepufferte Anforderung parallel in einen oder mehrere Warteschlangenmechanismen eingereiht wird, und wobei eine Planungskonfigurations-Spezifikation für eine zukünftige Nutzungsdauer die Anzahl paralleler Warteschlangen bestimmt, in die eine ankommende Anforderung während dieser Nutzungsdauer eingereiht werden soll.

12. Verfahren nach einem der vorhergehenden Ansprüche, wobei die Planungseinrichtung die zeitabhängige Abrechnung mittels mehrerer Planungszählmechanismen (2, 231, 232, .. 239) unter Verwendung desselben Warteschlangenmechanismus unterstützt.

13. Verfahren nach einem der vorhergehenden Ansprüche, wobei eine Änderung der Nutzungsdauer nicht nur den Abrechnungswert (entweder den Online-Abrechnungswert oder den Offline-Abrechnungswert oder sowohl den Online-Abrechnungswert als auch den Offline-Abrechnungswert) einer Ressourcennutzungs-Einheit des ersten Ressourcennutzungs-Einheitstyps, sondern abhängig von der Rangfolge des Abrechnungswerts der Ressourcennutzungs-Einheit des ersten Ressourcennutzungs-Einheitstyps relativ zum Abrechnungswert einer Ressourcennutzungs-Einheit von anderen Ressourcennutzungs-Einheitentypen auch den Prioritätsrang gepufferter Anforderungen ändert, die auf die Anforderungserfüllung warten, wobei die Anforderungserfüllung die Zuweisung einer Ressourcennutzungs-Einheit des ersten Ressourcennutzungs-Einheitstyps erfordert, und wobei ein höherer Abrechnungswert zu einem höheren Prioritätsrang führt und ein höherer Prioritätsrang zu einer Vorzugsbehandlung während der Planung führt.

14. System zum Planen von Ressourcennutzungs-Anforderungen mit einer zugehörigen Ankunftszeit der Ressourcennutzungs-Anforderung, das eingerichtet ist, das Verfahren nach einem der Ansprüche 1 bis 13 auszuführen.

## Revendications

1. Procédé de planification de demandes d'utilisation de ressources avec un temps d'arrivée de demande d'utilisation de ressource associé au moyen d'un programmateur (1000), ledit procédé comprenant les étapes suivantes :
l'activation d'un mécanisme de changement de période d'utilisation (98) pour renouveler une structure cyclique (1000) de plusieurs partitions de programmation avec lesquelles le programmateur fonctionne actuellement, ledit mécanisme (98) étant associé à plusieurs fonctions de détection de rôle (11) renouvelables, dont chacune est comprise dans chacune des plusieurs partitions de programmation (1) ;
chaque partition de programmation comprenant au moins un premier et un deuxième mécanismes de compteur de planification (2, 231, 232, ... 239) pour le comptage d'unités d'utilisation de ressources pendant une période d'utilisation,
a) le comptage d'une première quantité d'unités d'utilisation de ressources consommées pour la satisfaction d'une première demande d'utilisation de ressources dans un premier mécanisme de compteur de planification (233) associé à une première partition de programmation (1), et
b1) le comptage d'une deuxième quantité d'unités d'utilisation de ressources consommées pour la satisfaction d'une deuxième demande d'utilisation de ressources également dans le premier mécanisme de compteur de planification, si aucun changement de période d'utilisation ne se produit entre un temps de début de satisfaction de la première demande d'utilisation de ressources et un temps de début de satisfaction de la deuxième demande d'utilisation de ressources, et
b2) un autre comptage de la deuxième quantité d'unités d'utilisation de ressources consommées pour la satisfaction de la deuxième demande d'utilisation de ressources dans un deuxième mécanisme de compteur de planification, si entre le temps de début de satisfaction de la première demande d'utilisation de ressources et le temps de début de satisfaction de la deuxième demande d'utilisation de ressources survient exactement un premier changement de période d'utilisation, indépendamment du temps auquel se produit ledit premier changement de période d'utilisation.

2. Procédé selon la revendication 1, où le mécanisme de changement de période d'utilisation (98) est mis en œuvre par changement de la valeur d'une seule variable
i) dans un seul cycle d'horloge, préférentiellement exécuté dans une mise en œuvre matérielle du mécanisme, ou
ii) dans une seule instruction comprise dans un code exécuté sur un ordinateur.

3. Procédé selon l'une des revendications précédentes, où une première demande d'utilisation de ressources consomme pour sa satisfaction une première quantité d'unités d'utilisation de ressources d'un premier type d'unités d'utilisation de ressources, et où le mappage du premier type d'unités d'utilisation de ressources avec un premier mécanisme de compteur de planification (233) utilisé pour le comptage de la quantité d'unités d'utilisation de ressources attribuées et consommées pour la satisfaction de la première demande d'utilisation de ressources a été défini dans une première spécification de configuration de planification avec validité pour une satisfaction de demande commençant lors d'une première période d'utilisation, et a été importé par le programmateur antérieurement au début de la première période d'utilisation.

4. Procédé selon l'une des revendications précédentes, où le programmateur continue la planification alors que la configuration de planification du programmateur est changée, passant d'une première configuration de planification définie dans une première spécification de configuration de planification à une deuxième configuration de planification définie dans une deuxième spécification de configuration de planification.

5. Procédé selon la revendication 3 ou la revendication 4, où la première spécification de configuration de planification détermine un premier mécanisme de mise en file d'attente à utiliser pour la planification pendant la première période d'utilisation, et où la deuxième spécification de configuration de planification détermine un deuxième mécanisme de mise en file d'attente à utiliser pour la planification pendant la deuxième période d'utilisation, et où un seul changement de période d'utilisation marque la fin de la première période d'utilisation et le début de la deuxième période d'utilisation.

6. Procédé selon l'une des revendications précédentes, où la satisfaction d'une deuxième demande d'utilisation de ressources commence antérieurement à la satisfaction de la première demande d'utilisation de ressources si et seulement si un changement de période d'utilisation se produit entre le début de la satisfaction de la première demande et le début de la satisfaction de la deuxième demande.

7. Procédé selon l'une des revendications précédentes, où la satisfaction de la deuxième demande d'utilisation de ressources commence antérieurement à la satisfaction de la première demande d'utilisation de ressources si et seulement si un changement de période d'utilisation se produit entre le début de la satisfaction de la première demande et le début de la satisfaction de la deuxième demande, et où la raison d'un traitement préférentiel de la deuxième demande par rapport à la première demande est l'une des suivantes :
i) une première règle de mappage comprise dans la première spécification de configuration de planification met en correspondance directe ou indirecte la première demande d'utilisation de ressources avec un mécanisme de mise en file d'attente différent de la deuxième demande d'utilisation de ressources, la différence entre les mécanismes de mise en file d'attente étant basée sur le fait que différents paramètres d'entrée sont pris en considération pendant l'opération de mise en file d'attente appliquée au premier mécanisme de mise en file d'attente et l'opération de mise en file d'attente appliquée au deuxième mécanisme de mise en file d'attente, un premier paramètre d'entrée n'étant pas considéré comme différent d'un deuxième paramètre d'entrée si le premier paramètre d'entrée est égal à la valeur de la partie de valeur d'une première paire de valeurs d'attribut, et le deuxième paramètre d'entrée étant égal à la valeur de la partie de valeur d'une deuxième paire de valeurs d'attribut, et la partie d'attribut de la première paire de valeurs d'attribut étant égale à la partie d'attribut de la deuxième paire de valeurs d'attribut ;
ii) une première règle de mappage comprise dans la première spécification de configuration de planification met en correspondance directe ou indirecte la première demande d'utilisation de ressources avec un mécanisme de mise en file d'attente différent de la deuxième demande d'utilisation de ressources, la différence entre les mécanismes de mise en file d'attente étant basée sur le fait que différents paramètres d'entrée sont pris en considération pendant l'opération de retrait de file d'attente appliquée au premier mécanisme de mise en file d'attente et l'opération de retrait de file d'attente appliquée au deuxième mécanisme de mise en file d'attente, un premier paramètre d'entrée n'étant pas considéré comme différent d'un deuxième paramètre d'entrée si le premier paramètre d'entrée est égal à la valeur de la partie de valeur d'une première paire de valeurs d'attribut, et le deuxième paramètre d'entrée étant égal à la valeur de la partie de valeur d'une deuxième paire de valeurs d'attribut, et la partie d'attribut de la première paire de valeurs d'attribut étant égale à la partie d'attribut de la deuxième paire de valeurs d'attribut ;
iii) une première règle de mappage comprise dans la première spécification de configuration de planification met en correspondance directe ou indirecte la première demande d'utilisation de ressources avec un mécanisme de mise en file d'attente différent de la deuxième demande d'utilisation de ressources, la différence entre les mécanismes de mise en file d'attente étant basée sur le fait que différents paramètres d'entrée sont pris en considération pendant l'opération de mise en file d'attente appliquée au premier mécanisme de mise en file d'attente et pendant l'opération de mise en file d'attente appliquée au deuxième mécanisme de mise en file d'attente et pendant l'opération de retrait de file d'attente appliquée au premier mécanisme de mise en file d'attente et l'opération de retrait de file d'attente appliquée au deuxième mécanisme de mise en file d'attente,
un premier paramètre d'entrée n'étant pas considéré comme différent d'un deuxième paramètre d'entrée si le premier paramètre d'entrée est égal à la valeur de la partie de valeur d'une première paire de valeurs d'attribut, et le deuxième paramètre d'entrée étant égal à la valeur de la partie de valeur d'une deuxième paire de valeurs d'attribut, et la partie d'attribut de la première paire de valeurs d'attribut étant égale à la partie d'attribut de la deuxième paire de valeurs d'attribut ;
iv) une première règle de mappage comprise dans la première spécification de configuration de planification met en correspondance directe ou indirecte la première demande d'utilisation de ressources avec une instance du même mécanisme de mise en file d'attente différente de la deuxième demande d'utilisation de ressources, le comportement de mise en file d'attente différent entre les deux instances des mêmes mécanismes de mise en file d'attente étant basé sur le fait que les mêmes paramètres d'entrée, mais avec des valeurs de paramètres différentes, sont pris en considération pendant l'opération de mise en file d'attente appliquée au premier mécanisme de mise en file d'attente et l'opération de mise en file d'attente appliquée au deuxième mécanisme de mise en file d'attente, un premier paramètre d'entrée n'étant pas considéré comme différent d'un deuxième paramètre d'entrée si le premier paramètre d'entrée est égal à la valeur de la partie de valeur d'une première paire de valeurs d'attribut, et le deuxième paramètre d'entrée étant égal à la valeur de la partie de valeur d'une deuxième paire de valeurs d'attribut, et la partie d'attribut de la première paire de valeurs d'attribut étant égale à la partie d'attribut de la deuxième paire de valeurs d'attribut ;
v) une première règle de mappage comprise dans la première spécification de configuration de planification met en correspondance directe ou indirecte la première demande d'utilisation de ressources avec une instance du même mécanisme de mise en file d'attente différente de la deuxième demande d'utilisation de ressources, le comportement de mise en file d'attente différent entre les deux instances des mêmes mécanismes de mise en file d'attente étant basé sur le fait que les mêmes paramètres d'entrée, mais avec des valeurs de paramètres différentes, sont pris en considération pendant l'opération de retrait de file d'attente appliquée au premier mécanisme de mise en file d'attente et l'opération de retrait de file d'attente appliquée au deuxième mécanisme de mise en file d'attente, un premier paramètre d'entrée n'étant pas considéré comme différent d'un deuxième paramètre d'entrée si le premier paramètre d'entrée est égal à la valeur de la partie de valeur d'une première paire de valeurs d'attribut, et le deuxième paramètre d'entrée étant égal à la valeur de la partie de valeur d'une deuxième paire de valeurs d'attribut, et la partie d'attribut de la première paire de valeurs d'attribut étant égale à la partie d'attribut de la deuxième paire de valeurs d'attribut ;
vi) une première règle de mappage comprise dans la première spécification de configuration de planification met en correspondance directe ou indirecte la première demande d'utilisation de ressources avec une instance du même mécanisme de mise en file d'attente différente de la deuxième demande d'utilisation de ressources, le comportement de mise en file d'attente différent entre les deux instances des mêmes mécanismes de mise en file d'attente étant basé sur le fait que les mêmes paramètres d'entrée, mais avec des valeurs de paramètres différentes, sont pris en considération pendant l'opération de mise en file d'attente appliquée au premier mécanisme de mise en file d'attente et pendant l'opération de mise en file d'attente appliquée au deuxième mécanisme de mise en file d'attente et pendant l'opération de retrait de file d'attente appliquée au premier mécanisme de mise en file d'attente et l'opération de retrait de file d'attente appliquée au deuxième mécanisme de mise en file d'attente, un premier paramètre d'entrée n'étant pas considéré comme différent d'un deuxième paramètre d'entrée si le premier paramètre d'entrée est égal à la valeur de la partie de valeur d'une première paire de valeurs d'attribut, et le deuxième paramètre d'entrée étant égal à la valeur de la partie de valeur d'une deuxième paire de valeurs d'attribut, et la partie d'attribut de la première paire de valeurs d'attribut étant égale à la partie d'attribut de la deuxième paire de valeurs d'attribut.

8. Procédé selon l'une des revendications précédentes, où le programmateur importe la première spécification de configuration de planification et la deuxième spécification de configuration de planification via une API, interface de programmation d'application.

9. Procédé selon l'une des revendications précédentes, où l'API, interface de programmation d'application, permet de créer un mécanisme de compteur de planification avec une pluralité de paires de valeurs d'attribut.

10. Procédé selon les revendications 7 à 9, où l'attribut dans la première paire de valeurs d'attribut ou dans la deuxième paire de valeurs d'attribut est l'un des suivants :
i. une identité locale du programmateur comprenant le mécanisme de compteur de planification (2, 231, 232, ... 239) ;
ii. une identité globale du programmateur comprenant le mécanisme de compteur de planification (2, 231, 232, ... 239) ;
iii. une identité locale du mécanisme de compteur de planification (2, 231, 232, ... 239) ;
iv. une identité globale du mécanisme de compteur de planification (2, 231, 232, ... 239) ;
v. une identité de la période d'utilisation de validité ;
vi. une variable booléenne identifiant si une facturation hors ligne ou une facturation en ligne est utilisée avec le mécanisme de compteur de planification ;
vii. une identité d'une partie facturée ;
viii. une identité d'une partie facturante pour recevoir des enregistrements de données d'utilisation afin de facturer la partie facturée au moyen d'un procédé de facturation hors ligne ;
ix. une identité d'une partie facturante délivrant des quotas au nom de la partie facturée au moyen d'un procédé de facturation en ligne ;
x. une identité d'un rang de priorité prédéfini associé au mécanisme de compteur de planification (2, 231, 232, ... 239), influençant le mécanisme de mise en file d'attente ;
xi. une valeur unitaire de facturation hors ligne à inclure dans tout enregistrement de données d'utilisation pour facturation hors ligne ;
xii. une valeur de facturation en ligne déterminant la quantité de parts de quota à dévaluer par unité d'utilisation de ressources consommée dans le procédé de facturation en ligne ;
xiii. une identité référençant un type d'unités d'utilisation de ressources défini, les unités d'utilisation de ressources consommées dudit type d'unités d'utilisation de ressources pouvant être comptées par le mécanisme de compteur de planification (2, 231, 232, ... 239) lorsqu'elles sont consommées pendant une satisfaction de demande ;
xiv. une variable booléenne définissant si "consommé" a la même signification que "attribué pour une satisfaction de demande" ou non (compte sans réservation) ;
xv. une variable booléenne définissant si " consommé" a la même signification que "attribué pour une satisfaction de demande et demande satisfaite" ou non (compte recourant à réservation et "auto-confirmation)"
xvi. une variable booléenne définissant la programmabilité du sens de crémentation ;
xvii. une variable booléenne définissant le sens de crémentation (incrémentation ou dé-crémentation) ;
xviii. une variable entière définissant la taille du mécanisme de comptage en format d'exposant binaire (par exemple, valeur 3 = 2 exp 3 = 8 signifie que le compteur a 8 valeurs et peut compter de 0 à 7) ;
xix. une variable entière définissant la taille du mécanisme de comptage en format entier 16 ;
xx. une variable entière définissant la taille du mécanisme de comptage en format entier 32 ;
xxi. une variable entière définissant la taille du mécanisme de comptage en format entier 64 ;
xxii. une variable entière définissant la taille du mécanisme de comptage en format entier 128 ;
xxiii. une variable booléenne définissant si un mode de protection de dépassement/sous-dépassement s'applique par création d'un enregistrement de données d'utilisation par événement de dépassement/sous-dépassement ;
xxiv. une variable booléenne définissant si un mode de protection de dépassement/sous-dépassement s'applique en recourant à une valeur de retour d'appel de fonction "FAUX" ;
xxv. une identité référençant un mécanisme de mise en file d'attente préconfiguré sur le programmateur ;
xxvi. une identité d'un mécanisme de mise en file d'attente prédéfini configuré en cours d'exécution sur le programmateur sur la base d'un modèle définissant comment un tel mécanisme de mise en file d'attente peut être configuré en cours d'exécution ; et
xxvii. une identité d'un algorithme de mappage entre valeur de facturation et priorité de planification, déterminant comment la valeur de facturation influence le rang de priorité déterminé par le programmateur, par exemple une valeur de facturation supérieure résultant toujours en une pondération de planification supérieure et donc en une probabilité supérieure de réception d'un traitement préférentiel, ou une valeur de facturation supérieure résultant toujours en un rang de priorité supérieur dans le mécanisme de mise en file d'attente et résultant donc toujours en un traitement préférentiel.

11. Procédé selon l'une des revendications précédentes, où un pointeur vers une demande mise en tampon est mis en file d'attente en parallèle dans un ou plusieurs mécanismes de mise en file d'attente, et où une spécification de configuration de planification détermine pour une période future d'utilisation le nombre de files d'attente parallèles où une demande entrante peut être mise en attente pendant ladite période d'utilisation.

12. Procédé selon l'une des revendications précédentes, où le programmateur assiste un comptage selon l'heure de la journée au moyen de plusieurs mécanismes de compteur de planification (2, 231, 232, ... 239) recourant au même mécanisme de mise en file d'attente.

13. Procédé selon l'une des revendications précédentes, où un changement de période d'utilisation change non seulement la valeur de facturation (soit la valeur de facturation en ligne, soit la valeur de facturation hors ligne, ou la valeur de facturation en ligne ainsi que la valeur de facturation hors ligne) d'une unité d'utilisation de ressources du premier type d'unités d'utilisation de ressources, mais aussi, en fonction du rang de la valeur de facturation de l'unité d'utilisation de ressources du premier type d'unités d'utilisation de ressources par rapport à la valeur de facturation d'une unité d'utilisation de ressources d'autres types d'unités d'utilisation de ressources, le rang de priorité de demande mise en tampons attendant pour une satisfaction de demande, la satisfaction de demande exigeant l'attribution d'une unité d'utilisation de ressources du premier type d'unités d'utilisation de ressources, et une valeur de facturation supérieure résultant en un rang de priorité supérieur, et un rang de priorité supérieur résultant en un traitement préférentiel pendant la planification.

14. Système de planification de demandes d'utilisation de ressources avec un temps d'arrivée de demande d'utilisation de ressources associé, prévu pour l'exécution du procédé selon l'une des revendications 1 à 13.
